(19) Europäisches Patentamt
European Patent Office
Office européen des brevets

(11) EP 0 909 282 B1

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(21) Anmeldenummer: **97930480.5**

(22) Anmeldetag: **02.07.1997**

(51) Int Cl.⁷: **C08F 10/02**

(86) Internationale Anmeldenummer:
**PCT/EP97/03460**

(87) Internationale Veröffentlichungsnummer:
**WO 98/01484 (15.01.1998 Gazette 1998/02)**

# (54) VERFAHREN ZUR HERSTELLUNG VON CYCLOOLEFIN-(CO)POLYMEREN FÜR TECHNISCHE ANWENDUNGEN

METHOD FOR PRODUCING CYCLOOLEFIN (CO)POLYMERS FOR TECHNICAL APPLICATIONS

PROCEDE POUR FABRIQUER DES (CO)POLYMERES DE CYCLO-OLEFINES DESTINES A DES APPLICATIONS TECHNIQUES

(84) Benannte Vertragsstaaten:
**AT BE CH DE ES FI FR GB IT LI NL**

(30) Priorität: **05.07.1996 DE 19627064**
**05.04.1997 DE 19714058**

(43) Veröffentlichungstag der Anmeldung:
**21.04.1999 Patentblatt 1999/16**

(73) Patentinhaber: **BAYER AG**
**51368 Leverkusen (DE)**

(72) Erfinder:
- **OSTOJA STARZEWSKI, Karl-Heinz, Aleksander**
  **D-61118 Bad Vilbel (DE)**
- **KELLY, Warren, Mark**
  **D-51373 Leverkusen (DE)**
- **STUMPF, Andreas**
  **D-51375 Leverkusen (DE)**

(56) Entgegenhaltungen:
**EP-A- 0 638 593** **DE-A- 4 420 456**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung bezieht sich auf den Einsatz von π-Systemen oder von Metallocen-Verbindungen, in denen ein Übergangsmetall mit zwei π-Systemen und zwar insbesondere mit aromatischen π-Systemen, wie anionischen Cyclopentadienyl-Liganden (Carbanionen), komplexiert ist und die beiden Systeme durch mindestens eine Brücke aus einem Donor und einem Akzeptor reversibel miteinander verbunden sind, als metallorganische Katalysatoren in einem Verfahren zur Herstellung von Cycloolefin-(Co)Polymeren für technische Anwendungen mit Ausnahme der Anwendung für optische Datenspeicher durch (Co)Polymerisation von cyclischen Olefinen, gegebenenfalls in Gegenwart von weiteren Monomeren ausgewählt aus der Gruppe acyclische Mono- oder Diolefine, Alkine und Kohlenmonoxide, wobei das oder die cyclischen Olefine einen molaren Anteil von 1-100% der Gesamtmolzahl aller eingesetzter Co-Monomere darstellt. Die zwischen dem Donoratom und dem Akzeptoratom entstehende koordinative Bindung erzeugt in der Donorgruppe eine positive (Teil)Ladung und in der Akzeptorgruppe eine negative (Teil)Ladung:

$$\overset{\Delta+}{[\text{Donorgruppe}} \rightarrow \overset{\Delta-}{\text{Akzeptorgruppe}]}$$

Cycloolefin-(Co)Polymere zeichnen sich durch viele vorteilhafte Eigenschaften aus, so durch eine hohe Transparenz zum Einsatz für optische Anwendungen. Sie haben eine gute thermische Beständigkeit, Alterungsbeständigkeit, chemische Beständigkeit, gute Gasbarriereeigenschaften, Lösungsmittelbeständigkeit, geringe Wasseraufnahme, hohe Kratzfestigkeit, geringe Lichtdoppelbrechung und hohe Erweichungstemperaturen (Glasübergangstemperaturen $T_g$). Solche (Co)Polymere sind daher u.a. geeignet für: Folien in unverstreckter oder monoaxial oder biaxial verstreckter Form für Verpackungen und als Deckschichten für Polarisationsfolien und Flüssigkristalldisplays, Lackbestandteile, etwa für die Automobilindustrie zur Kratzfestausrüstung von Oberflächen; Fasern, etwa für Lichtwellenleiter; optische Linsen und Prismen; Schläuche, Rohre, Stangen und Trägerplatten; Deckscheiben für Solarzellen; Kondensator-Dielektrikum. Solche technischen Artikel werden durch Spritzguß oder Extrusion hergestellt. Die so eingesetzten (Co) Polymere sind amorph oder nur teilkristallin. Die (Co)Polymere können allein oder in Abmischung mit anderen Polymeren angewandt werden.

Metallocene und ihr Einsatz als Katalysatoren bei der Polymerisation von Olefinen sind seit langem bekannt (EP-A 129 368 und die darin zitierte Literatur). Aus EP-A'368 ist weiterhin bekannt, daß Metallocene in Kombination mit Aluminiumalkyl/Wasser als Cokatalysatoren wirksame Systeme für die Polymerisation von Ethylen darstellen (so wird beispielsweise aus 1 mol Trimethylaluminium und 1 mol Wasser Methylaluminoxan = MAO gebildet. Auch andere stöchiometrische Verhältnisse wurden schon mit Erfolg angewandt (WO 94/20506)). Es sind auch bereits Metallocene bekannt, deren Cyclopentadienylgerüste miteinander durch eine Brücke kovalent verknüpft sind. Als Beispiel für die zahlreichen Patente und Anmeldungen auf diesem Gebiet sei EP-A 704 461 erwähnt, worin die darin genannte Verknüpfungsgruppe eine (substituierte) Methylengruppe oder Ethylengruppe, eine Silylengruppe, eine substituierte Silylengruppe, eine substituierte Germylengruppe oder eine substituierte Phosphingruppe darstellt. Auch in EP '461 sind die verbrückten Metallocene als Polymerisationskatalysatoren für Olefine vorgesehen. Trotz der zahlreichen Patente und Anmeldungen auf diesem Gebiet besteht weiterhin der Wunsch nach verbesserten Katalysatoren, die sich durch hohe Aktivität auszeichnen, so daß die Menge des im Polymer verbleibenden Katalysators gering angesetzt werden kann. und die sich gleichermaßen für die (Co)Polymerisation von Cycloolefinen eignen, zu deren Herstellung ebenfalls bereits Metallocene eingesetzt wurden (US 5 567 777; EP 610 852 = US 5 602 219; EP 690 078).

Es wurde nun gefunden, daß sich besonders vorteilhafte Katalysatoren aus verbrückten π-Komplex-Verbindungen und insbesondere von Metallocen-Verbindungen herstellen lassen, bei denen die Verbrückung der beiden π-Systeme durch eine, zwei oder drei reversible Donor-Akzeptor-Bindung hergestellt wird, in denen jeweils zwischen dem Donoratom und dem Akzeptoratom eine koordinative oder sogenannte dative Bindung entsteht, der zumindest formal eine ionische Bindung überlagert ist und bei denen eines der Donor- bzw. Akzeptoratome Teil des jeweils zugehörigen π-Systems sein kann. Die Reversibilität der Donor-Akzeptor-Bindung läßt neben dem durch den Pfeil zwischen D und A gekennzeichneten verbrückten Zustand auch den unverbrückten Zustand zu. Erfindungsgemäße einzusetzende π-Systeme, z.B. Metallocene lassen sich daher durch einen Doppelpfeil und die Formelteile (Ia) und (Ib) bzw. (XIIIa) und (XIIIb) zur Umfassung beider Zustände darstellen.

Die Erfindung betrifft demnach ein Verfahren zur Herstellung von Cycloolefin(Co)Polymeren für technische Anwendungen mit Ausnahme der Anwendung für optische Datenspeicher durch (Co)Polymerisation von cyclischen Olefinen, gegebenenfalls in Gegenwart von weiteren Monomeren ausgewählt aus der Gruppe acyclische Mono- oder Diolefine, Alkine und Kohlenmonoxide, wobei das oder die cyclischen Olefine einen molaren Anteil von 1-100% der Gesamtmolzahl aller eingesetzter Co-Monomere darstellt, in der Gas-, Masse-, Lösungs- oder Slurryphase bei -78 bis +200°C und 0,5-70 bar in Gegenwart von metallorganischen Katalysatoren, die durch Cokatalysatoren aktiviert werden

können, das dadurch gekennzeichnet ist, daß als metallorganische Katalysatoren Metallocen-Verbindungen der Formel

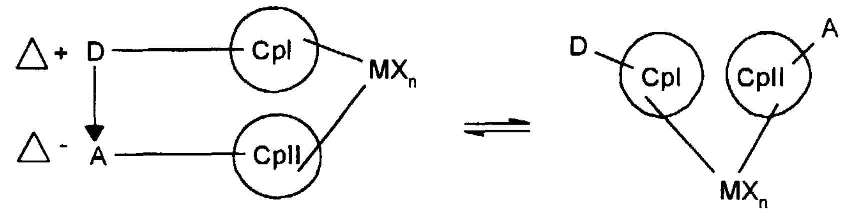

(Ia) (Ib) (I),

in der

CpI und CpII zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem $C_1$-$C_{20}$-Alkyl, das 1-fach bis vollständig durch Halogen, 1-3fach durch Phenyl sowie 1-3fach durch Vinyl substituiert sein kann, $C_6$-$C_{12}$-Aryl, Halogenaryl mit 6 bis 12C-Atomen, Organometall-Substituenten, wie Silyl, Trimethylsilyl, Ferrocenyl sowie 1- oder 2-fach durch D und A substituiert sein können,

D ein Donoratom bedeutet, das zusätzlich Substituenten tragen kann und das in seinem jeweiligen Bindungszustand mindestens über ein freies Elektronenpaar verfügt,

A ein Akzeptoratom bedeutet, das zusätzlich Substituenten tragen kann und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen,

M für ein Übergangsmetall der III., IV., V. oder VI. Nebengruppe des Periodensystems der Elemente (Mendelejew) einschließlich der Lanthaniden und Actiniden steht,

X ein Anionäquivalent bedeutet und

n in Abhängigkeit von der Ladung von M die Zahl Null, Eins, Zwei, Drei oder Vier bedeutet,

oder π-Komplex-Verbindungen und insbesondere Metallocen-Verbindungen der Formel

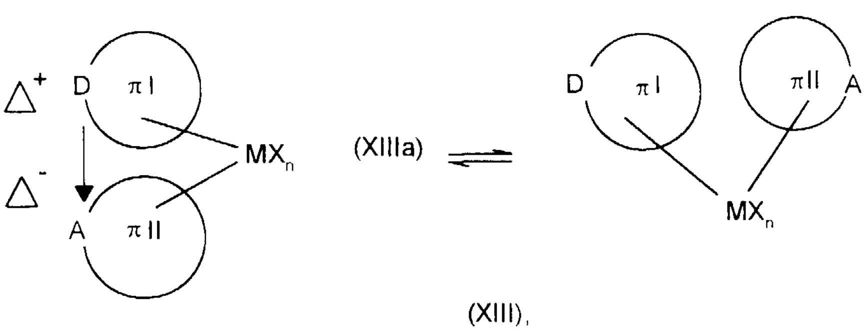

(XIIIa) (XIIIb)

(XIII),

in der

πI und πII voneinander verschiedene geladene oder elektrisch neutrale π-Systeme darstellen, die ein- oder zweifach

mit ungesättigten oder gesättigten Fünf- oder Sechsringen kondensiert sein können,

D ein Donoratom bedeutet, das Substituent von πI oder Teil des π-Systems von πI ist und das in seinem jeweiligen Bindungszustand mindestens über ein freies Elektronenpaar verfügt,

A ein Akzeptoratom bedeutet, das Substituent von πII oder Teil des π-Systems von πII ist und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,

wobei D und A ihrerseits Substituenten tragen können,

wobei jedes π-System bzw. jedes ankondensierte Ringsystem eines oder mehrere D oder A oder D und A enthalten kann und

wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem $C_1$-$C_{20}$-Alkyl, das 1-fach bis vollständig durch Halogen, 1-3fach durch Phenyl sowie 1-3fach durch Vinyl substituiert sein kann, $C_6$-$C_{12}$-Aryl, Halogenaryl mit 6 bis 12 C-Atomen, Organometall-Substituenten, wie Silyl, Trimethylsilyl, Ferrocenyl sowie ein- oder zweifach durch D und A substituiert sein können, so daß die reversible koordinative D→A-Bindung (i) zwischen D und A, die beide Teile des jeweiligen π-Systems oder des ankondensierten Ringsystems sind, oder (ii) von denen D oder A Teil des π-Systems oder des ankondensierten Ringsystems und das jeweils andere Substituent des nicht kondensierten π-Systems oder des ankondensierten Ringsystems ist (sind), ausgebildet wird,

M und X die obige Bedeutung haben und

n in Abhängigkeit von den Ladungen von M sowie denen von π-I und π-II die Zahl Null, Eins, Zwei, Drei oder Vier bedeutet,

eingesetzt werden.

Erfindungsgemäße π-Systeme sind bevorzugt substituiertes und nicht substituiertes Ethylen, Allyl, Pentadienyl, Benzyl, Butadien, Benzol, das Cyclopentadienylanion und die sich durch Ersatz mindestens eines C-Atoms durch ein Heteroatom ergebenden Spezies Unter den genannten Spezies sind die cyclischen bevorzugt. Die Art der Koordination solcher Liganden (π-Systeme) zum Metall kann vom σ-Typ oder vom π-Typ sein.

Solche erfindungsgemäß einzusetzenden Metallocen-Verbindungen der Formel (I) können hergestellt werden, indem man entweder je eine Verbindung der Formeln (II) und (III)

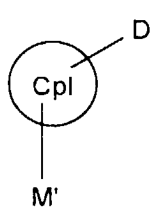 (II), 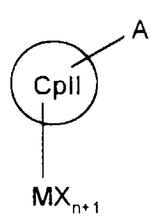 (III)

oder je eine Verbindung der Formeln (IV) und (V)

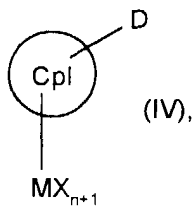 (IV), 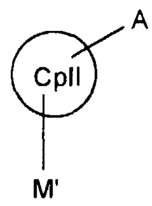 (V),

oder je eine Verbindung der Formeln (VI) und (VII)

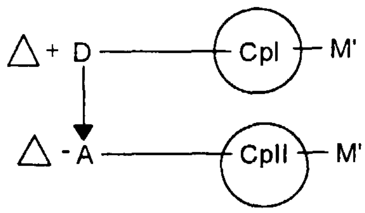 (VI) , $MX_{n+2}$ (VII)

unter Austritt von M'X in Gegenwart eines aprotischen Lösungsmittels oder je eine Verbindung der Formeln (VIII) und (III)

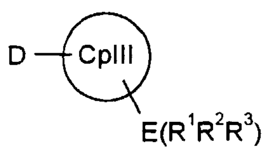 (VIII), 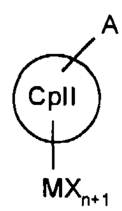 (III)

oder je eine Verbindung der Formeln (IV) und (IX)

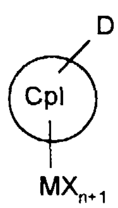 (IV), 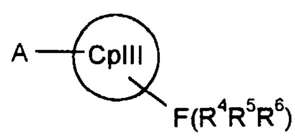 (IX)

oder je eine Verbindung der Formeln (X) und (VII)

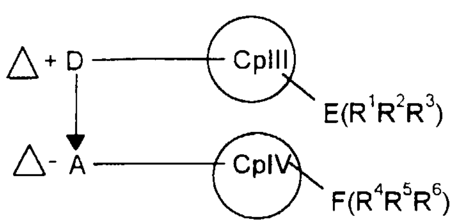 (X), $MX_{n+2}$ (VII)

unter Austritt von $E(R^1R^2R^3)X$ und $F(R^4R^5R^6)X$ in Abwesenheit oder in Gegenwart eines aprotischen Lösungsmittels miteinander umsetzt, wobei

CpI, CpII, D, A, M, X und n die obige Bedeutung haben,

CpIII und CpIV zwei gleiche oder verschiedene ungeladene Molekülteile mit einer Cyclopentadien-haltigen Struktur darstellen, ansonsten aber CpI und CpII gleichen,

M' ein Kationäquivalent eines (Erd)Alkalimetalls oder Tl bedeutet,

E und F unabhängig voneinander eines der Elemente Si, Ge oder Sn bedeuten und

$R^1$, $R^2$, $R^3$, $R^4$, $R^5$ und $R^6$ unabhängig voneinander für geradkettiges oder verzweigtes $C_1$-$C_{20}$-Alkyi, $C_6$-$C_{12}$-Aryl sowie $C_1$-$C_6$-Alkyl-$C_6$-$C_{12}$-Aryl und $C_6$-$C_{12}$-Aryl-$C_1$-$C_6$-Alkyl, Vinyl, Alkyl oder Halogen stehen,

wobei weiterhin in den Formeln (VIII), (IX), (X) anstelle von $E(R^1R^2R^3)$ und $F(R^4R^5R^6)$ Wasserstoff stehen kann und in diesem Falle X auch für ein Amidanion vom Typ $R_2N^\theta$ oder ein Carbanion vom Typ $R_3C^\theta$ oder ein Alkoholatanion vom Typ $RO^\theta$ stehen kann, und wobei es weiterhin möglich ist, Verbindungen der Formeln (II) oder (VIII) in Gegenwart von Verbindungen der Formeln (V) oder (IX) direkt mit einer Übergangsmetall-Verbindung der Formel (VII) umzusetzen. Zwei Anionen X können ferner, gegebenenfalls unter Zwischenschaltung einer ein- oder mehratomigen Brücke, zu einem Dianion verbunden sind.

Bei der Reaktion von (VIII) mit (III) bzw. (IV) mit (IX) bzw. (X) mit (VII) bildet sich bei der zuletzt genannten Variante die Struktur (I) unter Austritt von Amin $R_2NH$ bzw. $R_2NE(R^1R^2R^3)$ bzw. $R_2NF(R^4R^5R^6)$ oder einer Kohlenwasserstoffverbindung der Formel $R_3CH$ bzw. $R_3CE(R^1R^2R^3)$ bzw. $R_3CF(R^4R^5R^6)$ oder eines Ethers $ROE(R^1R^2R^3)$ bzw. $ROF(R^4R^5R^6)$, worin die organischen Reste R gleich oder verschieden und unabhängig voneinander $C_1$-$C_{20}$-Alkyl, $C_6$-$C_{12}$-Aryl, substituiertes oder unsubstituiertes Allyl, Benzyl oder Wasserstoff sind. Beispiele für austretendes Amin oder Kohlenwasserstoff, Ether, Silan, Stannan oder German sind etwa Dimethylamin, Diethylamin, Di-(n-propyl)-amin, Di-(isopropyl)-amin, Di-(tertiärbutyl)-amin, Tertiärbutylamin, Cyclohexylamin, Anilin, Methyl-phenyl-amin, Di-(allyl)-amin bzw. Methan, Toluol, Trimethylsilylamin, Trimethylsilylether, Tetramethylsilan und ähnliches.

Es ist auch möglich, Verbindungen der Formeln (II) oder (VIII) in Gegenwart von Verbindungen der Formeln (V) oder (IX) direkt mit einer Übergangsmetall-Verbindung der Formel (VII) umzusetzen.

π-Komplex-Verbindungen der Formel (XIII), in denen die π-Systeme cyclisch und aromatisch sind (Metallocene), können analog hergestellt werden, wobei sinngemäß die folgenden Verbindungen eingesetzt werden:

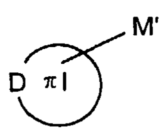 (IIa)

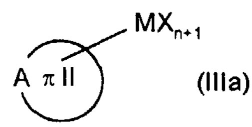 (IIIa) ,

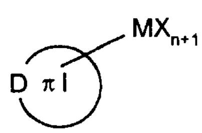 (IVa),

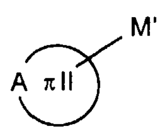 (Va),

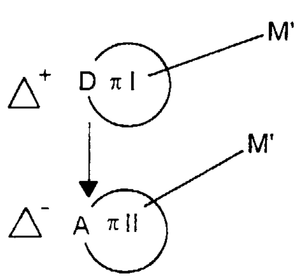 (VIa),

$MX_{n+2}$ (VII) ,

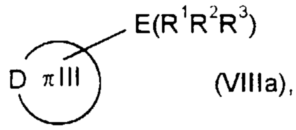 (VIIIa), 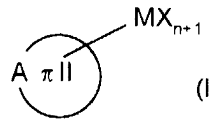 (IIIa),

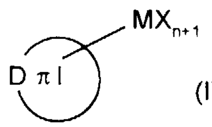 (IVa), 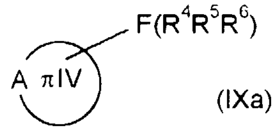 (IXa)

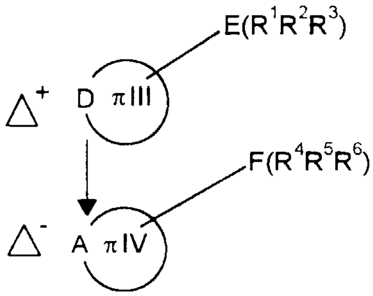 (Xa), $MX_{n+2}$ (VII) .

Die Herstellung offenkettiger π-Komplex-Verbindungen erfolgt nach den fachmännisch bekannten Verfahren unter Einbau von Donor- und Akzeptorgruppen.

Erfindungsgemäß wird in der Gas-, Masse-, Lösungs- oder Slurry-Phase bei -78 bis +200°C, bevorzugt -50 bis +150°C, besonders bevorzugt -30 bis +100°C, und 0,5 bis 70 bar, bevorzugt 1 bis 50 bar, besonders bevorzugt 1 bis 20 bar, und in Gegenwart oder Abwesenheit von gesättigten oder aromatischen Kohlenwasserstoffen oder von gesättigten oder aromatischen Halogenkohlenwasserstoffen und in Gegenwart oder Abwesenheit von Wasserstoff gearbeitet, wobei die Metallocen-Verbindungen bzw die π-Komplex-Verbindungen als Katalysatoren in einer Menge von $10^1$ bis $10^{12}$ mol aller Monomerer pro mol Metallocen bzw π-Komplex-Verbindungen eingesetzt werden und wobei weiterhin in Gegenwart von Lewis-Säuren, Brönstedt-Säuren oder Pearson-Säuren oder zusätzlich in Gegenwart von Lewis-Basen gearbeitet werden kann.

Solche Lewis-Säuren sind beispielsweise Borane oder Alane, wie Aluminiumalkyle, Aluminiumhalogenide, Aluminiumalkoholate, Bororganyle, Borhalogenide, Borsäureester oder Bor- bzw. Aluminium-Verbindungen, die sowohl Halogenid- als auch Alkyl- bzw. Aryl- oder Alkoholat-Substituenten enthalten, sowie Mischungen davon oder das Triphenylmethyl-Kation. Besonders bevorzugt sind Aluminoxane oder Mischungen von Aluminium-haltigen Lewis-Säuren mit Wasser. Alle Säuren wirken nach heutigen Erkenntnissen als ionisierende Agentien, die ein Metalloceniumkation ausbilden, das durch ein sperriges, schlecht koordinierendes Anion ladungskompensiert wird.

Erfindungsgemäß können weiterhin die Reaktionsprodukte solcher ionisierender Agentien mit Metallocen-Verbindungen der Formel (I) bzw. (XIII) eingesetzt werden. Sie lassen sich durch die Formeln (XIa) bis. (XId) beschreiben

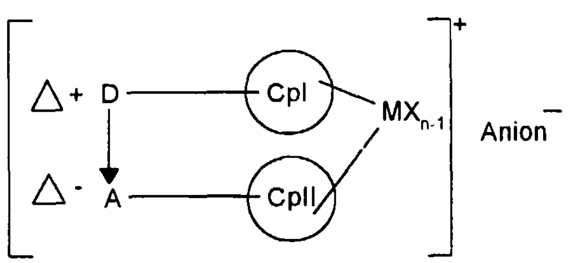 (XIa)

oder

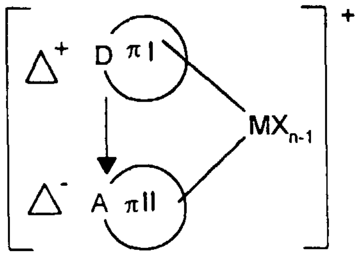

Anion$^-$ (XIb)

bzw.

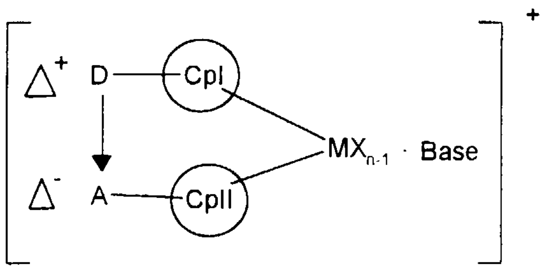

Anion (XIc)

oder

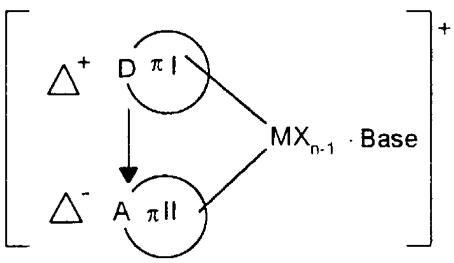

Anion$^-$ (XId),

in denen
Anion für das gesamte sperrige, schlecht koordinierende Anion und Base für eine Lewis-Base stehen.
Die erfindungsgemäß einsetzbaren Metallocen-Verbindungen (I) bzw. (XIII) können sowohl in monomerer, dimerer als auch oligomerer Form vorliegen.

Beispiele für solche schlecht koordinierenden Anionen sind z.B.

$$B(C_6H_5)_4^{\ominus}, B(C_6F_5)_4^{\ominus}, B(CH_3)(C_6F_5)_3^{\ominus},$$

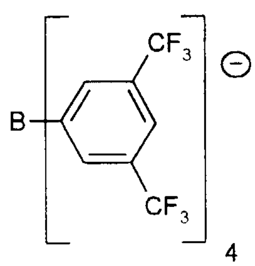

oder Sulfonate, wie Tosylat oder Triflat, Tetrafluorborate, Hexafluorphosphate oder -antimonate, Perchlorate, sowie

voluminöse Cluster-Molekülanionen vom Typ der Carborane, beispielsweise $C_2B_9H_{12}^{\theta}$ oder $CB_{11}H_{12}^{\theta}$. Beim Vorliegen solcher Anionen können Metallocen-Verbindungen auch bei Abwesenheit von Aluminoxan als hochwirksame Polymerisationskatalystoren wirken. Das ist vor allem dann der Fall, wenn ein X-Ligand eine Alkylgruppe, Allyl oder Benzyl darstellt. Es kann aber auch vorteilhaft sein, solche Metallocen-Komplexe mit voluminösen Anionen in Kombination mit Aluminiumalkylen, wie $(CH_3)_3Al$, $C_2H_5)_3Al$, (n-/i-Propyl)$_3$Al, (n-/t-Butyl)$_3$Al, (i-Butyl)$_3$Al, die isomeren Pentyl-, Hexyl- oder Octyl-Aluminiumalkyle, oder Lithiumalkylen, wie Methyl-Li, Benzyl-Li, Butyl-Li oder den entsprechenden Mg-organischen Verbindungen, wie Grignard-Verbindungen oder Zn-Organylen, einzusetzen. Solche Metallalkyle übertragen einerseits Alkylgruppen auf das Zentralmetall, andererseits fangen sie Wasser oder Katalysatorgifte aus dem Reaktionsmedium bzw. Monomer bei Polymerisationsreaktionen ab. Metallalkyle der beschriebenen Art können auch vorteilhaft in Kombination mit Aluminoxan-Cokatalysatoren eingesetzt werden, etwa um die benötigte Menge an Aluminoxana zu erniedrigen.

Beispiele für Borverbindungen, bei deren Verwendung solche Anionen eingeführt werden, sind:

Triethylammonium-tetraphenylborat,
Tripropylammonium-tetraphenylborat,
Tri(n-butyl)ammonium-tetraphenyborat,
Tri(t-butyl)ammonium-tetraphenylborat,
N,N-Dimethylanilinium-tetraphenylborat,
N,N-Diethylanilinium-tetraphenylborat,
N,N-Dimethyl(2,4,6-trimethylanilinium)tetraphenylborat,
Trimethylammonium-tetrakis(pentafluorophenyl)borat, Triethylammonium-tetrakis(pentafluorophenyl)borat,
Tripropylammonium-tetrakis(pentafluorophenyl)borat,
Tri(n-butyl)ammonium-tetrakis(pentafluorophenyl)borat, Tri(sec-butyl)ammonium-tetrakis(pentafluorophenyl)borat,
N,N-Dimethylanilinium-tetrakis(pentafluorophenyl)borat,
N,N-Diethylanilinium-tetrakis(pentaflurophenyl)borat, N,N-dimethyl(2,4,5-trimethyl-anilinium)-tetrakis(pentafluorophenyl)borat,
Trimethylammonium-tetrakis(2,3,4,6-tetrafluorophenyl)borat,
Triethylammonium-tetrakis (2,3,4,6-tetrafluorophenyl)borat,
Tripropylmmonium-tetrakis(2,3,4,6-tetrafluorophenyl)borat,
Tri(n-butyl)ammonium-tetrakis(2,3,4,6-tetrafluorophenyl)borat,
Dimethyl(t-butyl)ammonium-tetrakis(2,3,4,6-tetrafluorophenyl)borat,
N,N-Dimethylanilinium-tetrakis(2,3,4,6-tetrafluorophenyl)borat,
N,NDiethylanilinium-tetrakis(2,3,4,6-tetrafluorophenyl)borat,
N,N-Dimethyl-(2,4,6-trimethylanilinium)-tetrakis-(2,3,4,6-tetrafluorophenyl)borat; Dialkylammonium-Salze, wie:
Di-(i-propyl)ammonium-tetrakis(pentafluorophenyl)borat und
Dicyclohexylammonium-tetrakis(pentafluorophenyl)borat;
Tri-substituierte Phosphonium-Salze, wie:
Triphenylphosphonium-tetrakis(pentafluorophenyl)borat,
Tri(o-tolyl)phosphonium-tetrakis(pentafluorophenyl)borat,
Tri(2,6-dimethylphenyl)phosphonium-tetrakis(pentafluorophenyl)borat,
Tritolylmethyl-tetrakis(pentafluorphenyl)borat,
Triphenylmethyl-tetraphenylborat (Trityl-tetraphenylborat),
Trityl-tetrakis(pentafluorphenyl)borat,
Silber-tetrafluorborat,
Tris(pentafluorphenyl)boran,
Tris(trifluormethyl)boran.

Die erfindungsgemäß einzusetzenden Metallocen-Verbindungen bzw. π-Komplex-Verbindungen können isoliert als Reinstoffe zur (Co)Polymerisation eingesetzt werden. Es ist aber auch möglich, sie "in situ" im (Co)Polymerisationsreaktor in einer dem Fachmann bekannten Weise zu erzeugen und zu verwenden.

Das erste und das zweite Carbanion CpI und CpII mit einem Cyclopentadienylgerüst können gleich oder verschieden sein. Das Cyclopentadienylgerüst kann beispielsweise eines aus der Gruppe von Cyclopentadien, substituiertem Cyclopentadien, Inden, substituiertem Inden, Fluoren und substituiertem Fluoren sein. Als Substituenten seien 1 bis 4 je Cyclopentadien- bzw. ankondensiertem Benzolring genannt. Diese Substituenten können $C_1$-$C_{20}$-Alkyl, wie Methyl, Ethyl, Propyl, Isopropyl, Butyl oder iso-Butyl, Hexyl, Octyl, Decyl, Dodecyl, Hexadecyl, Octadecyl, Eicosyl, $C_1$-$C_{20}$-Alkoxy, wie Methoxy, Ethoxy, Propoxy, Isopropoxy, Butoxy oder iso-Butoxy, Hexoxy, Octyloxy, Decyloxy, Dodecyloxy, Hexadecyloxy, Octadecyloxy, Eicosyloxy, Halogen, wie Fluor, Chlor oder Brom, $C_6$-$C_{12}$-Aryl, wie Phenyl, $C_1$-

$C_4$-Alkylphenyl, wie Tolyl, Ethylphenyl, (i-)Propylphenyl, (i-,tert.-)Butylphenyl, Xylyl, Halogenphenyl, wie Fluor-, Chlor-, Bromphenyl, Naphthyl oder Biphenylyl, Triorganyl-silyl, wie Trimethylsilyl (TMS), Ferrocenyl sowie D bzw. A, wie oben definiert, sein. Ankondensierte aromatische Ringe können ferner teilweise oder vollständig hydriert sein, so daß lediglich die Doppelbindung bestehen bleibt, an der sowohl der ankondensierte Ring als auch der Cyclopentadienring Anteil haben. Weiterhin können Benzolringe, wie im Inden oder Fluoren, einen oder zwei ankondensierte weitere Benzolringe enthalten. Noch weiterhin können der Cyclopentadien- bzw. Cyclopentadienylring und ein ankondensierter Benzolring gemeinsam einen weiteren Benzolring ankondensiert enthalten.

Solche Cyclopentadiengerüste sind in Form ihrer Anionen ausgezeichnete Liganden für Übergangsmetalle, wobei jedes Cyclopentadienyl-Carbanion der genannten, gegebenenfalls substituierten Form eine positive Ladung des Zentralmetalls im Komplex kompensiert. Einzelbeispiele für solche Carbanionen sind: Cyclopentadienyl, Methylcyclopentadienyl, 1,2-Dimethyl-cyclopentadienyl, 1,3-Dimethyl-cyclopentadienyl, Indenyl, Phenylindenyl, 1,2-Diethylcyclopentadienyl, Tetramethyl-cyclopentadienyl, Ethyl-cyclopentadienyl, n-Butyl-cyclopentadienyl, n-Octyl-cyclopentadienyl, β-Phenylpropyl-cyclopentadienyl, Tetrahydroindenyl, Propyl-cyclopentadienyl. t-Butyl-cyclopentadienyl, Benzyl-cyclopentadienyl, Diphenylmethyl-cyclopentadienyl, Trimethylgermyl-cyclopentadienyl, Trimethylstannyl-cyclopentadienyl, Trifluormethylcyclopentadienyl, Trimethylsilyl-cyclopentadienyl, Pentamethylcyclopentadienyl, Fluorenyl, Tetrahydro- bzw. Octahydro-fluorenyl, am Sechsring benzoanellierte Fluorenyle und Indenyle, N,N-Dimethylamino-cyclopentadienyl, Dimethylphosphino-cyclopentadienyl, Methoxy-cyclopentadienyl, Dimethylboranyl-cyclopentadienyl, (N,N-Dimethylaminomethyl)-cyclopentadienyl.

Neben der obligatorisch vorhandenen ersten Donor-Akzeptor-Bindung zwischen D und A können weitere Donor-Akzeptor-Bindungen gebildet werden, wenn zusätzliche D und/oder A als Substituenten der jeweiligen Cyclopentadiensysteme oder Substituenten oder Teile des π-Systems vorliegen. Alle Donor-Akzeptor-Bindungen sind durch ihre oben dargestellte Reversibilität gekennzeichnet. Für den Fall mehrerer D bzw. A können diese verschiedene der genannten Positionen einnehmen. Die Erfindung umfaßt demnach sowohl die verbrückten Molekül-Zustände (Ia) bzw. (XIIIa) als auch die unverbrückten Zustände (Ib) bzw. (XIIIb). Die Anzahl der D-Gruppen kann gleich oder verschieden zur Anzahl der A-Gruppen sein. In bevorzugter Weise werden CpI und CpII bzw. πI oder πII über nur eine Donor-Akzeptor-Brücke verknüpft.

Neben den erfindungsgemäßen D/A-Brücken können auch kovalente Brücken vorliegen In diesem Falle verstärken die D/A-Brücken die Stereorigidität und die Thermostabilität des Katalysators. Beim Wechsel zwischen geschlossener und geöffneter D/A-Bindung werden Sequenzpolymere mit höherer und niedrigerer Stereoregularität zugänglich Solche Sequenzen können bei Copolymeren unterschiedliche chemische Zusammensetzungen haben.

Die π-Komplex-Verbindungen sind ebenfalls gekennzeichnet durch das Vorliegen mindestens einer koordinativen Bindung zwischen Donoratom(en) D und Akzeptoratom(en) A Sowohl D als auch A können hierbei Substituenten ihrer jeweils zugehörigen π-Systeme πI bzw. πII oder Teil des π-Systems sein, wobei jedoch stets mindestens eines von D und A Teil des π-Systems ist. Als π-System wird hierbei das gesamte, gegebenenfalls ein- oder zweifach kondensierte π-System verstanden. Hieraus ergeben sich folgende Ausführungsformen:

- D ist Teil des π-Systems, A ist Substituent des π-Systems;
- D ist Substituent des π-Systems, A ist Teil des π-Systems;
- D und A sind Teile ihres jeweiligen π-Systems,

Beispielsweise seien folgende heterocyclische Ringsysteme genannt, in denen D oder A Teile des Ringsystems sind:

(a) 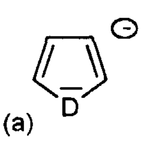
(b) 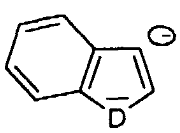
(c) 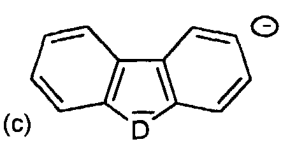
(d) 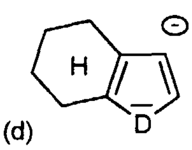

(e) 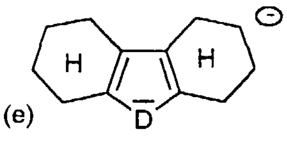
(f) 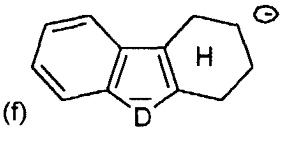
(g) 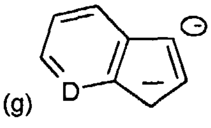
(h) 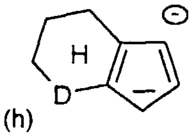

(i) 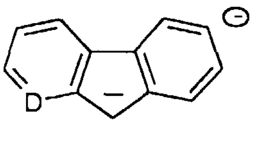 (j) 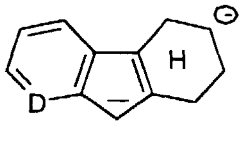 (k) 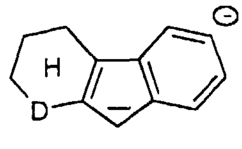 (l) 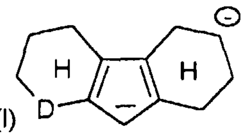

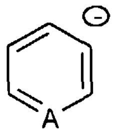 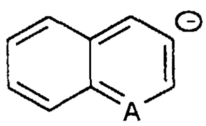 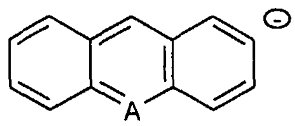 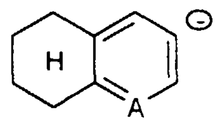

(m) (n) (o) (p)

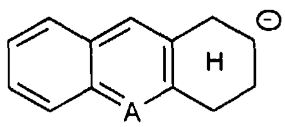 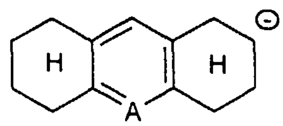

(q) (r)

Wichtige heterocyclische Ringsysteme sind die mit (a), (b), (c), (d), (g), (m), (n) und (o) bezeichneten Systeme; besonders wichtige sind die mit (a), (b), (c) und (m) bezeichneten.

Für den Fall, daß eines von D und A Substituent seines zugehörigen Ringsystems ist, ist das Ringsystem 3-, 4-, 5-, 6-, 7- oder 8-gliedrig mit oder ohne elektrische Ladung, das in der angegebenen Weise weiter substituiert und/oder kondensiert sein kann. Bevorzugt sind 5- und 6-gliedrige Ringsysteme. Besonders bevorzugt ist das negativ geladene Cyclopentadienyl-System.

Das erste bzw. das zweite $\pi$-System $\pi$I und $\pi$II, falls es als Ringsystem ausgebildet ist, kann für den Fall, daß eines von D und A Substituent des Ringsystems ist, CpI bzw. CpII entsprechen.

Als Donorgruppen kommen vor allem solche in Frage, bei denen das Donoratom D ein Element der 5., 6. oder 7., bevorzugt der 5. oder 6. Hauptgruppe des Periodensystems der Elemente (Mendelejew) ist und mindestens ein freies Elektronenpaar besitzt und wobei sich das Donoratom im Falle von Elementen der 5 Hauptgruppe in einem Bindungszustand mit Substituenten befindet und im Falle von Elementen der 6 Hauptgruppe in einem solchen befinden kann; Donoratome der 7. Hauptgruppe tragen keine Substituenten. Dies wird am Beispiel von Phosphor P, Sauerstoff O und Chlor Cl als Donoratome wie folgt verdeutlicht, wobei "Subst." solche genannten Substituenten und "-Cp" die Bindung an das Cyclopentadienyl-haltige Carbanion darstellen, ein Strich mit einem Pfeil, die in Formel (I) angegebene Bedeutung einer koordinativen Bindung hat und sonstige Striche vorhandene Elektronenpaare bedeuten:

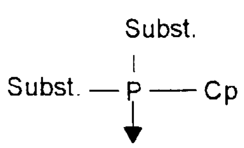 ; 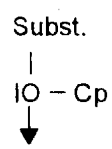 ; 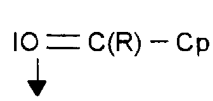 ; 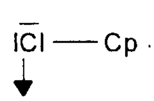 .

Als Akzeptorgruppen kommen vor allem solche in Frage, deren Akzeptoratom A ein Element aus der 3. Hauptgruppe des Periodensystems der Elemente (Mendelejew), wie Bor, Aluminium, Gallium, Indium und Thallium ist, sich in einem Bindungszustand mit Substituenten befindet und eine Elektronenlücke besitzt.

D und A sind durch eine koordinative Bindung verknüpft, wobei D eine positive (Teil)Ladung und A eine negative (Teil)Ladung annehmen.

Es wird demnach zwischen dem Donoratom D und der Donorgruppe bzw. zwischen dem Akzeptoratom A und der Akzeptorgruppe unterschieden. Die koordinative Bindung D $\rightarrow$ A wird zwischen dem Donoratom D und dem

Akzeptoratom A hergestellt. Die Donorgruppe bedeutet die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenlücke.

Die Bindung zwischen dem Donoratom bzw. dem Akzeptoratom und dem Cyclopentadienyl-haltigen Carbanion kann durch Spacergruppen im Sinne von D-Spacer-Cp bzw. A-Spacer-Cp unterbrochen sein. Im dritten der obigen Formelbeispiele stellt =C(R)- einen solchen Spacer zwischen O und Cp dar. Solche Spacergruppen sind beispielsweise:

Dimethylsilyl, Diethylsilyl, Di-n-propylsilyl, Diisopropylsilyl, Di-n-butylsilyl, Di-t-butylsilyl, Di-n-hexylsilyl, Methylphenylsilyl, Ethylmethylsilyl, Diphenylsilyl, Di(p-t-butylphenethylsilyl), n-Hexylmethylsilyl, Cyclopentamethylensilyl, Cyclotetramethylensilyl, Cyclotrimethylensilyl, Dimethylgermanyl, Diethylgermanyl, Phenylamino, t-Butylamino, Methylamino, t-Butylphosphino, Ethylphosphino, Phenylphosphino, Methylen, Dimethylmethylen (i-Propyliden), Diethylmethylen, Ethylen, Dimethylethylen, Diethylethylen, Dipropylethylen, Propylen, Dimethylpropylen, Diethylpropylen, 1,1-Dimethyl-3,3-dimethylpropylen, Tetramethyldisiloxan, 1,1,4,4-Tetramethyldisilylethylen, Diphenylmethylen.

In bevorzugter Weise sind D bzw. A ohne Spacer an das Cyclopentadienyl-haltige Carbanion gebunden.

D bzw. A können unabhängig voneinander am Cyclopentadien(yl)ring oder einem ankondensierten Benzolring oder einem anderen Substituenten von CpI bzw. CpII oder $\pi$I bzw. $\pi$II sitzen. Für den Fall mehrerer D bzw. A können diese verschiedene der genannten Positionen einnehmen.

Substituenten an den Donoratomen N, P, As, Sb, Bi, O, S, Se bzw. Te und an den Akzeptoratomen B, Al, Ga, In bzw. Tl sind beispielsweise: $C_1$-$C_{12}$(Cyclo)Alkyl, wie Methyl, Ethyl, Propyl, i-Propyl, Cyclopropyl, Butyl, i-Butyl, tert.-Butyl, Cyclobutyl, Pentyl, Neopentyl, Cyclopentyl, Hexyl, Cyclohexyl, die isomeren Heptyle, Octyle, Nonyle, Decyle, Undecyle, Dodecyle; die hierzu korrespondierenden $C_1$-$C_{12}$-Alkoxy-Gruppen; Vinyl, Butenyl, Allyl; $C_6$-$C_{12}$-Aryl, wie Phenyl, Naphthyl oder Biphenylyl, Benzyl, die durch Halogen, 1 oder 2 $C_1$-$C_4$-Alkylgruppen, $C_1$-$C_4$-Alkoxygruppen, Nitro oder Halogenalkylgruppen, $C_1$-$C_6$-Alkyl-carboxy, $C_1$-$C_6$-Alkyl-carbonyl oder Cyano substituiert sein können (z.B. Perfluorphenyl, m,m'-Bis(trifluormethyl)-phenyl und analoge, dem Fachmann geläufige Substituenten); analoge Aryloxygruppen; Indenyl; Halogen, wie F, Cl, Br und I, 1-Thienyl, disubstituiertes Amino, wie ($C_1$-$C_{12}$-Alkyl)$_2$amino, Diphenylamino, Tris-($C_1$-$C_{12}$ -alkyl)-silyl, $NaSO_3$-Aryl, wie $NaSO_3$-Phenyl und $NaSO_3$-Tolyl, $C_6H_5$-C$\equiv$C-; aliphatisches und aromatisches $C_1$-$C_{20}$-Silyl, dessen Alkylsubstituenten neben den oben genannten zusätzlich Octyl, Decyl, Dodecyl, Stearyl oder Eicosyl sein können und dessen Arylsubstituenten Phenyl, Tolyl, Xylyl, Naphthyl oder Biphenylyl sein können; und solche substituierten Silylgruppen, die über -$CH_2$- an das Donoratom bzw. das Akzeptoratom gebunden sind, beispielsweise $(CH_3)_3SiCH_2$-., ($C_1$-$C_{12}$-Alkyl)(phenyl)amino, ($C_1$-$C_{12}$-Alkylphenyl)$_2$amino, $C_6$-$C_{12}$-Aryloxy mit den obengenannten Arylgruppen, $C_1$-$C_8$-Perfluoralkyl, Perfluorphenyl. Bevorzugte Substituenten sind: $C_1$-$C_6$-Alkyl, $C_5$-$C_6$-Cycloalkyl, Phenyl, Tolyl, $C_1$-$C_6$-Alkoxy, $C_6$-$C_{12}$-Aryloxy, Vinyl, Allyl, Benzyl, Perfluorphenyl, F, Cl, Br, Di-($C_1$-$C_6$-alkyl)-amino, Diphenylamino.

Donorgruppen sind solche, bei denen das freie Elektronenpaar am N, P, As. Sb, Bi, O, S, Se, Te, F Cl, Br, I lokalisiert ist; bevorzugt hiervon sind N, P, O, S. Beispielhaft als Donorgruppen seien genannt: $(CH_3)_2N$-, $(C_2H_5)_2N$-, $(C_3H_7)_2N$-, $(C_4H_9)_2N$-, $(C_6H_5)_2N$-, $(CH_3)_2P$-, $(C_2H_5)_2P$-, $(C_3H_7)_2P$-, $(i\text{-}C_3H_7)_2P$-, $(C_4H_9)_2P$-, $(t\text{-}C_4H_9)P$-, (Cyclohexyl)$_2$P-, $(C_6H_5)_2P$-, $CH_3O$-, $CH_3S$-, $C_6H_5S$-, -$C(C_6H_5)$=O. -$C(CH_3)$=O, -$OSi(CH_3)_3$, -$OSi(CH_3)_2$-t-butyl, in denen N und P je ein freies Elektronpaar und O und S je zwei freie Elektronenpaare tragen und wobei in den beiden zuletzt genannten Beispielen der doppelt gebundene Sauerstoff über eine Spacergruppe gebunden ist, sowie Systeme, wie der Pyrrolidonring, wobei die von N verschiedenen Ringglieder ebenfalls als Spacer wirken.

Akzeptorgruppen sind solche, bei denen eine Elektronenpaar-Lücke am B, Al, Ga, In oder Tl, bevorzugt B, Al vorhanden ist, beispielhaft seien genannt: $(CH_3)_2B$-, $(C_2H_5)_2B$-, $H_2B$-, $(C_6H_5)_2B$-, $(CH_3)(C_6H_5)B$-, (Vinyl)$_2$B-, (Benzyl)$_2$B-, $Cl_2B$-, $(CH_3O)_2B$-, $Cl_2Al$-, $(CH_3)Al$-, $(i\text{-}C_4H_9)_2Al$-, $(Cl)(C_2H_5)_2Al$-, $(CH_3)_2Ga$-, $(C_3H_7)_2Ga$-, $((CH_3)_3Si\text{-}CH_2)_2Ga$-, (Vinyl)$_2$Ga-, $(C_6H_5)_2Ga$-, $(CH_3)_2In$-, $((CH_3)_3Si\text{-}CH_2)_2In$-, (Cyclopentadienyl)$_2$In-.

Weiterhin kommen solche Donor- und Akzeptorgruppen in Frage, die chirale Zentren enthalten oder in denen 2 Substituenten mit dem D- bzw. A-Atom einen Ring bilden. Beispiele hierfür sind etwa

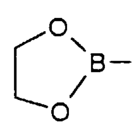 oder 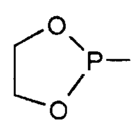

Bevorzugte Donor-Akzeptor-Brücken zwischen CpI und CpII sind beispielsweise folgende:

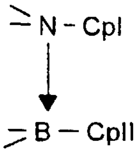 ; 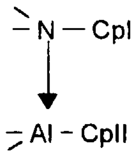 ; 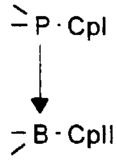 ; 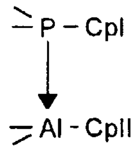 ; 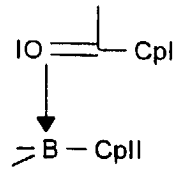 ;

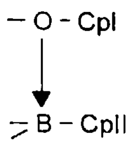 ; 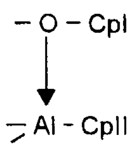 ; 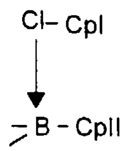 ; 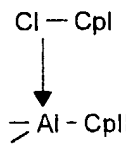 ; 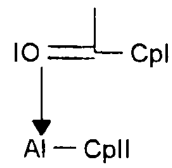 .

Eines oder beide π-Systeme πI bzw. πII kann als Heterocyclus in Form der obigen Ringsysteme (a) bis (r) vorliegen. D ist hierbei bevorzugt ein Element der 5. oder 6 Hauptgruppe des Periodensystems der Elemente (Mendelejew), A ist hierbei bevorzugt Bor. Einzelbeispiele für solche Hetero-π-Systeme, insbesondere Heterocyclen sind:

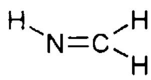 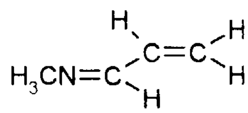 $RH_4C_6N=CH-HC=HC-C_6H_4R'$

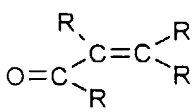 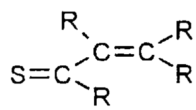 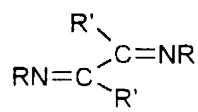

R, R' = H, Alkyl, Aryl, Alkaryl z.B. Methyl, Ethyl, t-Butyl, Phenyl, o,o'-Di-(i-Propyl)-phenyl

Beispiele für Heterocyclen sind: Pyrrolyl, Methylpyrrolyl, Dimethylpyrrolyl, Trimethylpyrrolyl, Tetramethylpyrrolyl, t-Butylpyrrolyl, Di-t-butylpyrrolyl, Indolyl, Methylindolyl, Dimethylindolyl, t-Butylindolyl, Di-t-butylindolyl, Tetramethylphospholyl, Tetraphenylphospholyl, Triphenylphospholyl, Trimethylphospholyl, Phosphaindenyl, Dibenzophospholyl (Phosphafluorenyl), Dibenzopyrrolyl.

Bevorzugte Donor-Akzeptor-Brücken zwischen πI und πII sind beispielsweise folgende: N → B, N → Al, P → B, P → Al, O → B, O → Al, Cl → B, Cl → Al, C=O→B. C=O→Al, wobei beide Atome dieser Donor-Akzeptor-Brücken Teile eines Heteroπ-Systems sein können oder ein Atom (Donor oder Akzeptor) Teil eines π-Systems ist und das andere Substituent des zweiten π-Systems ist oder wobei beide Atome Substituenten ihres jeweiligen Ringes sind und zusätzlich einer der Ringe ein Heteroatom enthält.

Die beiden Liganden-Systeme πI und πII können gemäß obiger Darstellung durch eine zwei oder drei Donor-Akzeptor-Brücken verknüpft sein Dies ist möglich, da erfindungsgemäß die Formel (Ia) die dargestellte D → A - Brücke enthält, die Liganden-Systeme πI bzw. πII aber weitere D und A als Substituenten oder Hetero-π-Zentren tragen können; die Zahl der sich daraus ergebenden zusätzlichen D → A - Brücken beträgt Null, Eins oder Zwei. Die Anzahl von D- bzw. A-Substituenten auf πI bzw. πII kann gleich oder verschieden sein. Die beiden Liganden-Systeme πI und πII können zusätzlich kovalent verbrückt sein. (Beispiele für kovalente Brücken sind weiter oben als Spacergruppen beschrieben.) Bevorzugt sind jedoch Verbindungen ohne kovalente Brücke, in denen demnach πI und πII über nur eine Donor-Akzeptor-Brücke verknüpft sind.

M steht für ein Übergangsmetall aus der 3., 4., 5. oder 6. Nebengruppe des Periodensystems der Elemente (Mendelejew), einschließlich der Lanthaniden und Actiniden; beispielhaft seien genannt: Sc, Y, La, Sm, Nd, Lu, Ti, Zr, Hf, Th, V Nb, Ta, Cr. Bevorzugt sind Ti, Zr, Hf, V, Nb und Ta.

Bei der Ausbildung der Metallocen-Struktur bzw. der π-Komplex-Struktur wird je eine positive Ladung des Übergangsmetalls M durch je ein Cyclopentadienyl-haltiges Carbanion kompensiert. Noch verbleibende positive Ladungen am Zentralatom M werden durch weitere, zumeist einwertige Anionen X abgesättigt, von denen zwei gleiche

oder verschiedene auch miteinander verknüpft sein können

(Dianionen 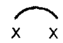),

beispielsweise einwertig oder zweiwertig negative Reste aus gleichen oder verschiedenen, linearen oder verzweigten, gesättigten oder ungesättigten Kohlenwasserstoffen, Aminen, Phosphinen, Thioalkoholen, Alkoholen oder Phenolen. Einfache Anionen wie $CR_3^-$, $NR_2^-$, $PR_2^-$, $OR^-$, $SR^-$ usw. können durch gesättigte oder ungesättigte Kohlenwasserstoff- oder Silan-Brücken verbunden sein, wobei Dianionen entstehen und die Anzahl der Brückenatome 0, 1, 2, 3, 4, 5, 6 betragen kann, bevorzugt sind 0 bis 4 Brückenatome, besonders bevorzugt 1 oder 2 Brückenatome. Die Brückenatome können außer H-Atomen noch weitere KW-Substituenten R tragen. Beispiele für Brücken zwischen den einfachen Anionen sind etwa $-CH_2-$, $-CH_2-CH_2-$, $-(CH_2)_3-$, CH=CH, $-(CH=CH)_2-$, $-CH=CH-CH_2-$, $CH_2-CH=CH-CH_2-$, $-Si(CH_3)_2-$, $C(CH_3)_2-$. Beispiele für X sind: Hydrid, Chlorid, Methyl, Ethyl, Phenyl, Fluorid, Bromid, Iodid, der n-Propylrest, der i-Propylrest, der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Butoxy, Phenoxy, Dimethylamino, Diethylamino, Methylethylamino, Di-t-Butylamino, Diphenylamino, Diphenylphosphino, Dicyclohexylphosphino, Dimethylphosphino, Methyliden, Ethyliden, Propyliden, das Ethylenglykoldianion. Beispiele für Dianinonen sind 1,4-Diphenyl-1,3-butadiendiyl, 3-Methyl-1,3-pentadiendiyl, 1,4-Dibenzyl-1,3-butadiendiyl, 2,4-Hexadiendiyl, 1,3-Pentadiendiyl, 1,4-Ditolyl-1,3-butandiendiyl, 1,4-Bis(trimethylsilyl-1,3-butadiendiyl, 1,3-Butadiendiyl, Besonders bevorzugt sind 1,4-Diphenyl-1,3-butandiendiyl, 1,3-Pentadiendiyl, 1,4-Dibenzyl-1,3-butadiendiyl, 2,4-Hexandiendiyl, 3-Methyl-1,3-pentadiendiyl, 1,4-Ditolyl-1-3-butadiendiyl und 1,4-Bis(trimethylsilyl)-1,3-butadiendiyl. Weitere Beispiele für Dianionen sind solche mit Heteroatomen, etwa der Struktur

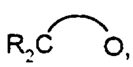, 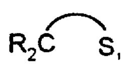, 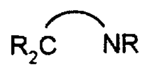 bzw. 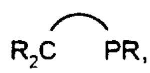,

wobei die Brücke die angegebene Bedeutung hat. Besonders bevorzugt sind darüber hinaus zur Ladungskompensation schwach oder nicht koordinierende Anionen der obengenannten Art.

Die Aktivierung durch solche voluminösen Anionen gelingt beispielsweise durch Umsetzung der D/A-π-Komplex-Verbindungen, insbesondere der D/A-Metallocene mit Tris-(pentafluorphenyl)-boran, Triphenylboran, Triphenylaluminium, Trityl-tetrakis-(pentafluorphenyl)-borat oder N,N-Dialkyl-phenyl-ammonium-tetrakis-(pentafluorphenyl)-borat oder die entsprechenden Phosphonium- oder Sulfoniumsalze von Boraten oder (Erd)Alkali-, Thallium- oder Silbersalzen von Boraten, Carboranen, Tosylaten, Triflaten, Perfluorcarboxylaten wie Trifluoracetat oder den korrespondierenden Säuren. Vorzugsweise werden dabei D/A-Metallocene eingesetzt, deren Anionäquivalente X = Alkyl-, Allyl-, Aryl-, Benzylgruppen darstellt. Solche Derivate können auch "in situ" hergestellt werden, indem man D/A-Metallocene mit anderen Anionäquivalenten wie X = F, Cl, Br, OR etc. zuvor mit Aluminiumalkylen, Lithiumorganylen oder Grignard-Verbindungen oder Zink- oder Bleialkylen umsetzt Die daraus erhältlichen Umsetzungsprodukte können ohne vorherige Isolierung mit obengenannten Boranen oder Boraten aktiviert werden.

Der Index n nimmt in Abhängigkeit von der Ladung von M den Wert Null, Eins, Zwei, Drei oder Vier, bevorzugt Null, Eins oder Zwei an. Die obengenannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden. Im Falle von $La^{3+}$ nimmt demnach der Index n den Wert Eins und im Falle von $Zr^{4+}$ den Wert Zwei an; bei $Sm^{2+}$ wird n = Null.

Zur Herstellung der Metallocen-Verbindungen der Formel (I) kann man entweder je eine Verbindung der obigen Formeln (II) und (III) oder je eine Verbindung der obigen Formeln (IV) und (V) oder je eine Verbindung der obigen Formeln (VI) und (VII) oder je eine Verbindung der obigen Formeln (VIII) und (III) oder je eine Verbindung der obigen Formeln (IV) und (IX) oder je eine Verbindung der obigen Formeln (X) und (VII) unter Austritt bzw. Abspaltung von Alkalimetall-X-, Erdalkalimetall-$X_2$-, Silyl-X-, Germyl-X-, Stannyl-X- oder HX-Verbindungen in einem aprotischen Lösungsmittel bei Temperaturen von -78°C bis +120°C, vorzugsweise von -40°C bis +70°C und in einem Molverhältnis von (II):(III) bzw. (IV):(V) bzw. (VI):(VII) bzw. (VIII):(III) bzw. (IV):(IX) bzw. (X):(VII) von 1:0,5-2, vorzugsweise 1:0,8-1,2, besonders bevorzugt 1:1, miteinander umzusetzen. In den Fällen der Umsetzung von (VIII) mit (III) bzw. (IV) mit (IX) bzw. (X) mit (VII) ist es möglich, auf ein aprotisches Lösungsmittel zu verzichten, wenn (VIII), (IX) oder (X) unter Reaktionsbedingungen flüssig ist. Beispiele für solche austretenden bzw. abgespaltenen Verbindungen sind: TlCl, LiCl, LiBr, LiF, LiI, NaCl, NaBr, KCl, KF, $MgCl_2$ $MgBr_2$, $CaCl_2$, $CaF_2$, Trimethylchlorsilan, Triethylchlorsilan, Tri-(n-butyl)-chlorsilan, Triphenylchlorsilan, Trimethylchlorgerman, Trimethylchlorstannan, Dimethylamin, Diethylamin, Dibutylamin und weitere Verbindungen, die aus dem obengenannten Substitutionsmuster für den Fachmann erkennbar sind.

Verbindungen der Formel (II) bzw. (IV) stellen somit Carbanionen mit einem Cyclopentadienylgerüst oder einem heterocyclischen Gerüst dar, die zur D/A-Brückenbildung genutzte 1 bis 3 Donorgruppen kovalent gebunden oder als heterocyclische Ringglieder inkorporiert enthalten und als Gegenion zur negativen Ladung des Cyclopentadienylgerüstes ein Kation aufweisen. Verbindungen der Formel (VIII) sind ungeladene cyclische Gerüste mit ebenfalls zur D/A Brückenbildung genutzten 1 bis 3 Donorgruppen, aber mit leicht abspaltbaren Abgangsgruppen $E(R^1R^2R^3)$, wie Silyl-, Germyl- oder Stannylgruppen oder Wasserstoff, an Stelle der ionischen Gruppen.

Die zweite Komponente zur Ausbildung der erfindungsgemäß einzusetzenden Metallocen-Verbindungen, nämlich die Verbindung der Formel (III) bzw. (V) stellt ebenfalls ein Carbanion mit einem Cyclopentadienylgerüst dar, das gleich dem Cyclopentadienylgerüst der Verbindung (II) bzw. (IV) oder verschieden von ihm ist, jedoch 1 bis 3 Akzeptorgruppen an Stelle der Donorgruppen trägt. In entsprechender Weise sind Verbindungen der Formel (IX) ungeladene Cyclopentadien-Gerüste mit 1 bis 3 Akzeptorgruppen und ebenfalls leicht abspaltbaren Abgangsgruppen F $(R^4R^5R^6)$.

In völlig analoger Weise stellen Verbindungen der Formeln (VI) bzw. (X) Ausgangsstoffe mit vorgebildeter D→A-Bindung dar, die Carbanionen-Gegenkationen-Verbindungen bzw. ungeladene Cyclopentadien-Gerüste mit insgesamt möglichen 1 bis 3 D→A-Bindungen bedeuten und durch Reaktion mit Verbindungen der Formel (VII) die Metallocen-Verbindungen (I) ergeben.

Beide Ausgangsstoffe des Herstellungsverfahrens, nämlich (II) und (III) bzw. (IV) und (V) bzw. (VI) und (VII) bzw. (VIII) und (III) bzw. (IV) und (IX) bzw. (X) und (VII) reagieren beim Zusammengeben spontan unter gleichzeitiger Ausbildung der Donor-Akzeptor-Gruppe -D→A- bzw. der Komplexierung des Metallkations M unter Austritt von M'X bzw. $E(R^1R^2R^3)X$ bzw. $F(R^4R^5R^6)X$ bzw. HX. Bei der Darstellung der Donor-Akzeptor-Gruppe wurden die Substituenten an D und A der Übersichtlichkeit halber weggelassen.

M' ist ein Kationäquivalent eines (Erd)Alkalimetalls, wie Li, Na, K, ½ Mg, ½ Ca, ½ Sr, ½ Ba, oder Thallium.

In oben angegebener Weise werden die Verbindungen der Formel (XIIIa+b) in analoger Weise hergestellt.

Lösungsmittel für das Herstellungsverfahren sind aprotische, polare oder unpolare Lösungsmittel, wie aliphatische und aromatische Kohlenwasserstoffe oder aliphatische und aromatische Halogenkohlenwasserstoffe. Im Prinzip kommen auch weitere aprotische Lösungsmittel, wie sie dem Fachmann bekannt sind, in Frage, jedoch sind wegen der einfacheren Aufarbeitung solche mit zu hohen Siedepunkten weniger bevorzugt. Typische Beispiele sind: n-Hexan, Cyclohexan, Pentan, Heptan, Petrolether, Toluol, Benzol, Chlorbenzol, Methylenchlorid, Diethylether, Tetrahydrofuran, Ethylenglykoldimethylether.

Die Ausgangsstoffe der Formeln (II), (III), (IV) und (V) können gemäß literaturbekannten Verfahren oder analog zu diesen hergestellt werden. So läßt sich beispielsweise analog zu J. of Organometallic Chem. (1971), 29, 227, das marktgängige Trimethylsilyl-cyclopentadien zunächst mit Butyl-lithium und dann mit Trimethylsilylchlorid zum Bis (trimethylsilyl)-cyclopentadien umsetzen. Dies wiederum kann mit Bortrichlorid zu Trimethylsilyl-cyclopentadienyl-dichlorboran umgesetzt werden (analog zu J. of Organometallic Chem. (1979), 169, 327), welches schließlich analog zu J. of Organometallic Chem. (1979), 169, 373 mit Titantetrachlorid zum Dichlorboryl-cyclopentadienyl-titantrichlorid umgesetzt werden kann. Diese zuletzt genannte Verbindung stellt bereits einen Prototyp der Verbindungen der Formel (III) dar; die zuletzt genannte Verbindung kann weiterhin selektiv mit Trimethylaluminium umgesetzt werden, wobei die beiden mit dem Boratom verbundenen Chloratome durch Methylgruppen ausgetauscht werden und wobei eine weitere Verbindung der Formel (III) aufgezeigt ist. Analog den Verfahrensbeschreibungen in J. Am. Chem. Soc. (1983) 105, 3882 und Organometallics (1982) 1, 1591 kann das marktgängige Cyclopentadienyl-thallium mit Chlor-diphenylphosphin und weiter mit Butyl-lithium umgesetzt werden, wobei man einen Prototyp von Verbindungen der Formel (II) erhält. Als ein weiteres Beispiel sei die Bildung von Dimethylstannyl-diphenylphosphin-inden durch Umsetzung von Inden zunächst mit Butyl-lithium, wie oben bereits genannt, und anschließend mit Chlordiphenylphosphin genannt; die weitere Umsetzung, zunächst erneut mit Butyl-lithium und dann mit Chlor-tributylzinn ergibt die genannte Verbindung, die nach weiterer Umsetzung mit Zirkontetrachlorid das Diphenylphosphino-indenyl-zirkoniumtrichlorid als einen Vertreter von Verbindungen der Formel (IV) gibt. Solche Synthesen und Herstellungsweisen sind dem auf dem Gebiet der metallorganischen und der elementorganischen Chemie tätigen Fachmann geläufig und in zahlreichen Literaturstellen veröffentlicht, von denen oben nur einige exemplarisch angeführt wurden.

Die weiter unten aufgeführten Beispiele zeigen, wie solche heterocyclischen Vorstufen bzw. erfindungsgemäßen Katalysatoren zugänglich sind. So kann Pyrrolyl-Lithium (Formel II) aus Pyrrol durch Umsetzung mit Butyl-Lithium hergestellt werden, wie etwa in J. Amer. Chem. Soc. (1982), 104, 2031 beschrieben. Trimethylstannylphosphol (Formel VIII) wird erhalten durch Umsetzung von 1-Phenylphosphol mit Lithium, gefolgt von Aluminiumtrichlorid, wobei Phospholyl-Lithium (Formel II) entsteht, welches seinerseits mit Trimethylchlorstannan zum Trimethylstannylphosphol weiterreagiert. Vgl.: J. Chem. Soc. Chem. Comm. (1988), 770. Diese Verbindung kann mit Titantetrachlorid zu Phospholyl-Titantrichlorid (Formel IV) umgesetzt werden.

Pro Mol π-Komplex-Verbindungen bzw. Metallocen-Verbindungen werden $10^1$ bis $10^{12}$ Mol Comonomere umgesetzt. Die π-Komplex-Verbindungen bzw. Metallocen-Verbindungen können zusammen mit Cokatalysatoren eingesetzt werden. Das Mengenverhältnis zwischen Metallocen-Verbindung bzw. π-Komplex-Verbindung und Cokatalysator beträgt 1 bis 100 000 mol Cokatalysator pro mol Metallocen bzw. π-Komplex-Verbindung. Cokatalysatoren sind beispielsweise Aluminoxanverbindungen Darunter werden solche der Formel

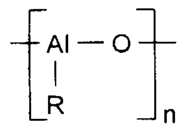 (XII)

verstanden, in der

R für $C_1$-$C_{20}$-Alkyl, $C_6$-$C_{12}$-Aryl oder Benzyl steht und

n eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkylen) in Kombination mit Wasser (in gasförmiger, flüssiger, fester oder gebundener Form, etwa als Kristallwasser) einzusetzen. Das Wasser kann auch als (Rest)Feuchte des Polymerisationsmediums, des Monomers oder eines Trägers wie Silikagel zugeführt werden.

Die aus der eckigen Klammer von Formel (XI) herausragenden Bindungen enthalten als Endgruppen des oligomeren Aluminoxans R-Gruppen oder $AlR_2$-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Aluminoxane sind marktgängige Verbindungen. Im speziellen Fall von R = $CH_3$ wird von Methylaluminoxanen (MAO) gesprochen.

Weitere Cokatalysatoren sind Aluminiumalkyle, Lithiumalkyle oder Mg-organische Verbindungen, wie Grignard-Verbindungen oder teilhydrolysierte Boroganyle. Bevorzugte Cokatalysatoren sind Aluminoxane.

Die Aktivierung mit dem Cokatalysator bzw. die Erzeugung des voluminösen nicht- oder schwach-kooridinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel durchgeführt werden.

Die π-Komplex-Verbindungen bzw. Metallocen-Verbindungen und die Aluminoxane können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, $Al_2O_3$, $MgCl_2$, NaCl, Cellulosederivate, Stärke und Polymere. Hierbei kann sowohl erst die π-Komplex-Verbindung bzw. Metallocen-Verbindung als auch erst das Aluminoxan auf den Träger gebracht werden und die jeweils andere Komponente danach zugesetzt werden. Gleichermaßen kann man aber auch die Metallocen-Verbindung in homogener oder heterogener Form mit dem Aluminoxan aktivieren und danach die aktivierte Metallocen-Verbindung auf den Träger bringen.

Trägermaterialien werden vorzugsweise thermisch und/oder chemisch vorbehandelt um den Wassergehalt bzw. die OH-Gruppenkonzentration definiert einzustellen oder möglichst niedrig zu halten. Eine chemische Vorbehandlung kann z.B. in der Umsetzung des Trägers mit Aluminiumalkyl bestehen. Anorganische Träger werden gewöhnlich vor Verwendung auf 100°C bis 1000°C während 1 bis 100 Stunden erhitzt. Die Oberfläche solcher anorganischer Träger, insbesondere von Silica ($SiO_2$), liegt zwischen 10 und 1000 $m^2$/g, vorzugsweise zwischen 100 und 800 $m^2$/g. Der Teilchendurchmesser liegt zwischen 0,1 und 500 Mikrometer (μ), vorzugsweise zwischen 10 und 200 μ.

Cyclische Monomere sind mono- oder polycyclisch und fallen unter eine der beiden Formeln

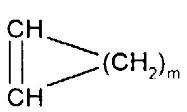 (XIV) bzw. 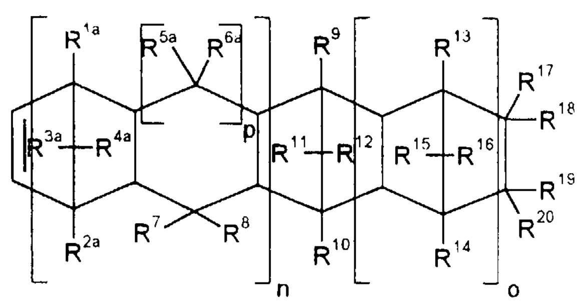 (XV),

in denen die Indices

m eine Zahl von 2 bis 10, bevorzugt 3 bis 6,

n die Zahl 0 oder 1,

o die Zahl 0, 1, 2 oder 3 und

p die Zahl 0 oder 1 bedeutet,

in Formel (XIV) zwei benachbarte $CH_2$-Gruppen durch die Gruppe -CH=CH- ersetzt sein kann und in Formel (XV) die Reste $R^{1a}$ bis $R^{6a}$ und $R^7$ bis $R^{20}$ unabhängig voneinander Wasserstoff, Fluor, Chlor, Brom, geradkettiges oder verzweigtes $C_1$-$C_{20}$-Alkyl, $C_3$-$C_8$-Cycloalkyl oder $C_6$-$C_{16}$-Aryl darstellen, wobei zusätzlich das Restepaar $R^{18}/R^{19}$ eine Doppelbindung oder eine der Gruppen $-CHR^{21}-CHR^{22}-CHR^{23}-$, $-CHR^{21}-CHR^{22}-CHR^{23}-CHR^{24}-$ oder $-CHR^{21}-CHR^{22}-CHR^{23}-CHR^{24}-CHR^{25}-$, in denen $R^{21}$ bis $R^{25}$ Wasserstoff oder $C_1$-$C_4$-Alkyl ist, bedeuten kann und das Restepaar $R^{17}/R^{18}$ die doppelt gebundene Gruppe $=C(R^{26},R^{27})$, in der $R^{26}$ und $R^{27}$ $C_1$-$C_4$-Alkyl sind und $R^{27}$ auch Wasserstoff sein kann, bedeuten kann.

Solche cyclische Monomere haben eine oder mehrere, bevorzugt eine oder zwei Doppelbindungen und sind bekannt und beispielsweise in den Verfahren von EP-A 610 852, EP-A 690 078 und US 5 567 777 eingesetzt.

Bevorzugte cyclische Monomere der Formel (XV) sind solche der Formeln

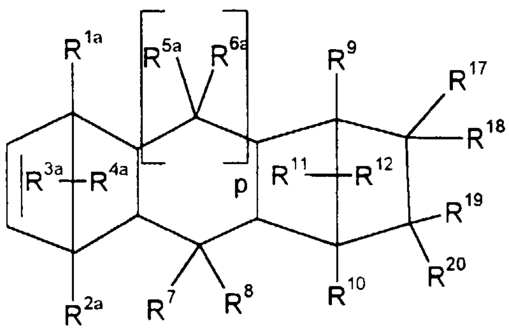

bzw.

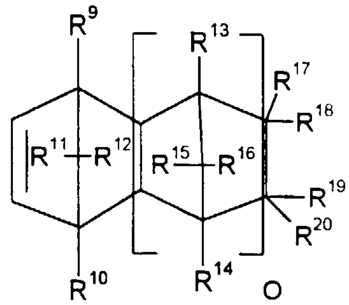

(XVa) (XV b)

Eine beispielhafte, nicht erschöpfende Aufzählung solcher cyclischer Comonomerer umfaßt Cyclobuten, Cyclopenten, Cyclopentadien, Cyclohexen, Cyclohepten, Cycloocten, Cyclodecen, Cyclododecen, Bicyclo-2-heptene, Tricyclo-3-decene, Tricyclo-3-undecene, Tetracyclo-3-dodecene, Pentacyclo-4-pentadecene, Pentacyclopentadecadiene, Pentacyclo-3-pentadecene, Pentacyclo-4-hexadecene, Pentacyclo-3-hexadecene, Hexacyclo-4-heptadecene, Heptacyclo-5-eicocene, Heptacyclo-4-eicocene, Heptacyclo-5-heneicocene, Octacyclo-5-dococene, Nonacyclo-5-pentacosene, Nonacyclo-6-hexacosene, Cyclopentadien/Acenaphthylen-Addukte, 1,4-Methano-1.4.4a.9a-tetrahydrofluorene und 1,4-Methano-1.4.4a.5.10.10a-hexahydroanthracene, wie z.B. Bicyclo[2,2,1]-hept-2-en (Norbornen), Norbornadien, 5-Methyl-norbornen, 6-Methyl-norbornen, 5,6-Dimethyl-norbornen, 1-Methyl-norbornen, 5-Isobutyl-norbornen, 7-Methyl-norbornen, Tricyclo[4,3,0,$1^{2.5}$]-3-decen (5,6-Trimethylen-norbornen), Tricyclo[4,4,0,$1^{2.5}$]-3-undecen(5,6-Tetramethylen-norbornen), 10-Methyl-tricyclo[4,4,0,$1^{2,5}$]-3-undecen, 6-Ethylbicyclo[2.2.1]hept-2-en, 6-n-Butylbicyclo[2.2.1]hept-2-en, 6-Isobutylbicyclo[2.2.1]hept-2-en, 2-Methyltricyclo[4.3.0.$1^{2,5}$]-3-decen, 5-Methyltricyclo[4.3.0.$1^{2,5}$]-3-decen, Tricyclo[4.3.0$1^{2,5}$]-3-undecen, Tricyclo[4,3,0,$1^{2,5}$]-3,7-decadien (Dicyclopentadien), Tricyclo[4,3,0,$1^{2,5}$]-3-decen, Tetracyclo[4,4,0,$1^{2,5}$,$1^{7,10}$]-3-dodecen, 8-Methyl-tetracyclo[4,4,0,$1^{2,5}$,$1^{7,10}$]-3-dodecen, 8-Cyclohexyl-tetracyclo[4,4,0,$1^{2,5}$,$1^{7,10}$]-3-dodecen, 8-Stearyl-tetracyclo[4,4,0,$1^{2,5}$,$1^{7,10}$]-3-dodecen, das 5,10-Dimethyl-, 2,10-Dimethyl-, 8,9-Dimethyl-, 11,12-Dimethyl-, 2,7,9-Trimethyl-, 9-Isobutyl-, 11,12-Dimethyl-, 8-Ethyliden-9-methyl, 8-Chlor-, 8-Brom- oder 8-Fluorderivat des Tetracyclo[4,4,0,$1^{2,5}$,$1^{7,10}$]-3-dodecen, 8-Ethyltetracyclo[4,4,0,$1^{2,5}$,$1^{7,10}$]-3-dodecen, 8-Propyltetracyclo[4,4,0,$1^{2,5}$,$1^{7,10}$]-3-dodecen, 8-Butyltetracyclo[4,4,0,$1^{2,5}$,$1^{7,10}$]-3-dodecen, 8-Isobutyltetracyclo[4,4,0,$1^{2,5}$,$1^{7,10}$]-3-dodecen, 8-Hexyltetracyclo[4,4,0,$1^{2,5}$,$1^{7,10}$]-3-dodecen, 8-Methyl-9-ethyltetracyclo[4,4,0,$1^{2,5}$,$1^{7,10}$]-3-dodecen. 9-Ethyl-2,7-dimethyltetracyclo[4,4,0,$1^{2,5}$,$1^{7,10}$]-3-dodecen, 9-Isobutyl-2,7-dimethyltetracyclo[4,4,0,$1^{2,5}$,$1^{7,10}$]-3-dodecen, 9,11,12-Trimethyltetracyclo[4,4,0,$1^{2,5}$,$1^{7,10}$]-3-dodecen, 9-Ethyl-11,12-dimethyltetracyclo[4,4,0,$1^{2,5}$,$1^{7,10}$]-3-dodecen, 9-Isobutyl-11,12-dimethyltetracyclo[4,4,0,$1^{2,5}$,$1^{7,10}$]-3-dodecen, 5,8,9,10-Tetramethyltetracyclo[4,4,0,$1^{2,5}$,$1^{7,10}$]-3-dodecen, 8-Ethylidentetracyclo[4,4,0,$1^{2,5}$,$1^{7,10}$]-3-dodecen, 8-Ethyliden-9-methyltetracyclo[4,4,0,$1^{2,5}$,$1^{7,10}$]-3-dodecen, 8-Ethyliden-9-ethyltetracyclo[4,4,0,$1^{2,5}$,$1^{7,10}$]-3-dodecen, 8-Ethyliden-9-isopropyltetracyclo[4,4,0,$1^{2,5}$,$1^{7,10}$]-3-dodecen, 8-Ethyliden-8-butyltetracyclo[4,4,0,$1^{2,5}$,$1^{7,10}$]-3-dodecen, 8-n-Propylidentetracyclo[4,4,0,$1^{2,5}$,$1^{7,10}$]-3-dodecen, 8-n-Propyliden-9-methyltetracyclo[4,4,0,$1^{2,5}$,$1^{7,10}$]-3-dodecen, 8-n-Propyliden-9-ethyltetracyclo[4,4,0,$1^{2,5}$,$1^{7,10}$]-3-dodecen, 8-n-Propyliden-9-isopropyltetracyclo[4,4,0,$1^{2,5}$,$1^{7,10}$]-3-dodecen, 8-n-Propyliden-9-butyltetracyclo[4.4.0.$1^{2,5}$.$1^{7,10}$]-3-dodecen, 8-Isopropylidentetracyclo[4.4.0.$1^{2,5}$.$1^{7,10}$]-3-dodecen, 8-Isopropyliden-9-methyltetracyclo[4.4.0.$1^{2,5}$.$1^{7,10}$]-3-dodecen, 8-Isopropyliden-9-ethyltetracyclo[4.4.0.$1^{2,5}$.$1^{7,10}$]-3-dodecen, 8-Isopropyliden-9-isopropyltetracyclo[4.4.0.$1^{2,5}$.$1^{7,10}$]-3-dodecen, 8-Isopropyliden-9-butyltetracyclo[4.4.0.$1^{2,5}$.$1^{7,10}$]-3-dodecen, 8,9-Dichlortetracyclo[4.4.0.$1^{2,5}$.$1^{7,10}$]-3-dodecen, Pentacyclo[6,5,1,$1^{3,6}$,$0^{2,7}$,$0^{9,13}$]-4-pentadecen, Pentacyclo[7,4,0,$1^{2,5}$,$1^{9,12}$,$0^{8,13}$]-3-pentadecen, Pentacyclo[8,4,0,$1^{2,5}$,$1^{9,12}$,$0^{8,13}$]-3-hexadecen, 1,3-Dimethylpentacyclo[6.5.1.$1^{3,6}$.$0^{2,7}$.$0^{9,13}$]-4-pentadecen, 1,6-Dimethyl[6.5.1.$1^{3,6}$.$0^{2,7}$.$0^{9,13}$]-4-pentadecen, 14,15-Dimethyl[6.5.1.$1^{3,6}$.$0^{2,7}$.$0^{9,13}$]-4-pentadecen, Pentacyclo[7.4.0.$1^{2,5}$.$1^{9,12}$.$0^{8,13}$]-3-pentadecen, Methyl-substituierte Pentacyclo[7.4.0.$1^{2,5}$.$1^{9,12}$.$0^{8,13}$]-3-pentadecen, Pentacyclo[6.5.1.$1^{3,6}$.$0^{2,7}0^{9,13}$]-4,10-pentadecadien, 11-Methylpentacyclo[8.4.0.$1^{2,5}$.$1^{9,12}$.$0^{8,13}$]-3-hexadecen, 11-Ethyl[8.4.0.$1^{2,5}$.$1^{9,12}$.$0^{8,13}$]-3-hexadecen, 10,11-Dimethyl[8.4.0.$1^{2,5}$.$1^{9,12}$.$0^{8,13}$]-3-hexadecen, Pentacyclo[6.6.1.$1^{3,6}$.$0^{2,7}$.$0^{9,14}$]-4-hexadecen, 1,3-Dimethylpentacyclo[6.6.1.$1^{3,6}$.$0^{2,7}$.$0^{9,14}$]-4-hexadecen, 15,16-Dimethylpentacyclo[6.6.1.$1^{3,6}$.$0^{2,7}$.$0^{9,14}$]-4-hexadecen, Hexacyclo[6,6,1,$1^{3,6}$,$1^{10,13}$,$0^{2,7}$,$0^{9,14}$]-heptadecen, Heptacyclo[8,7,0,$1^{2,9}$,$1^{4,7}$,$1^{11,17}$,$0^{3,8}$,$0^{12,16}$]-5-eicosen, Heptacyclo[8,8,0,$1^{4,7}$,$1^{11,18}$,$1^{13.16}$,$0^{3,8}$, $0^{12,17}$]-5-heneicosen, 12-Methylhexacyclo[6.6.1.$1^{3,6}$.$1^{10,13}$.$0^{2,7}$.$0^{9.14}$]-4-heptadecen, 12-Ethylhexacyclo[6.6.1.$1^{3,6}$.$1^{10,13}$.$0^{2,7}$.$0^{9,14}$]-4-heptadecen, 12-Isobutylhexacyclo[6.6.1.$1^{3,6}$.1 $^{10,13}$.$0^{2,7}$.$0^{9,14}$]-4-heptadecen, 1,6,10-Trimethylhexacyclo[6.6.1.$1^{3,6}$.$1^{10,13}$.$0^{2,7}$.$0^{9,14}$]-4-heptadecen, Heptacyclo[8.7.0.$1^{3,6}$.$1^{10,17}$.$1^{12,15}$.$0^{2,7}$.$0^{11,16}$]-4-eicosen und seine dimethylsubstituierten Derivate, Heptacyclo[8.8.0.$1^{4,7}$.$1^{11,18}$.$1^{13,16}$.$0^{3,8}$.$0^{12,17}$]-5-heneicosen und seine trimethylsubstituierten Derivate, 15-Methylheptacyclo[8.8.0.$1^{4,7}$.$1^{11,18}$.$1^{13,16}$.$0^{3,8}$.$0^{12,17}$]-5-heneicosen, 5-Phenyl-bicyclo[2.2.1]hept-2-en, 5-Methyl-5-phenylbicyclo[2.2.1]hept-2-en, 5-Benzyl-bicyclo[2.2.1]hept-2-en, 5-Tolyl-bicyclo[2.2.1]hept-2-en, 2-(Ethylphenyl)-bicyclo[2.2.1 ]hept-2-en, 5-(Isopropylphenyl)-bicyclo[2.2.1]hept-2-en, 5-Biphenyl-bicyclo[2.2.1]hept-2-en, 5-(β-Naphthyl)-bicyclo[2.2.1]hept-2-en, 5-(α-Naphthyl)-bicyclo[2.2.1]hept-2-en, 5-(Anthracenyl)-bicyclo[2.2.1]hept-2-en, 5,6-Diphenylbicyclo[2.2.1]hept-2-en, 1,4-Methano-1.4.4a.9a-tetrahydrofluoren, 1,4-Methano-1.4.4a.5.10.10a-hexahydroanthracen, 8-Phenyltetracyclo[4.4.0.$1^{2,5}$.$1^{7,10}$]-3-dodecen, 8-Methyl-8-phenyltetracyclo[4.4.0.$1^{2,5}$.$1^{7,10}$]-3-dodecen, 8-Benzyl-tetracyclo[4.4.0.$1^{2,5}$.$1^{7,10}$]-3-dodecen, 8-Tolyl-tetracyclo[4.4.0.$1^{2,5}$.$1^{7,10}$]-3-dodecen, 8-(Ethylphenyl)-tetracyclo[4.4.0.$1^{2.5}$.$1^{7.10}$]-3-dodecen, 8-(Isopropylphenyl)-tetracyclo[4.4.0.$1^{2,5}$.$1^{7,10}$]-3-dodecen, 8,9-Diphenyl-tetracyclo[4.4.0.$1^{2,5}$.$1^{7,10}$]-3-dodecen, 8-(Biphenyl)-tetracyclo[4.4.0.$1^{2,5}$.$1^{7,10}$]-3-dodecen, 8-(β-Naphthyl)-tetracyclo[4.4.0.$1^{2,5}$.$1^{7,10}$]-3-dodecen, 8-(α-Naphthyl)-tetracyclo[4.4.0.$1^{2,5}$.1 $^{7,10}$]-3-dodecen und 8-(Anthracenyl)-tetracyclo[4.4.0.$1^{2,5}$.$1^{7,10}$]-3-dodecen.

Bevorzugte Cycloolefine sind auch solche, die durch Halogen, $-CF_3$, $-N(C_1-C_{30}-Alkyl)_2-CN$, $C_1-C_{12}$-Alkoxy oder $C_1-C_{20}$-Alkylen-$COOC_1-C_{20}$-alkyl, vorzugsweise ein- bis dreimal pro Molekül substituiert sind.

Die Cycloolefine können auch in Gegenwart von acyclischen Mono- oder Diolefinen, Alkinen und Kohlenmonoxid polymerisiert werden. Geeignete acyclische Olefine umfassen $C_2-C_{40}$-α-Olefine und $C_4-C_{24}$-Diolefine, wie z.B. Ethylen, Propylen, 1-Buten, 1-Penten, 1-Hexen, 3-Methyl-1-buten, 3-Methyl-1-penten, 4-Methyl-1-penten, 4-Methyl-1-hexen, 4,4-Dimethyl-1-hexen, 4,4-Dimethyl-1-penten, 4-Ethyl-1-hexen, 3-Ethyl-1-hexen, 1-Octen, 1-Decen, 1-Dodecen, 1-Tetradecen, 1-Hexadecen, 1-Octadecen, 1-Eicosen und Mischungen dieser α-Olefine sowie 1,3-Butadien, Isopren, 1,3-Pentadien, 1,4-Hexadien, 1,4-Hexadien, 1,6-Heptadien, 1,6- und 1,7-Octadien, 1,8-Nonadien, 1,9-Decadien, 1,11-Dodecadien, 1,19-Eicodien und Mischungen dieser Diolefine. Auch Mischungen von α.Olefinen und Diolefinen sind geeignet.

Solche Olefine und Diolefine können weiterhin substituiert sein, beispielsweise mit Phenyl, substituiertem Phenyl, Halogen, der veresterten Carboxylgruppe, der Säureanhydridgruppe; Verbindungen dieser Art sind beispielsweise Chloropren, Styrol, Methylstyrol, Chlorstyrol, Fluorstyrol, Inden, 4-Vinyl-biphenyl, Vinyl-fluoren, Vinylanthracen, Methylmethacrylat, Ethylacrylat, Vinylsilan, Trimethylallylsilan, Vinylchlorid, Vinylidenchlorid, Tetrafluorethylen, Isobutylen, Vinylcarbazol, Vinylpyrrolidon, Acrylnitril, Vinylether und Vinylester. Weiterhin sind erfindungsgemäß ringöffnende Polyadditionen, etwa von Lactonen, wie ε-Caprolacton oder δ-Valerolacton, oder von Lactamen, wie ε-Caprolactam, möglich. Bevorzugte Monomere sind: Ethylen, Propylen. Buten, Hexen, Octen, 1,5-Hexadien, 1,6-Octadien, Methylmethacrylat, ε-Caprolacton, δ-Valerolacton und Acetylen.

Bevorzugt sind Ethylen und Propylen.

Das cyclische Monomer der Formeln (XIV) bzw. (XV) stellt einen molaren Anteil von 1 bis 100 % der Gesamtmolzahl aller eingesetzten Comonomere. Das α-Olefin stellt einen molaren Anteil von 99 bis 0 % der Gesamtmolzahl aller eingesetzter Comonomerer. Die bevorzugten Mengen von Cycloolefin zu α-Olefin betragen 20:80 mol-% bis 80:20 mol-%. Für den Fall, daß Cycloolefine sowohl der Formel (XIV) als auch der Formel (XV) eingesetzt werden, beträgt deren molares Verhältnis 10:90 mol-% bis 90:10 mol-%.

Das erfindungsgemäße Verfahren wird bei den oben angegebenen Temperaturen und Drücken in der Gas-, Masse-, Flüssig- oder in der Slurry-Phase durchgeführt, je nachdem, ob ein löslicher oder ein unlöslicher Katalysator

der oben beschriebenen Art eingesetzt wird. Die Flüssigphase bzw. die Slurry-Phase kann aus den Comonomeren allein, d.h. ohne Verwendung eines zusätzlichen Lösungsmittels, gebildet werden. Für den Fall, daß ein Lösungsmittel mitverwendet wird, kommen hierfür inerte Lösungsmittel, beispielsweise aliphatische oder cycloaliphatische Kohlenwasserstoffe, Benzin- bzw. Dieselölfraktionen (gegebenenfalls nach einer Hydrierung), Toluol, Chlorbenzol, o-Dichlorbenzol oder Chlornaphthalin in Frage. Bei Lösungsmittel mit niedrigem Siedepunkt kann durch Anlegen eines ausreichenden Reaktionsdruckes für die Einhaltung der flüssigen Phase gesorgt werden; diese Zusammenhänge sind dem Fachmann bekannt. Die Polymere können durch Nichtlösemittel, wie Methanol, ausgefällt oder umgefällt und dann getrocknet werden.

Solche (Co)Polymerisationen sind bekannt und dem Fachmann geläufig. Es ist ein Vorteil der erfindungsgemäßen π-Komplex-Verbindungen bzw. Metallocen-Verbindungen, daß sie durch Auswahl der Substituenten sowohl als lösliche, gegebenenfalls auf Trägern aufgebrachte, als auch als unlösliche π-Komplex-Verbindungen bzw. Metallocen-Verbindungen herstellbar sind. Lösliche π-Komplex-Verbindungen bzw. Metallocen-Verbindungen wird man z. B. für das Lösungsverfahren einsetzen; heterogene Metallocen-Verbindungen wird man z.B. in der Gasphase einsetzen Erfindungsgemäß kann diskontinuierlich oder bevorzugt kontinuierlich unter Einsatz eines oder mehrerer Reaktoren oder Reaktionszonen gearbeitet werden. Für den Fall mehrerer Reaktoren oder Reaktionszonen können unterschiedliche Polymerisationsbedingungen eingestellt werden.

Die erfindungsgemäß einzusetzenden π-Komplex-Verbindungen, besonders die Metallocen-Verbindungen, ermöglichen durch die Donor-Akzeptor-Brücke eine definierte Öffnung der beiden Cyclopentadienylgerüste in der Art eines Schnabels, wobei neben einer hohen Aktivität eine kontrollierte Molekulargewichtsverteilung und ein einheitlicher Einbau von Comonomeren gewährleistet sind. Infolge einer definierten schnabelartigen Öffnung ist auch Platz für voluminöse Monomere. Die hohe Einheitlichkeit in der Molekulargewichtsverteilung wird weiterhin aus dem einheitlichen und definierten Ort der durch Einschub (Insertion) erfolgenden Polymerisation wahlweise ermöglicht (Single Site Catalyst) und kann durch die Wahl der Polymerisationstemperatur eingestellt werden.

Die Molekulargewichtsverteilung kann gezielt verändert (verbreitert) werden, indem man gleichzeitig mehrere D/A-Katalysatoren einsetzt, um ein bestimmtes Material-Eigenschaftsprofil einzustellen. Dementsprechend ist es auch möglich, einen oder mehrere D/A-Katalysatoren in Kombination mit anderen Metallocenen, die keine D/A-Brücke aufweisen, einzusetzen.

Die D/A-Struktur kann eine Extra-Stabilisierung der Katalysatoren bis hin zu hohen Temperaturen bewirken, so daß die Katalysatoren auch im Hochtemperaturbereich eingesetzt werden können. Die mögliche thermische Dissoziation der Donor-Akzeptor-Bindung ist reversibel und führt durch diesen Selbstorganisations-Prozeß und Selbstreparatur-Mechanismus zu besonders hochwertigen Katalysatoreigenschaften.

Eine weitere wertvolle Eigenschaft der erfindungsgemäßen D/A-π-Komplex-Verbindungen, beispielsweise D/A-Metallocen-Verbindungen, besteht in der Möglichkeit zur Selbstaktivierung und damit einem Verzicht auf teure Cokatalysatoren, insbesondere im Falle von dianionischen

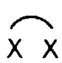 -Derivaten

Hierbei bindet das Akzeptoratom A in der geöffneten Form der D/A-π-Komplex-Verbindungen, beispielsweise D/A-Metallocen-Verbindung, einen X-Liganden, beispielsweise eine Seite eines Dianions unter Ausbildung einer zwitterionischen Metallocen-Struktur und erzeugt damit beim Übergangsmetall eine positive Ladung, während das Akzeptoratom A eine negative Ladung annimmt. Eine solche Selbstaktivierung kann intramolekular oder intermolekular erfolgen. Dies sei am Beispiel der bevorzugten Verknüpfung zweier X-Liganden zu einem Chelat-Liganden, nämlich des Butadiendiyl-Derivates, verdeutlicht:

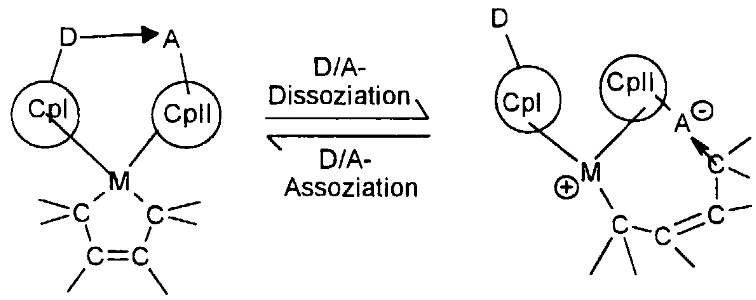


aktivierte Form

bzw.

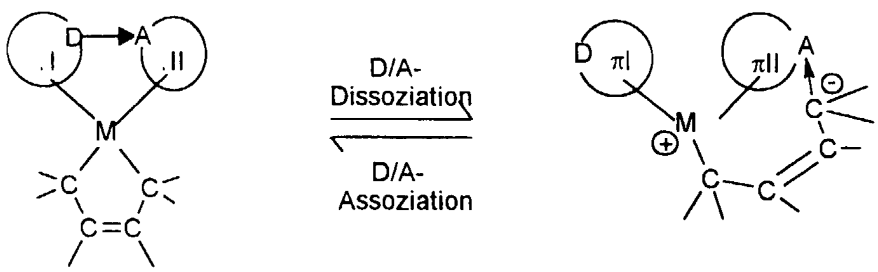


Die Bindungsstelle zwischen dem Übergangsmetall M und H oder substituiertem oder nicht substituierten C, im Formelbeispiel dem noch gebundenen substituierten C des gezeigten Butadiendiyl-Dianions, ist sodann der Ort für die Olefin-Insertion zur Polymerisation.

**Beispiele**

Alle Reaktionen wurden unter streng anaeroben Bedingungen und unter Verwendung von Schlenk-Techniken bzw. der Hochvakuumtechnik durchgeführt. Die verwendeten Lösungsmittel waren trocken und mit Argon gesättigt. Chemische Verschiebungen sind in ppm angegeben, relativ zum jeweiligen Standard: $^1$H(Tetramethylsilan), $^{13}$C (Tetramethylsilan), $^{31}$P(85%ige $H_3PO_4$), $^{11}$B(Bortrifluorid-Etherat-18,1 ppm). Negative Vorzeichen bedeuten eine Verschiebung zu höherem Feld.

**Beispiel 1** (Bis-(trimethylsilyl)-cyclopentadien, Verbindung 1)

14,7 g (0,106 mol) Trimethylsilyl-cyclopentadien (bezogen von Fa. Fluka) und 150 ml Tetrahydrofuran (THF) wurden in einen Reaktionskolben gegeben und auf 0°C abgekühlt. Hierzu wurden 47,4 ml einer Lösung von Butyllithium in n-Hexan (2,3 molar; Gesamtmenge 0,109 mol) tropfenweise während 20 Minuten zugefügt. Nach vollständiger Zugabe wurde die gelbe Lösung für eine weitere Stunde gerührt; danach wurde das Kältebad entfernt. Bei Raumtemperatur wurde die Lösung für eine weitere Stunde gerührt und danach auf -20°C abgekühlt. Dann wurden 14,8 ml (0,117 mol) Trimethylsilylchlorid tropfenweise während 10 Minuten zugegeben und das Reaktionsgemisch bei -10°C zwei Stunden gerührt. Danach wurde das Kältebad entfernt und die Reaktionslösung auf Raumtemperatur erwärmt und für eine weitere Stunde nachgerührt. Das Reaktionsgemisch wurde durch Celite filtriert; das Filter wurde mit Hexan gewaschen, und das Hexan wurde von den vereinigten Filtraten im Vakuum entfernt. Das Rohprodukt ergab bei einer Destillation bei 26°C unter 0,4 mbar 19 g reines Produkt der Verbindung 1 (85 % der theoretischen Ausbeute). Siedepunkt und NMR-Daten entsprechen den Literaturangaben (J. Organometallic Chem. 29 (1971), 227; ibid. 30 (1971), C 57; J. Am. Chem. Soc, 102, (1980), 4429, J. Gen. Chem. USSR, Eng. Transl. 43 (1973), 1970; J. Chem. Soc., Dalton Trans. 1980, 1156)
$^1$H-NMR (400 MHz, $C_6D_6$): δ = 6,74 (m,2H), 6,43 (m,2H), -0,04 (s,18H).

**Beispiel 2** (Trimethylsilyl-cyclopentadienyl-dichlorboran, Verbindung 2)

In einen Rundkolben, der mit einem Trockeneis-Kühlbad ausgerüstet war, wurden 16 g (0,076 mol) der Verbindung 1 gegeben. 8,9 g (0,076 mol) $BCl_3$ wurden bei -78°C in ein Schlenk-Rohr kondensiert und danach tropfenweise während einer Zeit von 5 Minuten in den Rundkolben gegeben. Die Reaktionsmischung wurde langsam während 1 Stunde auf Zimmertemperatur erwärmt und dann für weitere 2 Stunden auf 55 bis 60°C gehalten. Alle flüchtigen Verbindungen wurden im Vakuum (3 mm Hg = 4mbar) entfernt. Die anschließende Destillation bei 39°C und 0,012 mbar ergab 14,1 g der Verbindung 2 (85 % der theoretischen Ausbeute). Das $^1$H-NMR stimmt mit den Literaturangaben überein und zeigte, daß eine Reihe von Isomeren hergestellt worden waren (vgl. J. Organometallic Chem. 169 (1979), 327). $^{11}$B-NMR (64,2 MHz, $C_6D_6$): δ = +31,5.

**Beispiel 3** (Dichlorboranyl-cyclopentadienyl-titantrichlorid, Verbindung 3)

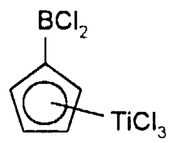

3

In ein 250 ml-Schlenk-Rohr wurden 11,4 g (0,052 mol) der Verbindung 2 und 100 ml Methylenchlorid ($CH_2Cl_2$) gegeben. Diese Lösung wurde auf -78°C gekühlt, und 9,8 g (5,6 ml, 0,052 mol) Titantetrachlorid wurden während 10 Minuten zugetropft. Die erhaltene rote Lösung wurde langsam auf Raumtemperatur erwärmt und während weiterer 3 Stunden gerührt. Das Lösungsmittel wurde im Vakuum entfernt, und man erhielt ein schmutzig-gelbes Produkt. 200 ml Hexan wurden zum rohen Feststoff gegeben, und die erhaltene gelbe Lösung wurde filtriert und über Nacht im Kühlschrank gekühlt, wobei 12,3 g (79 % der theoretischen Ausbeute) gelber Kristalle der Verbindung 3 erhalten wurden. Es sei darauf hingewiesen, daß in J. Organometallic Chem. 169 (1979), 373, 62 % der theoretischen Ausbeute erhalten wurde, wobei die Reaktion in einem Kohlenwasserstoff-Lösungsmittel, wie Petroleumether oder Methylcyclohexan ausgeführt wurde.
$^1$H-NMR (400 Mhz, $CD_2Cl_2$): δ = 7,53 (t, J = 2,6 Hz, 2H), 7,22 (t, J = 2,6 Hz, 2H) $^{11}$B-NMR (64,2 MHz, $CD_2Cl_2$): δ = +33.

**Beispiel 4** (Dimethylboranyl-cyclopentadienyl-titantrichlorid, Verbindung 4)

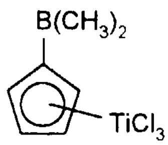

4

In einem Rundkolben wurden 2,37 g (0,0079 mol) der Verbindung 3 in 100 ml Hexan gelöst. Diese Lösung wurde auf 0°C gekühlt und tropfenweise mit 4 ml einer 2-molaren Lösung von Aluminiumtrimethyl in Toluol (0,008 mol) versetzt. Nach vollständiger Zugabe wurde das Kältebad entfernt und alle flüchtigen Anteile im Vakuum entfernt. Der verbleibende gelbe Feststoff wurde nunmehr in Pentan aufgelöst, feste Anteile wurden abfiltriert, und das klare Filtrat wurde auf -78°C abgekühlt, wobei 1,5 g (74 % der theoretischen Ausbeute) an Verbindung 4 erhalten wurden. Es sei angemerkt, daß in J. Organometallic Chem. 169 (1979), 373 eine Ausbeute von 87 % der theoretischen Ausbeuten angegeben werden, wobei Tetramethylzinn als Alkylierungsmittel verwendet wurde; es war jedoch nicht möglich, die Verbindung 4 frei vom entstehenden Trimethylzinnchlorid zu erhalten.
$^1$H-NMR (400 Mhz, $CD_2Cl_2$): δ = 7,48 (t, J = 2,5 Hz, 2H), 7,23 (t, J = 2,5 Hz, 2H), 1,17 (s, 6H) $^{11}$B-NMR (64,2 MHz, $CD_2Cl_2$): δ = +56.

**Beispiel 5** (Diphenylphosphin-cyclopentadienyl-lithium, Verbindung 6)

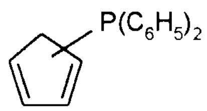

5

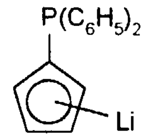

6

50 g (0,186 mol) Cyclopentadienyl-thallium (bezogen von Fa. Fluka) wurden gemeinsam mit 300 ml Diethylether in einen 500 ml-Kolben eingefüllt. Die Aufschlämmung wurde auf 0°C gekühlt und 34,2 ml (0,186 mol) Diphenylchlorphosphin innerhalb von 10 Minuten zugetropft. Die Aufschlämmung wurde danach auf Zimmertemperatur angewärmt und während einer Stunde gerührt und schließlich durch eine Fritte filtriert. Das Lösungsmittel wurde sodann im Vakuum abgezogen und hinterließ 39,5 g (85 % der theoretischen Ausbeute) des Zwischenproduktes Diphenylphosphino-cyclopentadien, Verbindung 5. Ein Anteil von 18,6 g (0,074 mol) der Verbindung 5 wurde sodann mit Toluol verdünnt und auf 0°C abgekühlt. Zu dieser Lösung wurden 33,2 ml einer 2,24-molaren Lösung von Butyl-lithium in Hexan (0,074 mol) während 10 Minuten zugegeben. Nach dem Anwärmen auf Raumtemperatur und nach Rühren während 2 Stunden ergab die gelbe Lösung einen Niederschlag, der filtriert und mit Toluol und anschließend mit Hexan gewaschen wurde. Nach dem Trocknen im Vakuum wurden 13,2 g der Verbindung 6 (70 % der theoretischen Ausbeute) als bräunliches Pulver erhalten (vgl. J. Am. Chem. Soc. 105 (1983); 3882; Organometallics 1 (1982), 1591).
$^1$H-NMR (400 MHz, $d_8$THF): δ = 7,3 (m, 4H), 7,15 (m, 6H), 5,96 (m, 2H), 5,92 (m, 2H), $^{31}$P-NMR (161,9 MHz, $d_8$THF): δ = -20.

**Beispiel 6** (($(C_6H_5)_2P{\rightarrow}B(CH_3)_2$-verbrücktes Bis-(cyclopentadienyl)-titandichlorid, Verbindung 7)

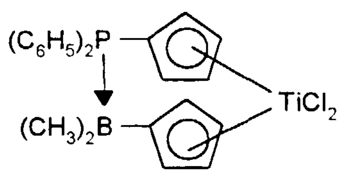

7

In einen Rundkolben wurden 0,36 g (0,00139 mol der Verbindung 6 und 20 ml Toluol gegeben. Die entstehende Lösung wurde auf -20°C gekühlt und eine Lösung von 0,36 g (0,00139 mol) der Verbindung 4 in 20 ml Toluol während 20 Minuten zugetropft. Nach Beendigung des Zutropfens wurde die Lösung innerhalb von 2 Stunden auf Raumtemperatur erwärmt und bei dieser Temperatur für eine zusätzliche Stunde gerührt. Unlösliches Material wurde über eine Fritte entfernt, und das Lösungsmittel wurde im Vakuum abdestilliert. Der rote ölige Feststoff wurde dann mit Hexan gewaschen, das abdekantiert wurde, und der Feststoff wurde erneut im Vakuum getrocknet. Dabei erhielt man 0,28 g (42 % der theoretischen Ausbeute) der Verbindung 7 als rotes Pulver.
$^1$H-NMR (300 MHz, $CD_2Cl_2$): δ = 7,6 - 7,3 (br, m, 10H), 6,92 (m, 2H), 6,77 (m, 4H), 6,60 (m, 2H), 0,29 (d, $J_{PH}$ = 19 Hz, 6H); $^{31}$P-NMR (161,9 MHz, $CD_2Cl_2$): δ = 17,1 (br); $^{11}$B-NMR (64,2 MHz, $CD_2Cl_2$); δ = -29 (br).

**Beispiel 7** (Tributylstannyl-diphenylphosphino-inden, Verbindung 8)

10 g (0,086 mol) Inden wurden in einen Rundkolben gegeben, mit 200 ml Diethylether verdünnt und auf -20°C gekühlt. Zu dieser Lösung wurden 36 ml einer 2,36-molaren Lösung von Butyl-lithium (0,085 mol) in n-Hexan gegeben, wobei die Lösung sofort eine gelbe Farbe annahm. Das Kältebad wurde entfernt, und man ließ das Reaktionsgemisch auf Raumtemperatur erwärmen und rührte das Reaktionsgemisch während einer weiteren Stunde. Danach wurde das Reaktionsgemisch wieder auf 0°C abgekühlt, und 19 g (15,9ml, 0,086mol) Diphenylchlorphosphin wurden unter Bildung

eines Niederschlags zugegeben. Das Kältebad wurde wieder entfernt, und die Lösung konnte sich auf Zimmertemperatur erwärmen, während für eine weitere Stunde nachgerührt wurde. Die Lösung wurde dann erneut auf -20°C gekühlt, und 36 ml (0,085 mol) Butyl-lithium in n-Hexan wurden zugetropft. Nach beendeter Zugabe wurde das Kältebad wieder entfernt, und die Temperatur stieg auf Raumtemperatur; die Lösung wurde für weitere 1,5 Stunden nachgerührt. Die Aufschlämmung wurde dann wiederum auf 0°C gekühlt und 28 g (0,086 mol) Tributylzinnchlorid wurden tropfenweise zugefügt. Die erhaltene Aufschlämmung wurde auf Raumtemperatur erwärmt und für weitere 1,5 Stunden gerührt, danach durch eine Fritte filtriert und das Lösungsmittel im Vakuum entfernt. Es hinterblieben 46,9 g der Verbindung 8 (92 % der theoretischen Ausbeute) als ein schweres gelbes Öl.

$^1$H-NMR (400 MHz, $CDCl_3$): δ = 7,5 - 7,3 (m,6H), 7,28 (br s,6H), 7,14 (pseudo-d t, 7,3 Hz/1,0 Hz, 1H), 7,08 (t, J = 7,3 Hz, 1H), 6,5 (br m, 1H), 4,24 (br s, 1H), 1,4 - 1,25 (m, 6H), 1,25 - 1,15 (m,6H), 0,82 (t, J = 7,2 Hz, 9H), 0,53 (t, J = 8 Hz, 6H), $^{31}$P-NMR (161,9 MHz, $CDCl_3$): δ = -20,6.

**Beispiel 8** (Diphenylphosphino-indenyl-zirkoniumtrichlorid, Verbindung 9)

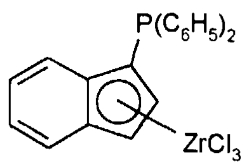

9

Eine Lösung von 37 g (0,0628 mol) der Verbindung 8 in 300 ml Toluol wurde während 3 Stunden zu einer Aufschlämmung von 14,6 g $ZrCl_4$ (99,9 %ig, 0,0628 mol, bezogen von Fa. Aldrich) in 100 ml Toluol bei Raumtemperatur gegeben. Die Lösung wurde sofort rot und ging langsam in orange und schließlich in gelb über. Nach 4-stündigem Nachrühren wurde der gelbe Niederschlag abfiltriert und mit Toluol und dann mit Hexan gewaschen. Der Feststoff wurde im Vakuum getrocknet und ergab 15,3 g (50 % der theoretischen Ausbeute) der Verbindung 9 als ein frei fließendes gelbes Pulver. Die Ausbeute ließ sich ohne weiteres auf über 70 % steigern, wenn man bei tieferer Temperatur arbeitete, z.B. 30 min bei -30°C und 5 Stunden bei 0°C. Das Produkt konnte weiter gereinigt werden, indem man restliche Zinnverbindung unter Benutzung von Pentan in einem Soxhlet-Extraktor auswusch (Extraktionszeit: 8 Stunden).

**Beispiel 9** ($(C_6H_5)_2P$-$BCl_2$-verbrücktes Indenyl-cyclopentadienyl-zirkoniumdichlorid, Verbindung 10)

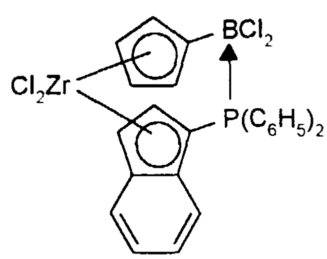

10

In ein Schlenk-Rohr wurden 4,43 g (0,0089 mol) der gereinigten Verbindung 9 und 100 ml Toluol gegeben. Zu dieser Aufschlämmung wurden 1,95 g (0,0089 mol) der Verbindung 2 gegeben. Die gelbe Aufschlämmung wurde während 6 Stunden bei Raumtemperatur gerührt; während dieser Zeit bildete sich ein blaßweißer Niederschlag. Dieser Niederschlag (4,1 g, 75 % der theoretischen Ausbeute) wurde durch Filtration gewonnen und als im wesentlichen reines Material befunden.

$^1$H-NMR (500 MHz, $CD_2Cl_2$): δ = 7,86 (pseudo ddd, J = 8,5/2,5/1 Hz, 1H), 7,75 - 7,55 (m,10H), 7,35 (pseudo ddd, J = 8,5/6,9/0,9 Hz, 1H), 7,32 (br t, J = 3,1 Hz, 1H), 7,22 (pseudo ddd, J = 8,8/6,8/1,1 Hz, 1H), 7,06 (pseudo ddd, J =

3,4/3,4/0,8 Hz, 1H), 6,92 (m,1H), 6,72 (m, 1H), 6,70 (br m, 1H), 6,61 (pseudo q, J = 2,3 Hz, 1H), 6,53 (br d, 8,7 Hz, 1H); $^{31}$P-NMR (161,9 MHz, $CD_2Cl_2$): δ = 6,2 (br, m); $^{11}$B (64,2 MHz, $CD_2Cl_2$): δ = -18 (br).

**Beispiel 10** (($(C_6H_5)_2$P-B$(CH_3)_2$-verbrücktes Indenyl-cyclopentadienyl-zirkoniumdichlorid, Verbindung 11)

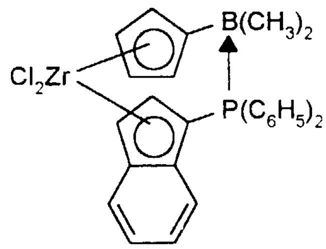

11

Zu 1,5 g (0,00247 mol) Verbindung 10 aus Beispiel 9 wurden 50 ml Toluol gegeben. Die Aufschlämmung wurde auf 0°C gekühlt, und 1,2 ml einer 2-molaren Lösung von Trimethylaluminium in Hexan (0,0024 mol) wurden während 5 Minuten dazu getropft. Nach vollständiger Zugabe wurde das Kühlbad entfernt, und die Lösung konnte sich auf Raumtemperatur erwärmen, während für 2 Stunden weiter gerührt wurde. Der restliche Niederschlag wurde abfiltriert und das Lösungsmittel vom Filtrat im Vakuum abgezogen, wobei 0,37 g (26 % der theoretischen Ausbeute) der Verbindung 11 als ein bräunlicher Feststoff zurückblieben.
$^{31}$P-NMR (161,9 MHz, $CD_2Cl_2$): δ = 14,6; $^{11}$B-NMR (64,2 MHz, $CD_2Cl_2$): δ= -28

**Beispiel 11** (Trimethylsilyl-inden, Verbindung 12)

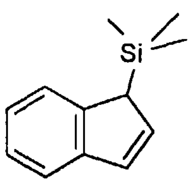

12

In einen Rundkolben, der 100 ml THF enthielt und auf 0°C gekühlt war, wurden 25 ml Inden (0,213 mol, über $CaH_2$ im Vakuum destilliert) gegeben. 94 ml einer 2,3-molaren Lösung von Butyl-lithium in Hexan (0,216 mol) wurden während 20 min zugegeben. Nach vollständiger Zugabe wurde 20 min lang gerührt, dann auf Raumtemperatur erwärmt und weitere 30 min gerührt. Nach Abkühlung auf -20°C wurden 27,5 ml (0,216 mol) Trimethylchlorsilan zugetropft, wobei eine leicht trübe orangefarbene Lösung entstand. Nach 1 h Rühren bei -10°C und 1,5 h bei 0°C wurde auf Raumtemperatur erwärmt und das Lösungsmittel im Vakuum entfernt. Nach erneuter Auflösung in Hexan wurde LiCl abfiltriert und das Hexan im Vakuum entfernt. Destillation des Produktes (0,045 mbar, 58 bis 60°C) ergab 26,6 g (66 % der theoretischen Ausbeute) 12.
$^{1}$H-NMR (400 MHz, $CDCl_3$): δ = 7,49 (t, J = 7,6 Hz, 1 H), 7,28 (ddd, J = 7,3/7,2/1 Hz, 1 H), 7,21 (ddd, J = 7,3/7,3/1,1 Hz, 1 H), 6,96 (dd, J = 5,6/1,2 Hz, 1 H), 6,69 (dd, J = 5,3/1,8 Hz, 1 H), 3,56 (s, 1 H), 0,0 (s, 9 H).

**Beispiel 12** (Bis-(trimethylsilyl)-inden, Verbindung 13)

25,4 g (0,135 mol) der Verbindung 12 wurden in einen Rundkolben gegeben, der 100 ml THF enthielt und auf 0°C gekühlt war. 59 ml einer 2,3-molaren Lösung von Butyl-lithium in Hexan (0,136 mol) wurden während 20 min zugegeben. Nach vollständiger Zugabe wurde 20 min gerührt und dann auf Raumtemperatur erwärmt. Nach 30 min Rühren wurde auf -20°C gekühlt, und es wurden 17,3 ml Trimethylchlorsilan (0,136 mol) zugetropft, wobei eine leicht trübe orangefarbene Lösung entstand. Es wurde 1 h bei 0°C und 1 h bei Raumtemperatur gerührt und dann das

Lösungsmittel im Vakuum entfernt. Nach Wiederauflösung in Hexan wurde LiCl abfiltriert und das Hexan im Vakuum entfernt. Man erhielt 32 g (90 % der theoretischen Ausbeute) von 13 als Öl. Vergl. J. Organometal. Chem. 23 (1970), 407; dort Hexan statt THF.
$^1$H-NMR (400 MHz, $CDCl_3$): δ = 7,62 (d, J = 7,6 Hz, 1 H), 7,52 (d, J = 7,5 Hz, 1 H), 7,23 (ddd, J = 7,35/7,3/0,9Hz, 1 H), 6,9 (d, J = 1,7 Hz, 1 H), 3,67 (d, J = 1,6 Hz, 1 H), 0,38 (s, 9 H), 0,0 (s, 9 H).

**Beispiel 13** (Trimethylsilyl-dichlorboranyl-inden, Verbindung 14)

In ähnlicher Weise wie zur Herstellung von Verbindung 2 wurden 12,3 g (0,047 mol) Verbindung 13 in einen Rundkolben gegeben, der auf -30°C gekühlt war und einen mit Trockeneis gekühlten Rückflußkühler hatte. Hierzu wurden 5,6 g (0,046 mol) $BCl_3$ gegeben. Nach vollständiger Zugabe wurde das Kühlbad entfernt, und das Reaktionsgemisch erwärmte sich auf Raumtemperatur und wurde 3 h gerührt. Die Temperatur wurde dann 6 h lang auf 55°C angehoben. Nach Abkühlung und Entfernung der flüchtigen Anteile im Vakuum wurde das Rohprodukt erhalten. Destillation unter Hochvakuum lieferte das gereinigte Produkt, dessen Hauptisomer wie folgt identifiziert wurde:
$^1$H-NMR (200 MHz, $CDCl_3$): δ = 8,3 (d, J = 7 Hz, 1 H), 8,1 (d, J = 1,8 Hz, 1H), 7,5 (dd, J = 7,0/1,2Hz, 1 H), 7,4 (m, 3 H), 4,0 (d, J = 1,8 Hz, 1 H), 0,1 (s, 9 H); $^{11}$B (64,2 MHz, $CD_2Cl_2$): δ = 38 (br).

**Beispiel 14** ($(C_6H_5)_2P$-$BCl_2$-verbrücktes Bis-(indenyl)-zirkoniumdichlorid, Verbindung 15)

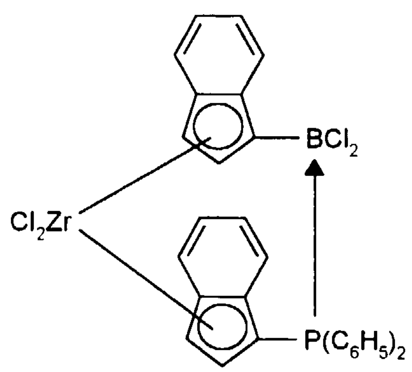

meso-15

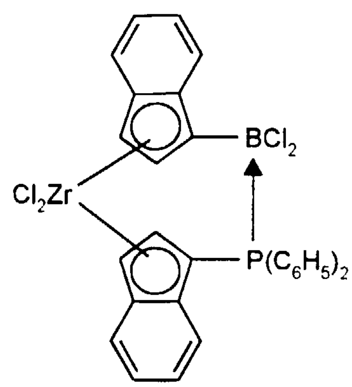

rac-15

Zu einer Aufschlämmung von 8,3 g von Verbindung 9 (0,017 mol) in 200 ml Toluol wurden 4,5 g der Verbindung 14 (0,017 mol) gegeben; das Gemisch wurde auf 50°C erwärmt und 5h gerührt. Nach Abkühlen und Filtration wurden 200ml Hexan zugegeben, worauf aus der klaren gelben Lösung ein Niederschlag ausfiel, der filtriert und im Vakuum getrocknet wurde. Das Produkt wurde als meso-Isomer von 15 gemäß seiner Röntgenanalyse identifiziert. Die P B-Bindungslänge der Brücke wurde zu 2,01 bestimmt. Durch Konzentration der Toluol/Hexan-Lösung auf etwa 10 ml und weitere Zugabe von 200 ml Hexan erhielt man einen zweiten Niederschlag, der als das racemische Isomer von 15 bestimmt wurde.

**Beispiel 15** (N,N-Dimethyl-O-(methylsulfonyl)-hydroxylamin, Verbindung 16)

$$(CH_3)_2NOSO_2CH_3 \qquad \underline{16}$$

9,0 g N,N-Dimethyl-O-hydroxylamin-hydrochlorid (0,092 mol) wurden in 70 ml $CH_2Cl_2$ suspendiert, das 20 g Triethylamin (0,2 mol) enthielt, und auf -10°C gekühlt. 9,5 g Methylsulfonylchlorid (0,083 mol), gelöst in 70 ml $CH_2Cl_2$, wurden langsam zur gekühlten Suspension getropft. Nach vollständiger Zugabe wurde 1 h nachgerührt. Danach wurde Eiswasser zum Reaktionsgemisch gegeben und die organische Phase abgetrennt. Das übriggebliebene Wasser wurde mit Ether gewaschen. Waschether und die $CH_2Cl_2$-Fraktion wurden vereinigt, über $Na_2SO_4$ getrocknet, und die Lö-

sungsmittel wurden im Vakuum bei -10°C entfernt. Es hinterblieben 5,9 g (46 % der theoretischen Ausbeute) an Verbindung 16 als Öl, das bei -20°C aufbewahrt wurde.Vgl. Angew. Chem., Int. Ed. Engl. 17 (1978), 687.
$^1$H-NMR (400 MHz, $CDCl_3$): δ = 3,03 (s, 3H), 2,84 (s, 6H).

**Beispiel 16** (N,N-Dimethylamino-cyclopentadienyl-lithium, Verbindung 17)

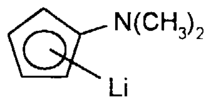

17

Eine Lösung von 3 g Cyclopentadienyl-lithium (0,042 mol) in 30 ml THF wurde bei -30°C langsam zu einer Lösung von 5,9 g der Verbindung 16 (0,042 mol) in 20 ml THF gegeben. Das Gemisch wurde dann auf -20°C erwärmt und 30 min gerührt. Dann wurde Hexan zugegeben und die Lösung filtriert. Danach wurden 1,8 ml einer 2,3-molaren Lösung von Butyl-lithium (0,042 mol) in Hexan bei -20°C zugesetzt, wodurch ein Niederschlag entstand. Der Niederschlag wurde abfiltriert und 2 mal mit je 20 ml Hexan gewaschen. Nach Trocknung im Vakuum erhielt man 2,0 g (40 % der theoretischen Ausbeute) der Verbindung 17 als weißes Pulver.Vgl. Angew. Chem., Int. Ed. Engl. 19 (1980), 1010.
$^1$H-NMR (400 MHz, THF): δ = 5,34 (br d, J = 2,2 Hz, 2H), 5,15 (br d, J = 2,2 Hz, 2H), 2,56 (s, 6H).

**Beispiel 17** ($(CH_3)_2N\ B(CH_3)_2$-verbrücktes Bis-(cyclopentadienyl)-titandichlorid, Verbindung 18)

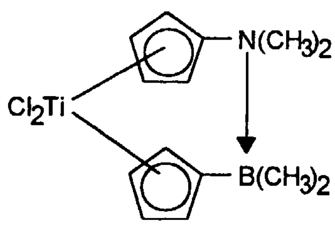

18

Eine Lösung von 0,18 g der Verbindung 4 (0,7 mmol) in 10 ml Toluol wurde bei -20°C während 10 min zu einer Suspension von 0,081g der Verbindung 17 (0,7 mmol) in 10 ml Toluol gegeben, wobei eine tiefrote Lösung entstand. Nach Anwärmen auf Raumtemperatur während 2h wurde die Lösung filtriert und das Lösungsmittel im Vakuum entfernt. Nach Wiederauflösung des entstandenen roten Pulvers in 10 ml warmen Toluol und Abfiltrieren von unlöslichem Material wurde die Lösung über Nacht im Kühlschrank aufbewahrt, wobei sich 0,1g (43% der theoretischen Ausbeute) als rote Nadeln bildeten.
$^1$H-NMR (400 MHz, $CD_2Cl_2$): δ = 6,85 (t, J = 2,3 Hz, 2H), 6,15 (t, J = 2,3 Hz, 2H), 6,1 (t, J = 2,8 Hz, 2H), 5,57 (t, J = 2,8 Hz, 2H), 1,98 (s, 6H), 0,35 (s, 6H); $^{11}$B-NMR (64,2 MHz, $CD_2Cl_2$): δ = 2,8 (br).

**Beispiel 18** (Tributylstannyl-diisopropylphosphine-inden, Verbindung 19)

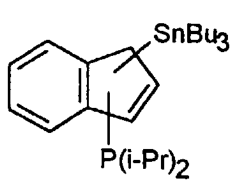

19

In einen Rundkolben, der 3,8 g (0,033 mol) Inden enthielt, wurden 100 ml Ether gegeben; es wurde auf -20°C gekühlt. Zu dieser Lösung wurden 14,4 ml einer 2,3 molaren Lösung von Butyl-lithium in Hexan (0,033 mol) innerhalb 5 Minuten gegeben, wobei eine gelbe Lösung entstand. Nach Entfernung des Kältebades wurde die Lösung auf Raumtemperatur erwärmt und 1,5 h nachgerührt. Danach wurde das Reaktionsgemisch auf 0°C abgekühlt und 5,0 g Chlordiisopropylphosphin (0,033 mol) zugegeben, wodurch ein Niederschlag entstand. Nach Entfernung des Kältebades wurde die Lösung auf Raumtemperatur erwärmt und 1 h gerührt. Danach wurde die Lösung auf -20°C gekühlt und 14,4 ml einer 2,3 molaren Lösung von Butyl-lithium in Hexan (0,033 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 10,1 g Chlortributylzinn (0,031 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 16.6 g der Verbindung 19 (Ausbeute: 97 %) als schweres gelbes Öl übrigblieben. Zwei Isomere wurden in einem Verhältnis von 1,5:1 erhalten. Das Hauptisomer wurde wie folgt identifiziert: $^{1}H$ NMR (400 MHz, $CD_2Cl_2$) δ 7,71 (d, J = 7,2 Hz, 1 H), 7,41 (d, J= 7,3 Hz, 1 H), 7,13 (m, 2 H), 6,96 (m, 1 H), 4,28 (s mit Sn Satelliten, 1 H), 2,21 (m, 1 H), 1,54 (m, 1 H), 1,45 - 0.65 (m, 39 H). $^{31}P$ NMR (161,9 MHz, $CD_2Cl_2$) δ - 11,3 ppm. Das Nebenisomer wurde wie folgt identifiziert: $^{1}H$ NMR (400 MHz, $CD_2Cl_2$) δ 7,6 (d, J = 7,4 Hz, 1 H), 7,46 (d, J = 7,2 Hz, 1 H), 7, 26 (t, J = 7,5 Hz, 1 H), 7,1 (m, 1 H), 6,71 (m, 1 H), 3,48 (m, 1 H), 2,21 (m, 1 H), 1,54 (m, 1 H), 1,45 - 0,65 (m, 39 H). $^{31}P$ NMR (161,9 MHz, $CD_2Cl_2$) d -11,5 ppm.

**Beispiel 19** (Diisopropyiphosphino-indenyl-zirkoniumtrichlorid, Verbindung 20)

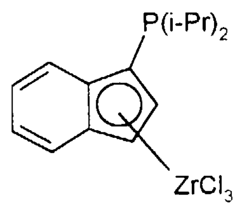

20

Eine Lösung von 15,0 g der Verbindung 19 (0,029 mol) in 50 ml Toluol wurde zu einer Aufschlämmung von 6,7 g (0,029 mol) 99,9 %igem $ZrCl_4$ in 300 ml Toluol bei - 78°C gegeben. Nach vollständiger Zugabe wurde das Reaktionsgemisch 0,5 h bei -30°C und anschließend 4 h bei 0°C gerührt. Der entstehende gelbe Niederschlag wurde abfiltriert und mit Toluol und Hexan gewaschen. Die Feststoffe wurden i. Vak. getrocknet, wobei 8,8 g der Verbindung 20 (Ausbeute: 71 %) als freifließendes gelbes Pulver übrigblieben. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt. Wegen der Unlöslichkeit der entstehenden Verbindung wurde kein $^{1}H$ NMR erhalten.

**Beispiel 20** (Diisopropylphosphino-dichlorboranyl-verbrücktes Indenyl-cyclopentadienyl-zirkonium-dichlorid, Verbindung 21)

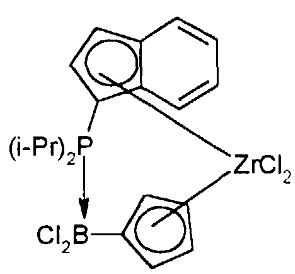

21

In ein Schlenk-Rohr wurden 0,52 g (0,0012 mol) der Verbindung 20 und 30 ml Toluol gegeben. 0,27 g (0,0012) mol der Verbindung 2 wurden innerhalb 5 Minuten zu dieser Aufschlämmung gegeben. Die gelbe Aufschlämmung wurde 3 h bei Raumtemperatur gerührt, wobei eine leicht trübe Lösung übrigblieb. Der Niederschlag wurde durch Filtration entfernt, wobei eine hellgelbe Toluollösung übrigblieb. Nach Entfernung des Toluols i. Vak. blieb das Produkt als weißlicher Feststoff in einer Menge von 0,47 g (Ausbeute: 87 %) übrig. $^1$H NMR (400 MHz, $CD_2Cl_2$) δ 7,84 (pseudo dd, J = 8,5, 0,8 Hz, 1 H), 7,73 (d, J = 8,8 Hz, 1 H), 7,5 (pseudo dt, J = 7,8, 0,8 Hz, 1 H), 7,38 (m, 2 H), 6,98 (m, 1 H), 6,67 (m, 1 H), 6,64 (m, 1 H), 6,54 (m, 1 H), 6,29 (m, 1 H), 3,39 (Septett, J = 7,1 Hz, 1 H), 2,94 (m, 1 H), 1,68 (dd, $J_{H-P}$ = 18,1 Hz, J = 7,2 Hz, 3 H), 1,64 (dd, $J_{H-P}$ = 17,4, J = 7,2 Hz, 3 H), 1,45 (dd, $J_{H-P}$ = 15 Hz, J = 7,2 Hz, 3 H), 1,33 (dd, $J_{H-P}$ = 14,6 Hz, J = 7,3 Hz, 3 H) $^{31}$ P NMR (161,9 MHz, $CD_2Cl_2$) δ 23,1 (br, m); $^{11}$B (80 MHz, $CD_2Cl_2$) δ - 14,8 (br d, J = 110 Hz).

**Beispiel 21** (Tributylstannyl-dimethylphosphino-inden, Verbindung 22)

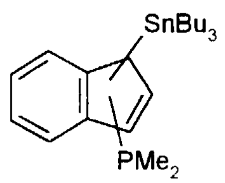

22

In einen Rundkolben, der 5,5 g (0,047 mol) Inden enthielt, wurden 150 ml Ether gegeben; es wurde auf -20°C abgekühlt. Zu dieser Lösung wurden 20,8 ml einer 2,3 molaren Lösung von Butyl-lithium in Hexan (0,048 mol) innerhalb 5 min gegeben, wobei eine gelbe Lösung entstand. Nach Entfernung des Kältebades wurde die Lösung auf Raumtemperatur erwärmt und 1 h nachgerührt. Nach Abkühlung des Reaktionsgemisches auf - 30°C wurden 4,6 g Chlordimethylphosphin (0,048 mol) in 30 ml Ether innerhalb 20 min zugegeben, wobei ein Niederschlag entstand. Nach 2-stündigem Rühren bei - 20°C wurden 20,8 ml einer 2,3 molaren Lösung von Butyl-lithium in Hexan (0,048 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 15,6 g Chlortributylzinn (0,048 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 17,4 g der Verbindung 22 (Ausbeute: 78 %) als schweres gelbes Öl übrigblieben. $^1$H NMR (400 MHz, $CD_2Cl_2$) δ 7,67 (d, J = 7,5 Hz, 1 H), 7,47 (d, J = 7,4 Hz, 1 H), 7,18 (m, 2 H), 6,83 (m, 1 H), 4,28 (s mit Sn-Satelliten, 1 H), 1,43 - 0,78 (m, 33 H). $^{31}$P NMR (161,9 MHz, $CD_2Cl_2$) δ - 61,6 ppm.

**Beispiel 22** (Dimethylphosphino-indenyl-zirconiumtrichlorid, Verbindung 23)

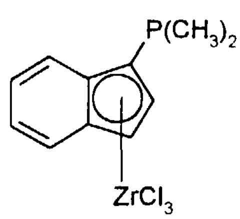

23

Zu einer Aufschlämmung von 8,5 g (0,036 mol) 99,9 %igem $ZrCl_4$ in 200 ml Toluol wurde eine Lösung von 17,0 g der Verbindung 22 (0,037 mol) in 50 ml Toluol bei -78°C gegeben. Nach vollständiger Zugabe wurde das Reaktionsgemisch 0,5 h bei -30°C und danach 4 h bei 0°C gerührt. Der entstehende gelbe Niederschlag wurde abfiltriert und mit Toluol und Hexan gewaschen. Die Feststoffe wurden in Vak. getrocknet, wobei 8,3 g der Verbindung 23 (Ausbeute: 61 %) als freifließendes gelbes Pulver übrigblieb. Das Pulver wurde durch Entfernung der verbliebenen Zinnverbindungen mittels Extraktion mit unter Rückfluß geführtem Toluol über einen Zeitraum von 3 h bei 30 mm Hg und

danach mit Pentan über einen Zeitraum von 2 h in einem Soxhlet-Extraktor weitergereinigt, wobei 7,2 g (Ausbeute: 53 %) des Produktes übrigblieben. Wegen der Unlöslichkeit dieser Verbindung wurde kein $^{1}H$ NMR erhalten.

**Beispiel 23** (Dimethylphosphino-dichlorboranyl-verbrücktes Indenyl-cyclopentadienyl-zirconiumdichlorid, Verbindung 24)

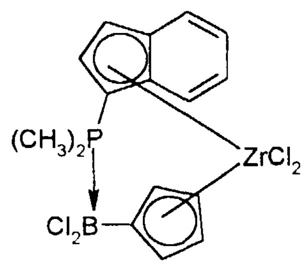

24

In ein Schlenk-Rohr wurden 30 ml Toluol und 0,55 g der Verbindung 23 (0,0015 mol) gegeben. Zu dieser Aufschlämmung wurden 0,31 g (0,0014 mol) der Verbindung 2 innerhalb 5 min gegeben. Die gelbe Aufschlämmung wurde 6,5 h bei Raumtemperatur gerührt, wobei eine leicht trübe Lösung verblieb. Der Niederschlag wurde durch Filtration entfernt, wobei eine hellgelbe Toluollösung übrigblieb. Nach Entfernung des Toluols i. Vak. verblieb das Produkt als weißlicher Feststoff. Nachdem das Produkt mit Hexan gewaschen und i. Vak. getrocknet wurde, blieb die Verbindung 24 als blaßweißer Feststoff (0,54 g; Ausbeute: 76%) übrig. $^{1}H$ NMR (400 MHz, $CD_2Cl_2$) $\delta$ 7,84 (pseudo dd, J = 7,4 Hz 1,0 Hz, 1 H), 7,60 (m, 2 H), 7,51 (m, 1 H), 7,38 (m, 1 H), 6,93 (m, 1 H), 6,71 (m, 1 H), 6,66 (m, 1 H), 6,49 (m, 1 H), 6,30 (br s, 1 H), 2,11 (d $J_{H-P}$ = 11,9 Hz, 3 H), 1,94 (d, $J_{H-P}$ = 11,9 Hz, 3 H). $^{31}P$ NMR (161, 9 MHz, $CD_2Cl_2$) - 5,9 (br, m); $^{11}B$ (80 MHz, $CD_2Cl_2$) $\delta$ - 14,6 (br d, $J_{B-P}$ = 126 Hz).

**Beispiel 24** (2-Methylinden, Verbindung 26)

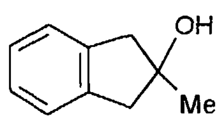

25

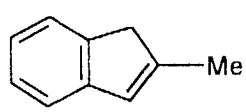

26

In einen Rundkolben wurden 38,7 g (0,29 mol) 2-Indanon und 300 ml Ether gegeben. In einen zweiten Kolben wurden 96,7 ml einer 3,0 molaren Lösung von $CH_3MgI$ in Ether (0,29 mol), die mit 150 ml Ether verdünnt war, gegeben. Danach wurde die 2-Indanon-Lösung zu der $CH_3MgI$-Lösung über eine Kanüle in einer solchen Menge gegeben, daß der Rückfluß aufrechterhalten wurde, wobei ein Niederschlag entstand. Nach vollständiger Zugabe wurde die Aufschlämmung weitere 4 h unter Rückfluß geführt und auf 0°C abgekühlt, wonach 100 ml einer gesättigten Lösung von $NH_4Cl$ langsam zugegeben wurden. Das Produkt wurde mit Ether extrahiert und über $MgSO_4$ getrocknet. Nach Entfernung des Lösungsmittels i. Vak wurden 30,1 g (Ausbeute: 70 %) 2-Methyl-2-indanol (Verbindung 25) als öliger Feststoff erhalten. $^{1}H$ NMR (400 MHz, $CDCl_3$) $\delta$ 7,15 (br m, 4 H), 3,01 (s, 2 H), 2,99 (s, 2 H), 1,5 (s, 3 H); OH variabel.

In einen Rundkolben mit einem Dean-Stark-Auffanggefäß wurden 25,5 g (0,17 mol) der Verbindung 25, 3,2 g (0,017 mol) *p*-Toluolsulfonsäure und 500 ml Hexan gegeben. Diese Aufschlämmung wurde 3 h unter Rückfluß gehalten. Nach Abkühlung wurde die Hexanfraktion von den unlöslichen Produkten dekantiert und das Lösungsmittel i. Vak. entfernt, wobei ein Öl übrigblieb, das anschließend in einer kurzen Destillationskolonne bei 45°C und 0,03 mbar destilliert wurde, wodurch 15 g (Ausbeute: 68 %) der Verbindung 26 erhalten wurden, $^{1}H$ NMR (400 MHz, $CDCl_3$) $\delta$ 7,33 (d, J = 7,6 Hz, 1 H), 7,21 (m, 2 H), 7,06 (pseudo d t, J = 7,2, 1,4 Hz, 1 H), 6,45 (br s, 1 H), 3,25 (s, 2 H), 2,12 (s, 3 H).

Es wird verwiesen auf:

1. Morrison, H.; Giacherio, D.J. Org. Chem. 1982, 47, 1058.
2. Ready, T. E.; Chien, J. C. W.; Rausch, M. D.J. Organom. Chem. 519, 1996, 21.
3. Wilt, Pawlikowki, Wieczorek, J. Org. Chem. 37, 1972, 824.

**Beispiel 25** (Tributylstannyl-diisopropylphosphino-2-methylinden, Verbindung 27)

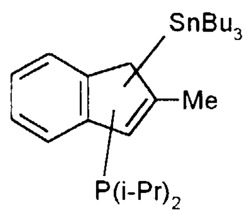

27

In einen Rundkolben, der 5,08 g (0,039 mol) 2-Methylinden 26 enthielt, wurden 150 ml Ether gegeben; es wurde auf -20°C abgekühlt. Zu dieser Lösung wurden 17,0 ml einer 2,3-molaren Lösung von Butyl-lithium in Hexan (0,039 mol) innerhalb 5 min gegeben, wobei eine gelbe Lösung entstand. Nach Entfernung des Kältebades wurde die Lösung auf Raumtemperatur erwärmt und 1 h nachgerührt. Danach wurde das Reaktionsgemisch auf - 20°C gekühlt, und es wurden 5,8 g (0,039 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf - 20°C wurden 17,0 ml einer 2,3 molaren Lösung von Butyl-lithium in Hexan (0,039 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C, wurden 12,4 g (0,038 mol) Chorotributylzinn zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 20.4 g (Ausbeute: 98 %) der Verbindung 27 als schweres gelbes Öl übrigblieben. Zwei Isomere wurden durch $^{31}P$ NMR identifiziert. $^{31}P$ NMR (161,9 MHz, $CD_2Cl_2$) δ -5,9 und -6,6 in einem Verhältnis von 2:1.

**Beispiel 26** (Diisopropylphosphino-2-methylindenyl-zirkonium-trichlorid, Verbindung 28)

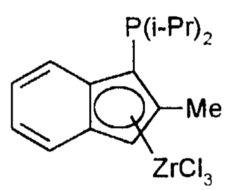

28

Eine Lösung von 17.7 g (0,033 mol) der Verbindung 27 in 100 ml Methylenchlorid wurde zu einer Aufschlämmung von 7,7 g (0,033 mol) 99,9 %igem $ZrCl_4$ in 200 ml Methylenchlorid innerhalb 10 min bei - 25°C gegeben. Nach vollständiger Zugabe wurde das Reaktionsgemisch langsam auf 10°C über einen Zeitraum von 3 h erwärmt, wonach eine klare, orangefarbene Lösung entstand. Nach 1 h bei Raumtemperatur wurde das Lösungsmittel i. Vak. entfernt und das enstehende Öl mit 2 x 50 ml Hexan gewaschen, wodurch ein öliges Rohprodukt (28) erhalten wurde, das direkt zur Herstellung der Verbindung 29 verwendet wurde. Wegen der Unlöslichkeit dieser Verbindung wurde kein $^1H$ NMR erhalten.

**Beispiel 27** (Diisopropylphosphino-dichlorboranyl-verbrücktes 2-Methylindenylcyclopentadienyl-zirkonium-dichlorid, Verbindung 29)

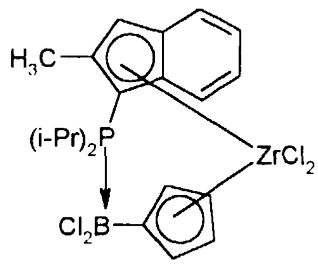

29

In einen Rundkolben, der 0,025 mol der unreinen Verbindung 28 in 200 ml Toluol bei 0°C enthielt, wurden 5,5 g (0,025 mol) der Verbindung 2 über einen Zeitraum von 5 min gegeben. Nach 1 h bei 0°C wurde das Rühren beendet und die lösliche Toluolfraktion vom entstandenem Öl dekantiert. Nach Entfernung des Toluols i. Vak. wurden 100 ml Hexan zu dem öligen Feststoff gegeben, wobei 7,4 g (Ausbeute: 54%) eines gelben Pulvers mit einer Reinheit von ca. 90 % entstanden. Das Produkt wurde in einem Soxhlet-Extraktionsgerät mit unter Rückfluß geführtem Pentan weitergereinigt. Das Endprodukt bestand aus einem hellgelben Pulver. $^1$H NMR (400 MHz, $CD_2Cl_2$) δ 8,67 (br d, J = 7,6 Hz, 1 H), 7,71 (m, 1 H), 7,35 (m, 2 H), 6,62 (br s, 1 H), 6,54 (br s, 1 H), 6, 47 (m, 1 H), 6,33 (m, 1 H), 6,06 (br s, 1 H), 3,3 (br m, 1 H), 3,2 (br m, 1 H), 2,6 (s, 3 H), 1,78 (dd, J = 7,1 Hz, $J_{H-P}$ = 15,3 Hz, 3 H), 1,70 (dd, J = 7,2 Hz, $J_{H-P}$ = 15,7 Hz, 3 H). 1,57 (dd, J = 7,1 Hz, $J_{H-P}$ = 15,3 Hz, 3H), 1,12 (dd, J = 7,1 Hz, $J_{H-P}$ = 14,0 Hz, 3H). $^{31}$P NMR (161,9 MHz, $CD_2Cl_2$) 28,4 (br m); $^{11}$B (80 MHz, $CD_2Cl_2$) δ - 14,3 (br d, $J_{P-B}$ = 106 Hz).

**Beispiel 28** (Bistrimethylsilyl-(diphenylphosphino)-cyclopentadien, Verbindung 30)

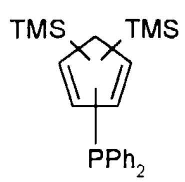

TMS = $-Si(CH_3)_3$

30

76,6 ml einer 2,5-molaren Lösung von Butyl-lithium in Hexan (0,19 mol) wurden zu einer Lösung der Verbindung 1 (40,2 g; 0,19 mol) in 500 ml Ether innerhalb 10 min bei 0°C gegeben. Nach vollständiger Zugabe wurde das Bad entfernt und die Lösung 1 h bei Raumtemperatur gerührt. Nach Abkühlung auf 0°C, wurden 42,2 g (0,19 mol) Chlordiphenylphosphin innerhalb 10 min zugegeben, wonach das Bad entfernt und die Aufschlämmung auf Raumtemperatur erwärmt wurde. Nach 1-stündigem Rühren bei Raumtemperatur wurde der Ether i. Vak. entfernt und das Produkt in Hexan erneut aufgelöst. Nach Abfiltrieren der Salze wurde das Hexan i. Vak. entfernt, wobei 69,1 g (Ausbeute: 91 %) der Verbindung 30 als Öl übrigblieben. $^1$H NMR (400 MHz, $CDCl_3$) δ 7,45 (m, 4H), 7,35 (m, 6 H), 6,8 (m, 1 H), 6,65 (m, 1 H), 6,6 (m, 1H), 0 (s, 18 H). $^{31}$P NMR (161,9 MHz, $CDCl_3$): δ - 19,5 ppm.

**Beispiel 29** (Trimethylsilyl-diphenylphosphino-cyclopentadienyl-zirkoniumtrichlorid, Verbindung 31)

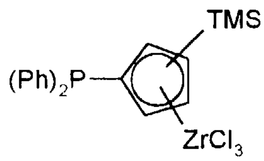

31

Eine Lösung der Verbindung 30 (69,1 g, 0,175 mol) in 200 ml Methylenchlorid wurde über eine Kanüle zu einer Suspension von 41,5 g (0,178 mol) 99,9 %igem $ZrCl_4$ in 200 ml Methylenchlorid gegeben und 8 h bei Raumtemperatur gerührt. Während dieser Zeit trübte sich die Lösung. Die Feststoffe wurden abfiltriert, mit 2 x 20 ml Toluol und anschließend 2 x 20 ml Hexan gewaschen und i. Vak. getrocknet. Das Produkt bestand aus 35 g (Ausbeute: 39 %) eines hellgelben Pulvers. Wegen der Unlöslichkeit des Produktes wurde kein $^1$H NMR erhalten.

**Beispiel 30** (Diphenylphosphino-dichlorboranyl-verbrücktes Trimethylsilylcyclopentadienyl-cyclopentadienyl-zirkonium-dichlorid, Verbindung 32)

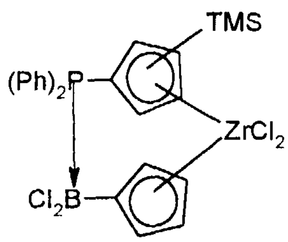

32

Eine Lösung der Verbindung 2 (2,6 g, 0,012 mol) wurde bei 0°C zu einer Aufschlämmung der Verbindung 31 (5,6 g, 0,011 mol) in 100 ml Toluol gegeben. Nach 5-stündigem Rühren bei 0°C wurde der gelbbraune Feststoff durch Filtration entfernt, wobei eine weißliche Lösung übrigblieb. Nach Entfernung des Toluols i. Vak. und Waschen des übriggebliebenen Feststoffes mit Pentan, verblieb die Verbindung 32 als hochluftempfindliches weißliches Pulver (5,5 g; Ausbeute: 81 %). $^1$H NMR (400 MHz, $CD_2Cl_2$) δ : 7,8 - 7,5 (m, 10 H), 7,06 (m, 1 H), 6,92 (m, 1 H), 6,83 (m, 1 H), 6,75 (m, 2 H), 6,68 (m, 1 H), 6,63 (m, 1 H), 0,26 (s, 9 H). $^{31}$P NMR (161,9 MHz, $CD_2Cl_2$) 6 0 (br, m); $^{11}$B (80 MHz, $CD_2Cl_2$) δ - 16,3 (br d, $J_{B-P}$ = 82 Hz).

**Beispiel 31** (Diisopropylphosphino-cyclopentadienyl-lithium, Verbindung 33)

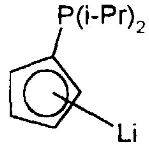

33

In einen Rundkolben, der 1,68 g (0,023 mol) Cyclopentadienyl-lithium enthielt, wurden 50 ml Ether gegeben. Nach Abkühlung des Reaktionskolbens auf - 20°C wurden 3,6 g (0,023 mol) Chlordiisopropylphosphin zugetropft. Nach vollständiger Zugabe wurde das Kältebad auf 0°C erwärmt und das Reaktionsgemisch 1 h gerührt. Danach wurde Ether i. Vak. entfernt und das Produkt in Toluol gelöst und abfiltriert. Nach Durchspülen der Fritte mit 2 x 10 ml

Toluol wurde das Reaktionsgemisch auf - 20°C abgekühlt und 9,3 ml einer 2,5 molaren Lösung von Butyllithium in Hexan (0,023 mol) zugegeben, wobei eine orangefarbene Lösung entstand. Eine kleine Fraktion wurde für NMR-Untersuchungen entnommen und nach Abtrennung des Toluols i. Vak. und Waschen des entstehenden Öls mit Hexan ein hellgelber Feststoff (33) erhalten. $^{1}H$ NMR (400 MHz, THF) $\delta$ : 5,89 (m, 2 H), 5,83 (br s, 2 H), 1,86 (m, 2 H), 1,0 - 0,8 (m, 12 H). Die Hauptmenge wurde direkt zur Herstellung der Verbindung 34 verwendet.

**Beispiel 32** (Diisopropylphosphino-dimethylboranyl-verbrücktes Bis-cyclopentadienyl-titandichlorid, Verbindung 34)

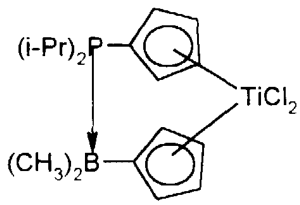

34

Eine Lösung von 6,1 g (0,023 mol) der Verbindung 4 in 50 ml Toluol wurde zu einer Toluollösung der Verbindung 33 (0,023 mol) aus der obengenannten Reaktion bei -78°C gegeben. Nach 30-minütigem Rühren bei - 78°C wurde das Kältebad entfernt und die Lösung 2 h bei Raumtemperatur nachgerührt. Danach wurden die Feststoffe durch Filtration und das Toluol i. Vak. entfernt. Anschließend wurde Hexan zu dem roten öligen Produkt gegeben, wobei ein rotes Pulver entstand, das abfiltriert, mit 2 x 20 ml Hexan gewaschen und i. Vak. getrocknet wurde, wodurch die Verbindung 34 als rotes Pulver (5,95 g, Ausbeute, bezogen auf CpLi: 61%) entstand. $^{1}H$ NMR (400 MHz, $CD_2Cl_2$) $\delta$ : 6,96 (m, 2 H), 6,94 (pseudo t, J = 2,4 Hz, 2 H), 6,59 (m, 2 H), 6,42 (m, 2 H), 2,58 (m, 2 H), 1,44 (dd, J = 7,3 Hz, $J_{H-P}$ = 14,7 Hz, 6 H), 1,27 (dd, J = 7,2 Hz, $J_{H-P}$ = 13,1 Hz, 6 H), 0,31 (d, $J_{H-P}$ = 16,4 Hz, 6 H). $^{31}P$-NMR (161,9 MHz, $CD_2Cl_2$) $\delta$ 28,7 (br m); $^{11}B$-NMR (80 MHz, $CD_2Cl_2$) $\delta$-29,7 (br m).

**Beispiel 33** (Dimethylphosphino-tributylstannyl-2-methylinden, Verbindung 35)

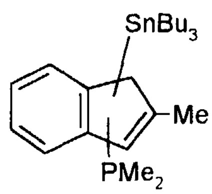

35

In einen Rundkolben, der 6,76 g (0,052 mol) 2-Methylinden (Verbindung 26) enthielt, wurden 100 ml Ether gegeben; es wurde und auf - 20°C gekühlt. Zu dieser Lösung wurden 21ml einer 2,5 molaren Lösung von Butyl-lithium in Hexan (0,052 mol) innerhalb 5 min gegeben, wobei eine gelbe Lösung entstand. Nach Entfernung des Kältebades wurde die Lösung auf Raumtemperatur erwärmt und 1 Stunde nachgerührt. Nach Abkühlung des Reaktionsgemisches auf- 20°C wurden 5,0 g (0,052 mol) Chlordimethylphosphin innerhalb 5 min zugegeben, wobei ein Niederschlag entstand. Anschließend wurde das Kältebad entfernt und das Reaktionsgemisch 1 h bei Raumtemperatur gerührt. Nach Abkühlung auf - 20°C wurden 21,0 ml einer 2,5 molaren Lösung von Butyl-lithium in Hexan (0,052 mol) zugetropft. Nach vollständiger Zugabe wurde das Kältebad entfernt, woraufhin die Lösung langsam auf Raumtemperatur erwärmt und 1,5 h gerührt wurde. Nach Abkühlung der Aufschlämmung auf 0°C wurden 16,9 g (0,052 mol) Chlortributylzinn zugetropft. Die entstehende Aufschlämmung wurde auf Raumtemperatur erwärmt und 1,5 h gerührt. Nach Entfernung des Ethers i. Vak. wurde das Rohprodukt erneut in Hexan aufgelöst, abfiltriert und das Filtrat i. Vak. getrocknet, wobei 24,3 g (Ausbeute: 98 %) der Verbindung 35 als schweres gelbes Öl übrigblieben. $^{31}P$ NMR (161,9 MHz, $CD_2Cl_2$) $\delta$ -68,5 (s).

**Beispiel 34** (Dimethylphosphino-2-methylindenyl-zirkoniumtrichlorid, Verbindung 36)

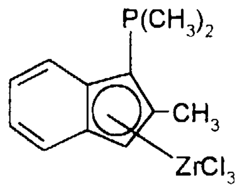

36

Eine Lösung von 17,4 g (0,036 mol) der Verbindung 35 in 100 ml Toluol wurde zu einer Aufschlämmung von 8,5 g (0,036 mol) 99,9 %igem $ZrCl_4$ in 100 ml Toluol innerhalb 10 min bei 0°C gegeben. Nach vollständiger Zugabe wurde das Reaktionsgemisch langsam auf 10°C über einen Zeitraum von 1 h erwärmt und danach 6 h bei Raumtemperatur gerührt. Anschließend wurde der gelbe Niederschlag abfiltriert, mit 2 x 20 ml Toluol und 2 x 20 ml Hexan gewaschen und i. Vak. getrocknet. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt, wobei 5,8 g (Ausbeute: 41 %) der Verbindung 36 als leuchtend gelbes Pulver übrigblieben. Wegen der Unlöslichkeit dieser Verbindung wurde kein $^1H$ NMR erhalten.

**Beispiel 35** (Dimethylphosphino-dichlorboranyl-verbrücktes 2-Methylindenylcyclopentadienyl-zirkonium-dichlorid, Verbindung 37)

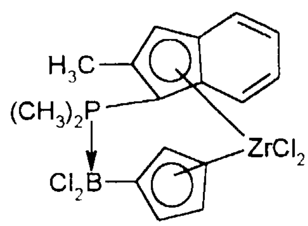

37

In einen Rundkolben, der 4,8 g (0,012 mol) der Verbindung 36 in 125 ml Toluol bei Raumtemperatur enthielt, wurden 2,7 g (0,012 mol) der Verbindung 2 innerhalb 5 min gegeben. Nach 7-stündigem Rühren wurde der dunkelgelbe Feststoff filtriert, mit 2 x 20 ml Hexan gewaschen und i. Vak. getrocknet, wobei 5,5 g (Ausbeute: 89%) der Verbindung 37 als hellgelber Feststoff erhalten wurden, $^1H$ NMR (400 MHz, $CD_2Cl_2$) $\delta$ 8,39 (d, J = 8,5 Hz, 1 H), 7,71 (m, 1 H), 7,4 (m, 2 H), 6,64 (m, 2 H), 6,46 (pseudo q, J = 5,3, 2,9 Hz, 1 H), 6,37 (m, 1 H), 6,08 (m, 1 H), 2,51 (s, 3 H), 2,1 (d, $J_{H-P}$ = 12 Hz, 3 H), 2,0 (d, $J_{H-P}$ = 12 Hz, 3 H); $^{31}P$ NMR (161,9 MHz, $CD_2Cl_2$) 5,3 (br m); $^{11}B$ (80 MHz, $CD_2Cl_2$) $\delta$ -16,5 (br d, $J_{B-P}$ = 116 Hz).

**Beispiel 36** (Dicyclohexylboranylcyclopentadienyl-lithium, Verbindung 39)

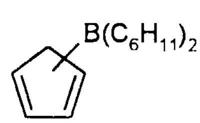

38

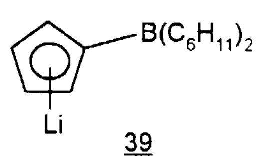

39

Verwiesen wird auf: Herberich, G. E.; Fischer, A. Organometallics 1996, 15, 58.

40 ml einer 1-molaren Lösung von Chlordicyclohexylboran in Hexan (0,04 mol) wurden zu 20 ml Cyclopentadienyl-Natrium (2 M in THF; 0,04 mol) in 100 ml Hexan bei - 78°C gegeben. Nach Entfernung des Kältebades wurde das Reaktionsgemisch auf Raumtemperatur erwärmt und 1 h gerührt. Nach Filtration und Entfernung des Lösungsmittels i. Vak. blieben 9,1 g (Ausbeute: 94%) der Verbindung 38 als gelbes Öl übrig, das direkt bei der Synthese der Verbindung 39 verwendet wurde.

In einen Rundkolben, der 40 ml THF enthielt, wurden 5,3 g (0,038 mol) 2,2,6,6-Tetramethylpiperidin gegeben. Nach Abkühlung auf - 20°C und Zugabe von 15 ml einer 2,5 molaren Lösung von Butyl-lithium in Hexan (0,038 mol) wurde die Mischung 1 h bei - 20°C gerührt und danach auf - 78°C abgekühlt. Zu dieser Lösung wurden 9,1 g (0,038 mol) der Verbindung 38 in 20 ml Hexan innerhalb 10 Minuten gegeben. Das Kältebad wurde entfernt und die Lösung 1 h bei Raumtemperatur gerührt. Nach Entfernung des Lösungsmittels i. Vak. und Zugabe von Hexan wurde 2 h nachgerührt, wobei eine weiße Suspension entstand, die filtriert und i. Vak. getrocknet wurde. Es enstand 4,6 g (Ausbeute: 50%) der Verbindung 39 als weißes Pulver. $^{11}$B-NMR (80 MHz, THF) δ 43,9.

**Beispiel 37** (Diphenylphosphino-dicyclohexylboranyl-verbrücktes Trimethylsilylcyclopentadienyl-cyclopentadienyl-zirkonium-dichlorid, Verbindung 40)

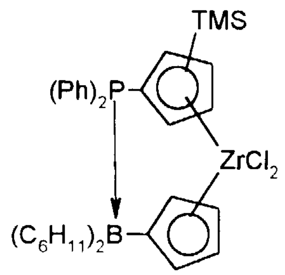

40

Nach Abkühlung eines Schlenk-Kolbens, der 1,4 g (0,0056 mol) der Verbindung 39 und 2,9 g (0,0056 mol) der Verbindung 31 enthielt, auf - 20°C wurden 100 ml Toluol zugegeben. Nach Entfernung des Bades wurde die Aufschlämmung 6 h bei Raumtemperatur gerührt und anschließend filtriert. Das Lösungsmittel wurde i. Vak. entfernt, wobei ein öliger Feststoff übrigblieb, der mit Hexan gewaschen und filtriert wurde. Nach Trocknung des Feststoffes i. Vak. verblieben 1,9 g (Ausbeute: 48%) der Verbindung 40 als rosafarbener Feststoff. $^{1}$H NMR (400 MHz, $CD_2Cl_2$) δ 7,6 - 7,2 (br m, 10 H), 7,04 (br s, 1 H), 6,95 (m, 1 H), 6,82 (m, 1 H), 6,76 (br s, 1 H), 6,66 (m, 1 H), 6,63 (m, 1 H), 6,52 (m, 1 H), 1,6 - 1,1 (br m, 22 H), 0,26 (s, 9 H); $^{31}$P-NMR (161,9 MHz, $CD_2Cl_2$) δ 16,3; $^{11}$B-NMR (80 MHz, $CD_2Cl_2$) δ -13,8.

Beispiel 38 (4,7-Dimethylinden, Verbindung 41)

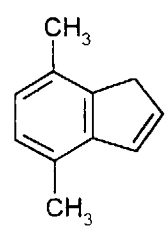

41

Verwiesen wird auf: Erker, G. et al. Tetrahedron 1995, 51, 4347.

Eine 30 %ige Lösung von 153 g (2,8 mol) Natriummethoxid in Methanol wurde mit 60 ml Methanol verdünnt und auf 0°C abgekühlt. Zu dieser Lösung wurden 34 g (0,52 mol) Cyclopentadien gegeben. Nach 15 min wurden 39 g (0,34 mol) 2,5-Hexandion zugetropft, wonach das Kältebad entfernt und das Reaktionsgemisch 2 h bei Raumtemperatur gerührt wurde. Anschließend wurden 200 ml Wasser und 200 ml Ether zugegeben. Die Etherschicht wurde entfernt, mit Wasser und Kochsalzlösung gewaschen und anschließend über $Na_2SO_4$ getrocknet. Nach Entfernung

des Lösungsmittels i. Vak. und Destillation bei 65°C und 0,1 mbar verblieb die Verbindung 41 als orangefarbenes Öl (40 g; Ausbeute: 81 %). $^1H$ NMR (400 MHz, $CDCl_3$) δ 7,35 - 7,27 (m, 2 H), 7,23 (d, J = 7,6 Hz, 1 H), 6,82 (m, 1 H), 3,51 (s, 2 H), 2,75 (s, 3H), 2,63 (s, 3 H).

**Beispiel 39** (Diisopropylphosphino-tributylstannyl-4,7-dimethylinden, Verbindung 42)

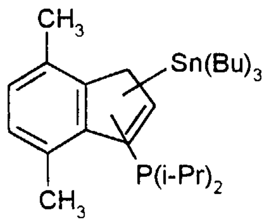

42

In einen Rundkolben, der 5,0 g (0,035 mol) 4,7-Dimethylinden (Verbindung 41) enthielt, wurden 100 ml Ether gegeben; es wurde auf - 20°C abgekühlt. Zu dieser Lösung wurden 14 ml einer 2,5 molaren Lösung von Butyl-lithium in Hexan (0,035 mol) innerhalb 5 min gegeben, wobei eine gelbe Lösung entstand. Nach Entfernung des Kältebades wurde die Lösung auf Raumtemperatur erwärmt und 1 h nachgerührt Nach Abkühlung des Reaktionsgemisches auf - 20°C wurden 5,3 g (0,035 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf - 20°C wurden 14,0 ml einer 2,5 molaren Lösung von Butyl-lithium in Hexan (0,035 mol) zugetropft. Nach vollständiger Zugabe wurde das Kältebad entfernt, die Lösung langsam auf Raumtemperatur erwärmt und 1,5 h gerührt. Nach Abkühlung der Aufschlämmung auf 0°C wurden 11,4 g Chortributylzinn (0,035 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, filtriert und das Filtrat i. Vak. eingeengt, wobei 16 g (Ausbeute: 83%) der Verbindung 42 als schweres gelbes Öl übrigblieben $^{31}P$ NMR (161,9 MHz, $CD_2Cl_2$) δ - 9 ppm.

**Beispiel 40** (Diisopropylphosphino-4,7-dimethylindenyl-zirkonium-trichlorid, Verbindung 43)

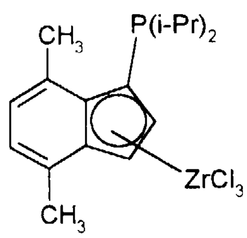

43

Eine Lösung von 16,0 g (0,029 mol) der Verbindung 42 in $CH_2Cl_2$ (100 ml) wurde zu einer Aufschlämmung von 6,4 g (0,029 mol) 99,9 %igem $ZrCl_4$ in 100 ml $CH_2Cl_2$ bei - 20°C innerhalb 10 min gegeben. Nach vollständiger Zugabe wurde das Reaktionsgemisch langsam über einen Zeitraum von zwei Stunden auf Raumtemperatur erwärmt und anschließend weitere 2 h bei Raumtemperatur gerührt. Danach wurden die Feststoffe durch Filtration entfernt und das Lösungsmittel i. Vak. entfernt, wobei die Rohverbindung 43 als Öl übrigblieb, das direkt zur Herstellung der Verbindung 44 verwendet wurde.

**Beispiel 41** (Diisopropylphosphino-dichlorboranyl-verbrücktes 4,7-Dimethylindenyl-cyclopentadienyl-zirkonium-dichlorid, Verbindung 44)

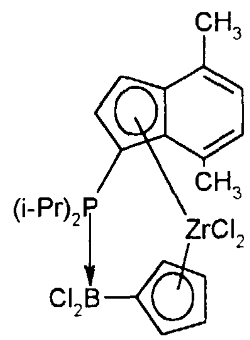

44

In einen Rundkolben, der 10,6 g (0,023 mol) der Verbindung 43 in 125 ml Toluol bei 0°C enthielt, wurden 5,0 g (0,023 mol) der Verbindung 2 innerhalb 5 min gegeben. Nach 1,5-stündigem Rühren bei 0°C wurde das Kältebad entfernt und die Aufschlämmung weitere 3 Stunden bei Raumtemperatur gerührt. Danach wurde die toluollösliche Fraktion vom schweren Öl, das sich während der Reaktion gebildet hatte, dekantiert und i. Vak.zur Trockne eingeengt, wobei ein schweres Öl übrigblieb. Nach Zugabe von 100 ml Hexan zu diesem Öl wurde nachgerührt und ein dunkelgelbes Pulver abfiltriert, das i. Vak. getrocknet wurde. Nach diesem Verfahren verblieben 6,3 g (Ausbeute: 48 %) der Verbindung 44 als dunkelgelbes Pulver. Das Produkt kann durch Ausfällung einer $CH_2Cl_2$-Lösung der Verbindung 44 in einem Kohlenwasserstoff-Lösungsmittel weitergereinigt werden, $^1$H NMR (400 MHz, $CD_2Cl_2$) δ 8,03 (pseudo t, J = 8,5 Hz, 1 H), 7,22 (d, J = 7 Hz, 1 H), 7,08 (d, J = 7,1 Hz, 1 H), 7,02 (m, 1 H), 6,77 (m, 1 H), 6,70 (m, 1 H), 6,58 (m, 1 H), 6,44 (br s, 1 H); 3,51 (m, 1 H), 2,82 (m, 1 H), 2,64 (s, 3 H), 2,50 (s, 3 H), 1,77 (dd, J = 7,2 Hz, $J_{H-P}$ = 16,3 Hz, 3 H), 1,69 (dd, J = 7,1 Hz, $J_{H-P}$ = 15,2 Hz, 3 H), 1,58 (dd, J = 7,1 Hz, $J_{H-P}$ = 15,5 Hz, 3 H), 1,28 dd, J = 7,2 Hz, $J_{H-P}$ = 14,5 Hz, 3 H); $^{31}$P-NMR (161,9 MHz, $CD_2Cl_2$) δ 28,4 (br m); $^{11}$B-NMR (80 MHz, $CD_2Cl_2$) δ -15,3 (d, $J_{P-B}$ = 107 Hz).

**Beispiel 42** (Pyrrol-lithium, Verbindung 45)

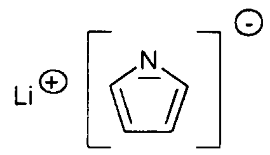

45

59 ml einer Lösung von Butyl-lithium (2,5 molar in Hexan, 0,148 mol) wurden langsam bei -20°C zu einer Lösung von 9,9 g Pyrrol (0,148 mol) in 200 ml Hexan gegeben, wobei sich ein weißer Festkörper bildete. Es wurde 2 Stunden bei Zimmertemperatur nachgerührt und der Festkörper durch Filtration gewonnen, 2 mal mit je 20 ml Hexan gewaschen und im Vakuum getrocknet. Dies Verfahren ergab 6 g der Verbindung 45 (56 % der theoretischen Ausbeute). $^1$H-NMR (400 MHz, THF): δ = 6,71 (s, 2H), 5,95 (s, 2H).

**Beispiel 43** (Dimethylboranyl-verbrücktes Cyclopentadienyl-pyrrol-titandichlorid, Verbindung 46)

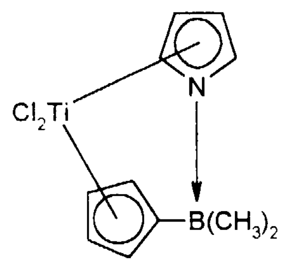

46

Eine Lösung von 1,34 g (0,005 mol) der Verbindung 4 in 20 ml Toluol wurde während 5 Minuten bei -78°C zu 0,38 g (0,005 mol) der Verbindung 45 gegeben. Das Kältebad wurde danach entfernt, und es wurde 2 Stunden bei Raumtemperatur weitergerührt. Danach wurde der gebildete rote Festkörper abfiltriert; das gelbe Filtrat wurde verworfen. Der rote Festkörper wurde mit Toluol gewaschen und im Vakuum getrocknet. Man erhielt 1,14 g mit einem geringen Anteil an LiCl.
$^1$H-NMR (400 MHz, THF): δ = 6.89 (pseudo-t, J = 2,3 Hz, 2 H), 6,64 (m, 2 H), 6,59 (pseudo-t, J = 2.35 Hz, 2 H), 5,73 (pseudo-t, J = 1,7 Hz, 2 II), 0,06 (s, 6 H). $^{11}$B NMR (80 MHz, THF) δ = -26 ppm.

**Beispiel 44** (1-Phenyl-2,3,4,5-tetramethyl-phosphol, Verbindung 47)

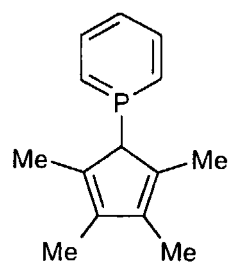

47

In Anlehnung an Organometallics 7 (1988), 921 wurde eine Lösung von 11,7 g (0,216 mol) 2-Butin in 150 ml $CH_2Cl_2$ langsam zu 15,3 g (0,115 mol) $AlCl_3$ in $CH_2Cl_2$ gegeben (0°C; 30 Min.). Es wurde 45 Minuten bei 0°C nachgerührt, dann das Kältebad entfernt und eine weitere Stunde nachgerührt. Danach wurde die Lösung auf -50°C gekühlt und eine Lösung von 21,4 g (0,12 mol) Phenyl-dichlorphosphin in $CH_2Cl_2$ während 20 Minuten zugegeben. Das Kältebad wurde danach entfernt, die dunkelrote Lösung eine Stunde nachgerührt und dann bei -30°C zu einer Lösung von 27 g (0,13 mol) Tributylphosphin in 100 ml $CH_2Cl_2$ gegeben. Die rote Farbe verschwand sofort; es hinterblieb eine gelbe Lösung. Nachdem die Zugabe beendet war, wurde das Lösungsmittel im Vakuum entfernt; es blieb ein dickes gelbes Öl. Das Öl wurde in Hexan aufgenommen und unter Ar-Atmosphäre mit gesättigter wäßriger $NaHCO_3$-Lösung und $H_2O$ gewaschen. Nach Trocknung über $MgSO_4$ wurde das I-Iexan im Vakuum entfernt. Es hinterblieben 18,2 g als klares Öl (Ausbeute 78 %).
$^1$H-NMR (400 Mhz, $CDCl_3$) δ: 7,3 (m, 5H), 2,0 (m, 12H), $^{31}$P-NMR (161,9 MHz, $CDCl_3$) δ: 16,8 ppm.

**Beispiel 45** (Lithium-2,3,4,5-tetramethyl-phosphol, Verbindung 48)

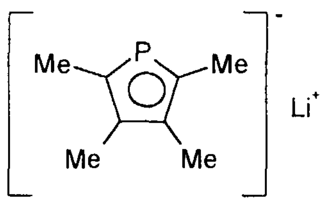

48

In Anlehnung an Organometallics 7 (1988), 921 wurden 0,52 g (0,074 mol) Lithium zu einer Lösung von 7 g (0,032 mol) der Verbindung 47 in 150 ml Tetrahydrofuran (THF) gegeben und über Nacht gerührt. Die erhaltene rote Lösung wurde zur Entfernung restlicher Feststoffe durch eine Fritte filtriert und das Filtrat auf 0°C gekühlt. Danach wurde eine Lösung von 1,45 g (0,01 mol) $AlCl_3$ in 20 ml THF zugetropft und die Lösung auf Raumtemperatur gebracht. Eine aliquate Menge wurde zur Analyse entnommen und die restliche Lösung direkt zur Herstellung der Verbindung 49 benutzt. $^{31}$P-NMR (161,9 MHz, THF) δ: 63,7 ppm.

**Beispiel 46** (Dimethylboranyl-cyclopentadienyl-tetramethylphosphol-titandichlorid, Verbindung 49)

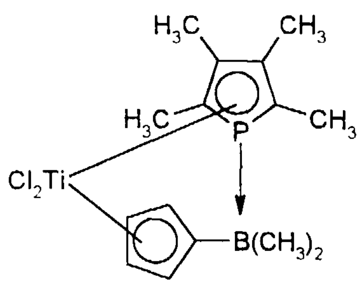

49

Die THF-Lösung aus Beispiel 45 mit 1,46 g (0,01 mol) der Verbindung 48 wurde in einen Rundkolben gegeben; THF wurde im Vakuum entfernt. Nach Zugabe von Toluol und Abkühlung auf -78°C wurde eine Lösung von 2,6 g (0,01 mol) der Verbindung 44 in 20 ml Toluol langsam unter Rühren zugegeben, wobei eine rote Aufschlämmung entstand. Nachdem die Zugabe beendet war, wurde die Aufschlämmung auf Raumtemperatur gebracht und 1 Stunde nachgerührt. Nach Abfiltrieren von ungelöst gebliebenem Feststoff wurde das Toluol im Vakuum entfernt; zum zurückgebliebenen öligen Feststoff wurde Hexan gegeben. Die Hexan-Lösung wurde ebenfalls von ungelöst gebliebenem Feststoff abfiltriert und über Nacht bei -20°C aufbewahrt. Nach Abdekantieren des Hexans wurden 0,5 g eines grünen Feststoffs erhalten, der als Verbindung 49 identifiziert wurde (Ausbeute 14 %). $^{1}$H-NMR (200 MHz, $CD_2Cl_2$) δ: 6,64 (m,2H), 6,57 (m,2H), 2,11 (d, $J_{H-P}$ = 10 Hz, 6H), 2,09 (s,6H), 0,87 (d, $J_{H-P}$ = 5,3 Hz, 6H). $^{31}$P-NMR (161,9 MHz, THF) δ: 95,6 ppm, $^{11}$B-NMR (80 MHz, $CD_2Cl_2$) δ : 39 (br, m) ppm.

**Beispiel 47** (Diphenylphosphino-dichlorboranyl-verbrücktes Bis(indenyl)zirkonium-dichlorid, Verbindung 50)

0,011 Mol Trimethylsilyl-dichlorboranyl-inden wurden bei Raumtemperatur zu einer Suspension von 0,012 Mol Diphenylphosphino-indenyl-zirkoniumtrichlorid in 150 ml Toluol gegeben. Das Reaktionsgemisch wurde sodann 1 Stunde bei 75°C gerührt. Nach Abkühlen und Filtration wurden zur klaren orangefarbenen Lösung 150 ml Hexan gegeben, worauf sich ein schweres rotes Öl und ein hellgelber Niederschlag bildeten; der Niederschlag wurde abfiltriert, mit Hexan gewaschen und i. Vak. getrocknet. Der hellgelbe Festkörper wurde durch $^{1}$H-NMR-Spektroskopie als reine meso-Verbindung identifiziert. Das Filtrat mit dem roten Öl wurde auf 30 ml konzentriert und tropfenweise zu 200 ml Hexan gegeben, worauf sich ein zweiter hellgelber Niederschlag bildete, der abfiltriert und i. Vak. getrocknet wurde. Dieses Produkt wurde mit Hilfe der Röntgenstrahlen-Strukturanalyse als das reine rac-Isomer identifiziert. Hierzu geeignete Kristalle waren durch langsame Diffusion von Hexan in eine gesättigte $CH_2Cl_2$ Lösung bei Umgebungstemperatur gezüchtet worden. Die Donor-Akzeptor-Bindung P→B hat eine Länge von 2,02 Å. Die Ausbeute betrug 40 %, das meso/rac-Verhältnis 1:1. Wurde das Reaktionsgemisch 5 Stunden (statt 1 h) bei 75°C gerührt, erhielt man eine erhöhte Menge des gewünschten rac-Isomer; das meso/rac-Verhältnis betrug 1:4. Gleichzeitig stieg die Gesamtausbeute leicht von 40 % auf 45 %.
Elementaranalyse: 56,05 % C (theoretisch 55,90 %), 4,35 % H (4,38 %) Spektrum meso-Isomer: $^1$H-NMR (400 MHz, $CD_2Cl_2$, Raumtemperatur RT):
8,01 ppm (1 H d, 8,8 Hz); 7,8 - 7,0 ppm (mehrere überlappende Multiplets, 28 H); 6,94 ppm (1H, t, 3,3 Hz); 6,77 ppm (1H, d, 3,44 Hz); 6,31 ppm (1H, d, 8,7 Hz).
$^{31}$P-NMR (161,9 MHz, $CD_2Cl_2$): 5,6 ppm, $^{11}$B-NMR (80,2 MHz, $CD_2Cl_2$): -17,0 ppm (72 Hz).
Spektrum rac-Isomer: $^1$H-NMR (400 MHz, $CD_2Cl_2$, RT):
8,39 ppm (1 H, d, 8,5 Hz); 7,68 - 7,05 ppm (27 H, verschiedene überlappende Multiplets); 6,65 ppm (1 H, d, 2,9 Hz); 6,59 ppm (1H, t, 3,5 Hz); 6,51 ppm (1H, t, 2,8 Hz); 6,40 ppm (1 H, d, 3,5 Hz). $^{31}$P-NMR (161,9MHz, $CD_2Cl_2$) 8,1 ppm $^{11}$B-NMR (80,2 MHz, $CD_2Cl_2$): -14,0 ppm ($J_{P-B}$ = 74 Hz).

**Beispiele 48-50** (Dialkylphosphino-Dichlorboranyl-verbrücktes Bis(indenyl)-zirkonium-dichlorid; Alkyl = i-Propyl = Verbindung 51; Ethyl = Verbindung 52; Methyl = Verbindung 53)

0,016 Mol Trimethylsilyl-dichlorboranyl-inden in 50 ml Toluol wurden bei Raumtemperatur zu einer Suspension von 0,0157 Mol Dialkylphosphinoindenyl-zirkoniumtrichlorid in 250 ml Toluol gegeben. Das Reaktionsgemisch wurde dann unter Rühren für einige Stunden erhitzt. Nach Abkühlen und Filtration wurden zur klaren orangefarbenen Lösung 300 ml Hexan gegeben, worauf sich ein schweres rotes Öl und eine klare gelbe Lösung bildeten. Die Trennung der meso- und rac-Isomere wurde durch fraktionierte Kristallisation aus Toluol/Hexan-Lösungen erreicht.
Charakterisierung der Verbindungen (NMR-Spektren in $CD_2Cl_2$ bei RT; $^1$H-NMR: 400 MHz, $^{31}$P-NMR: 161,9 MHz, $^{11}$B-NMR; 80,2 MHz):

**rac-Verbindung 51 (i-Pr):**

**$^1$H-NMR**: 8,41 ppm (1 H, d, 9,0 Hz); 8,31 ppm (1 H, d, 8,4 Hz); 7,84 ppm (I H, d, 8,5 Hz); 7,64 - 7,24 ppm (6 H, verschiedene überlappende Multiplets); 6,70 ppm (2 H, m); 6,60 ppm (1 H, m): 3,78 ppm (1 H, m, $P(C\underline{H}(CH_3)_2)_2$; 3,21 ppm (1 H, m $P(C\underline{H}(CH_3)_2)_2$); 1,81 ppm (6 H, m, $P(CH(C\underline{H}_3)_2)_2$; 1,72 ppm (3 H, dd, $P(CH(C\underline{H}_3)_2)_2$, 14,9 Hz, 7,3 Hz); 1,32 ppm (3 H, dd, $P(CH(C\underline{H}_3)_2)_2$, 14,1 Hz, 7,4 Hz). **$^{31}$P-NMR:** 22,7 ppm, **$^{11}$B-NMR**: -14,1 ppm (100 Hz).
Elementaranalyse: 49, 4 % C (theoretisch 48,9 %) 4,6 % H (4,4 %).

**meso-Verbindung 52 (Et):**

**$^1$H-NMR**: 7,83 ppm (1 H, d, 9,0 Hz); 7,76 ppm (1 H, m); 7,63 ppm (1 H, d, 7,2 Hz); 7,47 ppm (1 H, d, 8,5 Hz); 7,33 ppm (2 H, m); 7,20 - 7,03 ppm (4 H, verschiedene überlappende Multiplets); 6,76 ppm (2 H, m); 2,68 ppm (2 H, m, $P(C\underline{H}_2CH_3)_2$); 2,44 ppm (2 H, m $P(C\underline{H}_2CH_3)_2$); 1,62 ppm (3 H, m, $P(CH_2C\underline{H}_3)_2$); 1,27 ppm (3 H, m, $P(CH_2C\underline{H}_3)_2$). **$^{31}$P-NMR:** 7,1 ppm, **$^{11}$B-NMR**: -15,8 ppm (100 Hz).

**rac-Verbindung 52 (Et):**

**$^1$H-NMR**: 8,28 ppm (1 H, d, 8,6 Hz); 8,10 ppm (1 H, d, 8,6 Hz); 7,62 ppm (1 H, d, 8,4 Hz); 7,46 ppm (1H, d, 8,5 Hz); 7,41 - 7,10 ppm (4 H, verschiedene überlappende Multiplets); 6,81 ppm (1 H, m); 6,47 ppm (2 H, m): 6,38 ppm (1 H, d, 3,4 Hz), 2,68 ppm (2 H, m, $P(C\underline{H}_2CH_3)_2$); 2,35 ppm (2 H, m $P(C\underline{H}_2CH_3)_2$); 1,30 ppm (6 H, m, P $(CH_2C\underline{H}_3)_2$). **$^{31}$P-NMR**: 12,3 ppm. **$^{11}$B-NMR**: -15,7 ppm (100 Hz).
Elementaranalyse: 47,6 % C (theoretisch 47,1 %) 4,3 % H (4,0 %).

**meso-Verbindung 53 (Me):**

**$^1$H-NMR**: 7,84 ppm (1 H, d); 7,75 ppm (1 H, d, 8,2 Hz); 7,68 ppm (1 H, d, 7,7 Hz); 7,51 ppm (1H, d, 8,5 Hz); 7,40 - 7,10 ppm (6 H, verschiedene überlappende Multiplets); 6,77 ppm (2 H, br), 2,13 ppm (3 H, $P(C\underline{H}_3)_2$, d, 11,8 Hz); 1,92 ppm (3 H, $P(C\underline{H}_3)_2$, d 11,8 Hz). **$^{31}$P-NMR:** 8,4 ppm. **$^{11}$B-NMR**: -16,1 ppm (103 Hz).

**rac-Verbindung 53 (Me):**

**$^1$H-NMR**: 8,21 ppm (1H, d, 8,7 Hz); 8,15 ppm (1 H, d, 8,6 Hz); 7,63 ppm (1 H, d, 8,5 hz); 7,44-7,07 ppm (6

H, verschiedene überlappende Multiplets); 6,40 ppm (3 H, br); 2,03 ppm (3 H, d, P(C**H**$_3$)$_2$, 11,9 Hz); 1,98 ppm (3 H, d, P(C**H**$_3$)$_2$, 11,6 Hz). **$^{31}$P-NMR:** - 1,5 ppm. **$^{11}$B-NMR**: -16,0 ppm (119 Hz).

**Beispiel 51**

(1,3-Bis(trimethylsilyl)-2-methylinden, Verbindung 54)

500 ml Hexan und 70 ml Butyllithium (als 2,5 molare Lösung in Hexan) wurden in einer 1 000 ml-Kolben gegeben. Hierzu wurden 0,175 mol 2-Methylinden bei Umgebungstemperatur getropft; das Gemisch wurde weitere 10 Stunden gerührt. Dann wurden 0,18 Mol Trimethylsilylchlorid bei Raumtemperatur zugetropft; es wurde weitere 10 Stunden gerührt. LiCl wurde abfiltriert, und 70 ml Butyllithium (als 2,5 molare Lösung in Hexan) wurden zum klaren Filtrat gegeben. Nach weiterem Rühren für 10 Stunden wurden erneut 0,18 Mol Trimethylsilylchlorid zugegeben, und es wurde weitere 10 Stunden gerührt. LiCl wurde abfiltriert und das Lösungsmittel i. Vak. entfernt. Verbindung 54 hinterblieb als farbloses Öl. Ausbeute: 85 % der theoretischen Ausbeute.

**$^1$H-NMR** ($CD_2Cl_2$): 7,51 ppm (1 H, d, 7,7 Hz), 7,38 ppm (1 H, d, 7,5 Hz); 7,19 ppm (1 H, t, 7,4 Hz); 7,08 ppm (1 H, t, 7,3 Hz); 3,54 ppm (1H, s); 2,32 ppm (3 H, s); 0,41 ppm (9 H, s, Si(C**H**$_3$)$_3$); 0,0 ppm (9 H, s, Si(C**H**$_3$)$_3$).

**Beispiel 52**

(Trimethylsilyl-dichlorboranyl-2-methylinden, Verbindung 55)

0,096 Mol der Verbindung 54 wurden in einem 250 ml-Kolben gegeben, der mit einem Trockeneis-Kondensator (-30°C) ausgerüstet war. Dann wurden 0,096 Mol $BCl_3$ zugegeben und das Gemisch bei Umgebungstemperatur 3 Stunden und bei 55°C 6 Stunden gerührt. Das Nebenprodukt $(CH_3)_3SiCl$ wurde entfernt; es hinterblieb als Rohprodukt ein braunes Öl. Eine Destillation von Kältefalle zu Kältefalle ergab die Verbindung 55 in 75 %ige Ausbeute als klebrigen Feststoff

**$^1$H-NMR** ($CD_2Cl_2$): 8,09 ppm (1 H, d, 7,9 Hz), 7,37 ppm (1 H, d, 7,6 Hz), 7,26 ppm (1 H, t, 7,5 Hz); 7,16 ppm (1 H, t, 7,5 Hz); 3,89 ppm (1H, s); 2,61 ppm (3 H, s); 0,0 ppm (9 H, s, Si(C**H**$_3$)$_3$). **$^{11}$B-NMR** ($CD_2Cl_2$): 31,9 ppm.

**Beispiel 53**

(Tributylstannyl-diethylphosphino-2-methylinden, Verbindung 56)

Es wurde analog Beispiel 7 gearbeitet.

**Beispiel 54**

(Diethylphosphino-2-methylinden-zirkoniumtrichlorid, Verbindung 57)

Es wurde analog Beispiel 8 gearbeitet, jedoch wurde statt Toluol $CH_2Cl_2$ als Lösungsmittel benutzt. Die Reaktionstemperatur war 25°C. Die Reinigung erfolgte durch Soxhlet-Extraktion mit $CH_2Cl_2$. Verbindungen 57 wurde als unlöslicher gelber Feststoff in 78 % der theoretischen Ausbeute erhalten.

**Beispiel 55**

($(C_2H_5)_2P-BCl_2$-verbrücktes Bis(2-methylindenyl)-zirkoniumchlorid, Verbindung 58)

0,019 Mol Verbindung 55 in 50 ml Toluol wurden bei Raumtemperatur zu einer Suspension von 0,019 Mol Verbindung 57 in 350 ml Toluol gegeben. Das Reaktionsgemisch wurde dann auf 80°C erhitzt und 24 Stunden gerührt. Nach Abkühlen und Filtration wurden 300 ml Hexan zur klaren, orangefarbenen Lösung gegeben, worauf sich ein schweres orangefarbenes Öl und eine klare gelbe Lösung bildeten. Konzentrierung nach Abkühlen auf -25°C ergab die Verbindung rac-58 als hellgelbes Pulver.

**$^1$H-NMR**: 8,14 ppm (1 H, d, 8,6 Hz); 7,96 ppm (1 H, d, 8,9 Hz); 7,47 - 7,05 ppm (6 H, verschiedene überlappende Multiplets) 6,53 ppm (lH, d, 1,9 Hz); 6,47 ppm (1 H, s); 3,0 - 2,55 ppm (4 H, verschiedene überlappende Multiplets, P(C**H**$_2$CH$_3$)$_2$); 2,21 ppm (3 H, s, C**H**$_3$); 2,08 ppm (3 H, s, C**H**$_3$); 1,44 ppm (3 H, m, P(CH$_2$C**H**$_3$)$_2$), 1,07 ppm (3 H, m, P (CH$_2$C**H**$_3$)$_2$). **$^{31}$P-NMR:** 21,4 ppm. **$^{11}$B-NMR**: -14,7 ppm.

**Beispiel 56** (Ethen-Norbornen-Copolymerisation)

In einem im Vakuum ausgeheizten V4A-Stahlautoklaven wurden 54 ml trockenes Sauerstoff-freies Toluol und 47 g (0,5 mol) über Natrium im Argonstrom destilliertes Norbornen vorgelegt und 6,6ml einer 10 %igen MAO-Toluol-Lösung (10mmol) injiziert. Der mit Magnetkern gerührte Autoklav wurde unter 6 bar Ethen auf 70°C erwärmt und nach ca. 15 Minuten die Copolymerisation durch Katalysatorzugabe unter Druck mittels einer Druckschleuse gestartet. Als Katalysator wurden 1 x $10^{-6}$ Mol [(ind)$Me_2PBCl_2$(Cp)$ZrCl_2$] in 0,52 ml Toluol und 1 x $10^{-4}$ Mol MAO in 6,6 ml 10 %iger MAO/Toluol-Lösung, nach 15 minütiger Präformation bei Raumtemperatur, eingesetzt. Nach 5-stündiger Copolymerisation bei 70°C unter 6 bar Ethen wurde auf RT abgekühlt, der Autoklav entspannt und die klare, viskose Polymerlösung langsam in 2 Liter Aceton eingerührt. Das gefällte weiße Polymerisat wurde abfiltriert, mit Aceton gewaschen und über Nacht in 2 Liter Ethanol und 200 ml konzentrierter wäßriger Salzsäure ausgerührt, mittels einer Nutsche abgesaugt und mit Ethanol nachgewaschen. Anschließend wurde bei 120°C bis zur Gewichtskonstanz getrocknet.

Polymerausbeute: 16,5 g
Katalysator-Aktivität: 16,5 Tonnen Copolymer pro Mol Katalysator
Grenzviskosität in ortho-Dichlorbenzol bis 140°C [η] = 0,70 dl/g
Copolymer-Zusammensetzung: 50 Mol % Norbonen, 50 Mol % Ethen aus $^{13}$C-NMR in o-Dichlorbenzol

Die DSC-Messung (2. Aufheizung) belegt ein amorphes Copolymer ohne Schmelzpeaks mit einer Glasübergangstemperatur Tg = 152°C.

**Beispiel 57** (Ethen-Norbornen-Copolymerisation)

Es wurde in Analogie zu Beispiel 56 gearbeitet.
In einem im Vakuum ausgeheizten V4A-Stahlautoklaven wurden 54 ml trockenes Sauerstoff-freies Toluol und 47 g (0,5 mol) über Natrium im Argonstrom destilliertes Norbornen vorgelegt und 6,6 ml einer 10 %igen MAO-Toluol-Lösung (10mmol) injiziert. Der mit Magnetkern gerührte Autoklav wurde unter 6 bar Ethen auf 70°C erwärmt und nach ca. 15 Minuten die Copolymerisation durch Kata!ysatorzugabe unter Druck mittels einer Druckschleuse gestartet. Als Katalysator wurden 1 x $10^{-6}$ Mol rac-[(ind)$Ph_2PBCl_2$(ind)$ZrCl_2$] in 4,7 ml Toluol und 1 x $10^{-4}$ Mol MAO in 6,6 ml 10 %iger MAO/Toluol-Lösung, nach 15 minütiger Präformation bei Raumtemperatur, eingesetzt. Nach 5-stündiger Copolymerisation bei 70°C unter 6 bar Ethen wurde auf RT abgekühlt, der Autoklav entspannt und die klare, viskose Polymerlösung langsam in 2 Liter Aceton eingerührt. Das gefällte weiße Polymerisat wurde abfiltriert, mit Aceton gewaschen und über Nacht in 2 Liter Ethanol und 200 ml konzentrierter wäßriger Salzsäure ausgerührt, mittels einer Nutsche abgesaugt und mit Ethanol nachgewaschen. Anschließend wurde bei 120°C bis zur Gewichtskonstanz getrocknet.

Polymerausbeute: 9,1 g
Katalysator-Aktivität: 9,1 Tonnen Copolymer pro Mol Katalysator
Grenzviskosität in ortho-Dichlorbenzol bis 140°C [η] = 0,36 dl/g
Copolymer-Zusammensetzung: 42 Mol % Norbornen, 58 Mol % Ethen aus $^{13}$C-NMR in o-Dichlorbenzol

Dic DSC-Messung (2. Aufheizung) belegt das Vorliegen eines teilkristallinen Copolymers und einer mit Glasübergangstemperatur Tg = 83°C. Schmelzpeak Tm = 123°C.
Beim Einsatz der isomeren meso-Verbindung des Katalysators entsteht unter sonst gleichen Versuchsbedingungen ein amorphes Norbornen-Ethen-Copolymer mit einer Glasübergangstemperatur $T_g$ = 157°C .

**Patentansprüche**

1. Verfahren zur Herstellung von Cycloolefin-(Co)Polymeren für technische Anwendungen mit Ausnahme der Anwendung für optische Datenspeicher durch (Co)Polymerisation von cyclischen Olefinen, gegebenenfalls in Gegenwart von weiteren Monomeren ausgewählt aus der Gruppe acyclische Mono- oder Diolefine, Alkine und Kohlenmonoxide, wobei das oder die cyclischen Olefine einen molaren Anteil von 1-100% der Gesamtmolzahl aller eingesetzter Co-Monomere darstellt in der Gas-, Masse-, Lösungs- oder Slurryphase bei -78 bis + 200°C und 0,5 bis 70 bar in Gegenwart von metallorganischen Katalysatoren, die durch Cokatalysatoren aktiviert werden können, dadurch gekennzeichnet, daß als metallorganische Katalysatoren Metallocen-Verbindungen der Formel

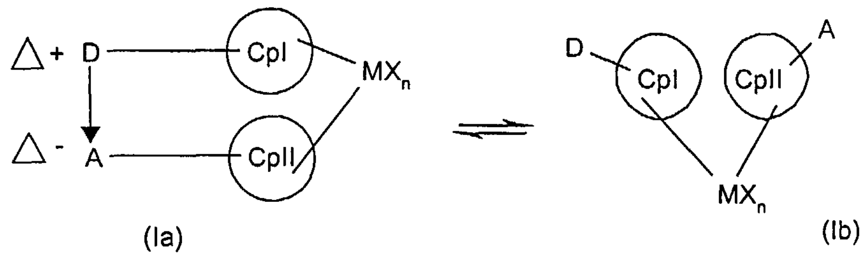

(I),

in der

CpI und CpII zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem $C_1$-$C_{20}$-Alkyl, das 1-fach bis vollständig durch Halogen, 1-3fach durch Phenyl, sowie 1-3fach durch Vinyl substituiert sein kann, $C_6$-$C_{12}$-Aryl, Halogenaryl mit 6 bis 12 C-Atomen, Organometall-Substituenten, Silyl, wie Trimethylsilyl, Ferrocenyl sowie 1- oder 2fach durch D und A substituiert sein können,

D ein Donoratom bedeutet, das zusätzlich Substituenten tragen kann und das in seinem jeweiligen Bindungszustand mindestens über ein freies Elektronenpaar verfügt,

A ein Akzeptoratom bedeutet, das zusätzlich Substituenten tragen kann und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen,

M für ein Übergangsmetall der III., IV., V. oder VI. Nebengruppe des Periodensystems der Elemente (Mendelejew) einschließlich der Lanthaniden und Actiniden steht,

x ein Anionäquivalent bedeutet und

n in Abhängigkeit von der Ladung von M die Zahl Null, Eins, Zwei, Drei oder Vier bedeutet,

oder
π-Komplex-Verbindungen und insbesondere Metallocen-Verbindungen der Formel

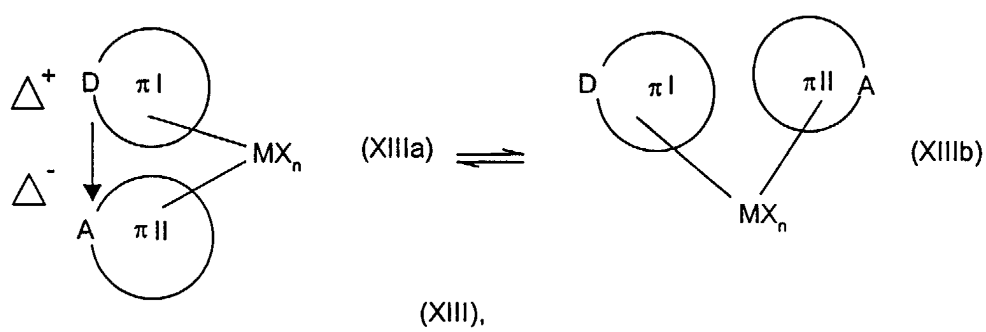

(XIII),

in der

πI und πII voneinander verschiedene geladene oder elektrisch neutrale π-Systeme darstellen, die ein- oder zweifach mit ungesättigten oder gesättigten Fünf- oder Sechsringen kondensiert sein können,

D ein Donoratom bedeutet, das Substituent von πI oder Teil des n-Systems von πI ist und das in seinem jeweiligen Bindungszustand mindestens über ein freies Elektronenpaar verfügt,

A ein Akzeptoratom bedeutet, das Substituent von πII oder Teil des π-Systems von πII ist und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,

wobei D und A ihrerseits Substituenten tragen können,

wobei jedes π-System bzw. jedes ankondensierte Ringsystem eines oder mehrere D oder A oder D und A enthalten kann und

wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem $C_1$-$C_{20}$-Alkyl, das 1-fach bis vollständig durch Halogen, 1- bis 3-fach durch Phenyl sowie 1- bis 3-fach durch Vinyl substituiert sein kann, $C_6$-$C_{12}$-Aryl, Halogenaryl mit 6 bis 12 C-Atomen, Organometall-Substituenten, Silyl, wie Trimethylsilyl, Ferrocenyl sowie ein- oder zweifach durch D und A substituiert sein können, sodaß die reversible koordinative D→A-Bindung (i) zwischen D und A, die beide Teile des jeweiligen π-Systems oder des ankondensierten Ringsystems sind, oder (ii) von denen D oder A Teil des π-Systems und das jeweils andere Substituent des nicht kondensierten π-Systems oder des ankondensierten Ringsystems ist oder (iii) sowohl D als auch A solche Substituenten sind, wobei im Falle von (iii) mindestens ein zusätzliches D oder A oder beide Teile des π-Systems oder des ankondensierten Ringsystems ist (sind), ausgebildet wird,

M und X die obige Bedeutung haben und

n in Abhängigkeit von den Ladungen von M sowie denen von πI und πII die Zahl Null, Eins, Zwei, Drei oder Vier bedeutet,

eingesetzt werden.

**2.** Verfahren nach Anspruch 1, dadurch gekennzeichnet, daß die Metallocen-Verbindungen bzw. die π-Komplex-Verbindungen als Katalysatoren in einer Menge von $10^1$ bis $10^{12}$ mol Monomere pro mol Metallocen bzw. π-Komplex-Verbindung eingesetzt werden.

**3.** Verfahren nach Ansprüchen 1 und 2, dadurch gekennzeichnet, daß in Gegenwart oder Abwesenheit von Lösungsmitteln aus der Gruppe von gesättigten oder aromatischen Kohlenwasserstoffen oder von gesättigten oder aromatischen Halogenkohlenwasserstoffen gearbeitet wird.

**4.** Verfahren nach Ansprüchen 1 bis 3, dadurch gekennzeichnet, daß in den Metallocen-Verbindungen die Carbanionen CpI und CpII bzw. das π-Systems πI ein Cyclopentadienylgerüst aus der Gruppe von Cyclopentadien, substituiertem Cyclopentadien, Inden, substituiertem Inden, Fluoren und substituiertem Fluoren bedeuten, in welchen je Cyclopentadien- bzw. ankondensiertem Benzolring 1 bis 4 Substituenten aus der Gruppe von $C_1$-$C_{20}$-Alkyl, $C_1$-$C_{20}$-Alkoxy, Halogen, $C_6$-$C_{12}$-Aryl, Halogenphenyl, D und A vorliegen, wobei D und A den in Anspruch 1 genannten Bedeutungsumfang haben und wobei ankondensierte aromatische Ringe teilweise oder vollständig hydriert sein können.

**5.** Verfahren nach Ansprüchen 1 bis 4, dadurch gekennzeichnet, daß in den Metallocen-Verbindungen als Donoratome D Elemente aus der Gruppe N, P, As, Sb, Bi, O, S, Se, Te, F, Cl, Br, I, bevorzugt N, P, O, S, vorliegen.

**6.** Verfahren nach Ansprüchen 1 bis 5, dadurch gekennzeichnet, daß in den Metallocen-Verbindungen als Akzeptoratome A Elemente aus der Gruppe B, Al, Ga, In, Tl, bevorzugt B, Al, Ga vorliegen.

**7.** Verfahren nach Ansprüchen 1 bis 6, dadurch gekennzeichnet, daß in den Metallocen-Verbindungen bzw. π-Komplex-Verbindungen Donor-Akzeptor-Brücken aus der Gruppe von
N→B, N→Al, P→B, P→Al, O→B, O→Al, Cl→B, Cl→Al,
C = O→B, C = O→Al vorliegen.

**8.** Verfahren nach Ansprüchen 1 bis 7, dadurch gekennzeichnet, daß in den Metallocen-Verbindungen M für Sc, Y, La, Sm, Nd, Lu, Ti, Zr, Hf, Th, V, Nb, Ta, Cr, bevorzugt für Ti, Zr, Hf, V, Nb oder Ta steht.

**9.** Verfahren nach Ansprüchen 1 bis 8, dadurch gekennzeichnet, daß die Metallocen-Verbindungen bzw. die π-Komplex-Verbindungen gemeinsam mit einem Aluminoxan oder einem Boran oder Borat und gegebenenfalls weiteren Cokatalysatoren und/oder Metallalkylen als Katalysatorsystem eingesetzt werden.

**10.** Verfahren nach Ansprüchen 1 bis 9, dadurch gekennzeichnet, daß Umlagerungsprodukte von Metallocen-Verbindungen bzw. π-Komplex-Verbindungen nach Anspruch 1 unter Selbstaktivierung, bei denen nach Öffnung der D/A-Bindung das Akzeptoratom A einen X-Liganden unter Ausbildung einer zwitterionischen Metallocen-Komplex-Struktur bzw. π-Komplex-Struktur bindet, wobei beim Übergangsmetall M eine positive Ladung und beim Akzeptoratom A eine negative Ladung erzeugt wird und wobei ein weiterer X-Ligand H oder substituiertes oder nicht substituiertes C darstellt, in dessen Bindung zum Übergangsmetall M die Olefin-Insertion zur Polymerisation erfolgt, wobei bevorzugt 2 X-Liganden zu einem Chelat-Liganden verknüpft sind.

**11.** Verfahren nach Ansprüchen 1 bis 10, dadurch gekennzeichnet, daß π-Komplex-Verbindungen nach Anspruch 1, in denen eines der Atome D bzw. A Teil des Ringes des zugehörigen π-Systems ist, bevorzugt daß D Teil des Ringes des zugehörigen π-Systems ist, eingesetzt werden.

**12.** Verfahren nach Ansprüchen 1 bis 11, dadurch gekennzeichnet, daß Reaktionsprodukte der Formeln (XIa) bis (XId) von ionisierenden Agentien mit Metallocen-Verbindungen bzw. π-Komplexen gemäß Formel (I) bzw. (XIII)

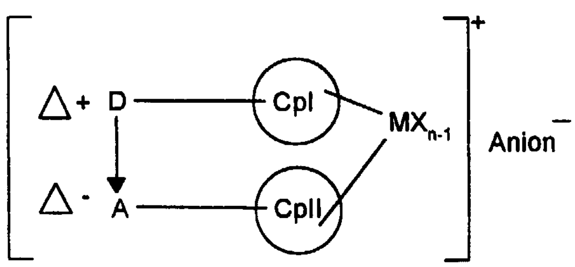

(XIa)

oder

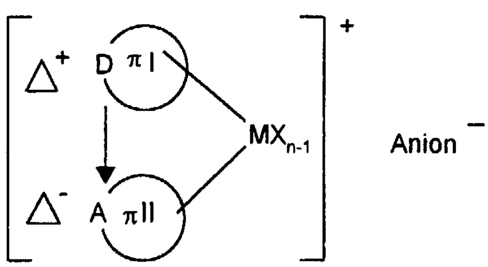

(XIb)

bzw.

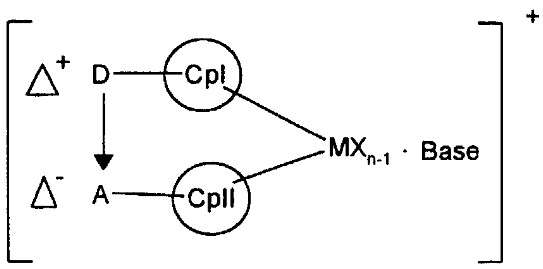

Anion$^-$ (XIc)

oder

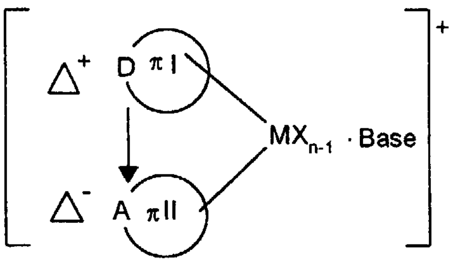

Anion$^-$ (XId),

in denen
Anion für das gesamte sperrige, schlecht koordinierende Anion und Base für eine Lewis-Base stehen, eingesetzt werden.

## Claims

1. A method of producing cycloolefine (co)polymers for industrial applications, with the exception of the use thereof for optical data storage media, by the (co)polymerisation of cyclic olefines, optionally in the presence of other monomers selected from the group comprising acyclic mono- or diolefines, alkynes and carbon monoxides, wherein the cyclic olefine or olefines constitute a molar proportion of 1-100 % of the total number of moles of all the comonomers used, in the gas phase, bulk phase, solution phase or slurry phase at -78 to +200°C and at 0.5 to 70 bar in the presence of organometallic catalysts which can be activated by co-catalysts, characterised in that metallocene compounds of formula

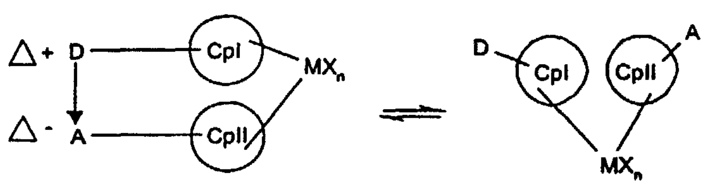

(I),

(Ia) (Ib)

are used as organometallic catalysts,
wherein

| | |
|---|---|
| CpI and CpII | constitute two identical or different carbanions with a cyclopentadienyl-containing structure in which one to all of the H atoms can be substituted by identical or different radicals from the group comprising a linear or branched $C_1$-$C_{20}$ alkyl, which can be singly- to completely substituted by a halogen, can be substituted 1 to 3 times by phenyl, and which can also be substituted 1 to 3 times by vinyl, and comprising a $C_6$-$C_{12}$ aryl, a halogenoaryl containing 6 to 12 C atoms, organometallic substituents, a silyl such as trimethylsilyl, and ferrocenyl, and which can also be singly- or doubly-substituted by D and A, |

D denotes a donor atom which can comprise additional substituents and which in its respective bonding state possesses at least one free electron pair,

A denotes an acceptor atom which can comprise additional substituents and which in its respective bonding state possesses at least one electron pair vacancy,

wherein D and A are linked by a reversible coordinate bond in such a way that the donor group assumes a positive (partial) charge and the acceptor group assumes a negative (partial) charge,

M represents a transition metal of sub-groups III, IV, V or VI of the periodic table of the elements (Mendeleev) including the lanthanides and actinides,

x denotes an anion equivalent, and

n denotes the numbers zero, one, two, three or four depending on the charge of M,

or
π-complex compounds, particularly metallocene compounds of formula

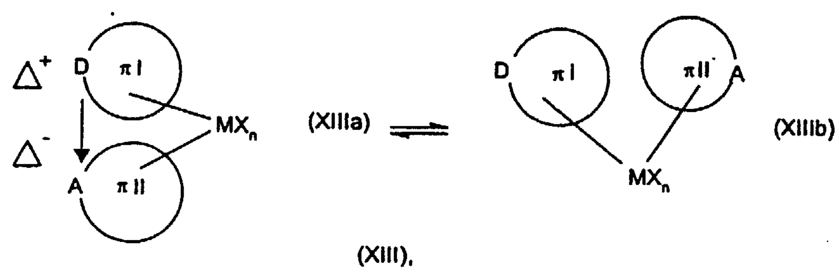

(XIII),

are used as organometallic catalysts,
wherein

πI and πII constitute π systems which are electrically neutral or which possess charges which are different from each other, and which can be singly- or doubly-condensed with unsaturated or saturated five- or six-membered rings,

D denotes a donor atom which is a substituent of πI or is part of the π system of πI and which in its respective bonding state possesses at least one free electron pair,

A denotes an acceptor atom which is a substituent of πII or is part of the π system of πII and which in its respective bonding state possesses an electron pair vacancy,

wherein D and A are linked by a reversible coordinate bond in such a way that the donor group assumes a positive (partial) charge and the acceptor group assumes a negative (partial) charge, and wherein at least one of D and A is part of the associated π system in each case,

wherein D and A themselves may comprise substituents,

wherein each π system or each condensed-on ring system can contain one or more of D or A or D and A, and

wherein in πI and πII, in the non-condensed or condensed form and independently of each other, one to all of the H atoms can be substituted by identical or different radicals from the group comprising a linear or branched $C_1$-$C_{20}$ alkyl, which can be singly- to completely substituted by a halogen, can be substituted 1 to 3 times by phenyl, and which can also be substituted 1 to 3 times by vinyl, and comprising a $C_6$-$C_{12}$ aryl, a halogenoaryl containing 6 to 12 C atoms, organometallic substituents, a silyl such as trimethylsilyl, and ferrocenyl, and can also be singly- or doubly-substituted by D and A, so that the reversible coordinate D→A bond is formed (i) between D and A, which are both parts of the respective π system or of the condensed-on ring system, or (ii) of which D or A is part of the π system and the other substituent in each case is part of the non-condensed π

system or of the condensed-on ring system, or (iii) both D and A are such substituents, wherein in the case of (iii) at least one additional D or A or both is (are) part of the π system or of the condensed-on ring system,

MandX have the meanings given above, and

n denotes the numbers zero, one, two, three or four depending on the charge of M and on the charges of πI and πII.

**2.** A method according to claim 1, characterised in that the metallocene compounds or the π-complex compounds are used as catalysts in an amount of $10^1$ to $10^{12}$ mol monomer per mol metallocene or π-complex compound.

**3.** A method according to claims 1 and 2, characterised in that it is conducted in the presence or absence of solvents from the group comprising saturated or aromatic hydrocarbons or saturated or aromatic halogenated hydrocarbons.

**4.** A method according to claims 1 to 3, characterised in that in the metallocene compounds the carbanions CpI and CpII or the π system πI constitute a cyclopentadienyl skeleton from the group comprising cyclopentadiene, substituted cyclopentadiene, indene, substituted indene, fluorene and substituted fluorene, in which 1 to 4 substituents from the group comprising a $C_1$-$C_{20}$ alkyl, a $C_1$-$C_{20}$ alkoxy, a halogen, a $C_6$-$C_{12}$ alkyl, a halogenophenyl, D and A are present for each cyclopentadiene or condensed-on benzene ring, wherein D and A have the range of meanings given in claim 1 and wherein the condensed-on aromatic rings can be partially or completely hydrogenated.

**5.** A method according to claims 1 to 4, characterised in that elements from the group comprising N, P, As, Sb, Bi, O, S, Se, Te, F, Cl, Br, I, preferably N, P, O or S, are present as donor atoms D in the metallocene compounds.

**6.** A method according to claims 1 to 5, characterised in that that elements from the group comprising B, Al, Ga, In, Tl, preferably B, Al or Ga, are present as acceptor atoms A in the metallocene compounds.

**7.** A method according to claims 1 to 6, characterised in that donor-acceptor bridges from the group comprising N→B, N→Al, P→B, P→Al, O→B, O→Al, Cl→B, Cl→Al, C=O→B and C=O→Al are present in the metallocene compounds or π-complex compounds.

**8.** A method according to claims 1 to 7, characterised in that in the metallocene compounds M represents Sc, Y, La, Sm, Nd, Lu, Ti, Zr, Hf, Th, V, Nb, Ta or Cr, preferably Ti, Zr, Hf, V, Nb or Ta.

**9.** A method according to claims 1 to 8, characterised in that the metallocene compounds or the π-complex compounds are used together with an aluminoxane or with a borane or borate, and optionally with other co-catalysts and/or metal alkyls, as the catalyst system.

**10.** A method according to claims 1 to 9, characterised in that rearrangement products of metallocene compounds or π-complex compounds according to claim 1 are used with self-activation, wherein after the opening of the D/A bond the acceptor atom A binds an X ligand with the formation of a zwitterionic metallocene complex structure or π-complex structure, wherein a positive charge is generated on the transition metal M and a negative charge is generated on the acceptor atom A and wherein a further ligand X constitutes H or a substituted or unsubstituted C, in the bond of which to the transition metal M the olefine is inserted for polymerisation, wherein 2 ligands X are preferably linked to a chelate ligand.

**11.** A method according to claims 1 to 10, characterised in that π-complex compounds according to claim 1 are used in which one of the atoms D or A is part of the ring of the associated π system, wherein D is preferably part of the ring of the associated π system.

**12.** A method according to claims 1 to 11, characterised in that reaction products, of ionising agents with metallocene compounds or π-complexes corresponding to formulae (I) or (XIII), respectively, are used, wherein said reaction products correspond to formulae (XIa) to (XId):

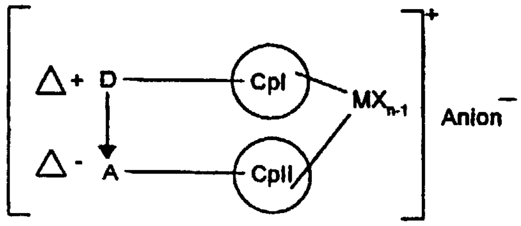

(XIa)

or

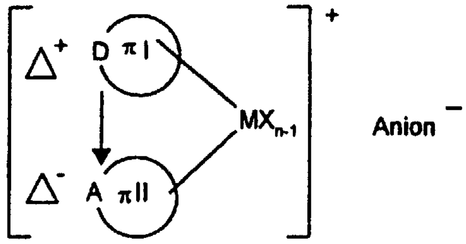

(XIb)

and

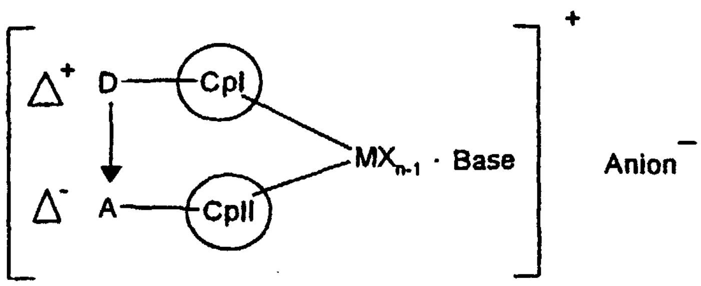

(XIc)

or

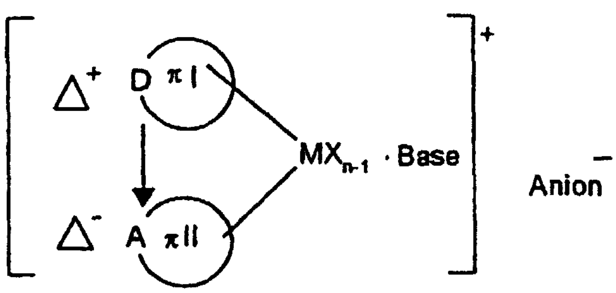

(XId),

respectively,
wherein
Anion represents the entire, poorly coordinating anion and Base represents a Lewis base.

**Revendications**

**1.** Procédé pour la préparation de (co)polymères cyclo-oléfiniques pour des applications techniques à l'exception de l'application pour des mémoires de données optiques, par (co)polymérisation d'oléfines cycliques le cas échéant en présence d'autres monomères choisis parmi le groupe comprenant des mono-oléfines ou des dioléfines acycliques, des alcynes et du monoxyde de carbone, dans lequel la ou les oléfines cycliques représentent une fraction molaire de 1 à 100% de la masse molaire totale de tous les comonomères mis en oeuvre, en phase gazeuse, dans une phase en masse, en solution ou en pâte épaisse, à une température de -78 à +200°C et sous une pression de 0,5 à 70 bar en présence de catalyseurs organométalliques qui peuvent être activés par des cocatalyseurs, caractérisé en ce qu'on met en oeuvre, à titre de catalyseurs organométalliques, des composés de métallocènes répondant aux formules

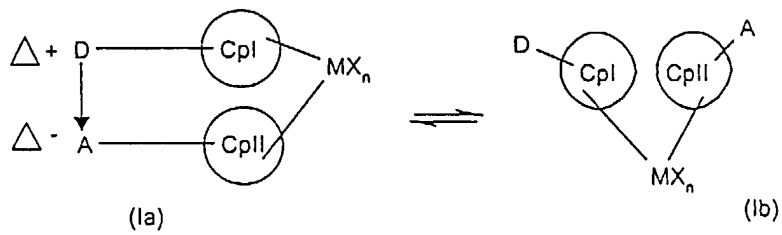

(Ia) (Ib) (I),

dans lesquelles

CpI et CpII représentent deux carbanions identiques ou différents possédant une structure contenant un groupe cyclopentadiényle, dans lesquels de un à tous les atomes d'hydrogène peuvent porter un ou plusieurs substituants identiques ou différents choisis parmi le groupe comprenant un groupe alkyle en $C_1$-$C_{20}$ linéaire ou ramifié qui peut être de mono-halogéno à complètement halogéno substitué, qui peut porter de 1 à 3 substituants phényle et de 1 à 3 substituants vinyle, un groupe aryle en $C_6$-$C_{12}$, un groupe halogénaryle contenant de 6 à 12 atomes de carbone, des substituants organométalliques, un groupe silyle tel qu'un groupe triméthylsilyle, un groupe ferrocényle, et peuvent être substitués une ou deux fois par D et A,

D représente un atome donneur qui peut porter en outre des substituants et qui dispose, dans son état de liaison respectif, d'au moins une paire d'électrons libre,

A représente un atome accepteur qui peut porter en outre des substituants et qui présente, dans son état de liaison respectif, une lacune de paires d'électrons,

dans lequel D et A sont liés via une liaison coordonnée réversible de telle sorte que le groupe donneur prend une charge (partielle) positive et le groupe accepteur prend une charge (partielle) négative,

M représente un métal de transition du sous-groupe III, IV, V ou VI du système périodique des éléments (Mendelejew), y compris les lanthanides et les actinides,

x représente un équivalent anionique et

n représente, en fonction de la charge de M, les nombres zéro, un, deux, trois ou quatre,

ou bien
des composés complexes $\pi$, en particulier des composés de métallocènes répondant aux formules

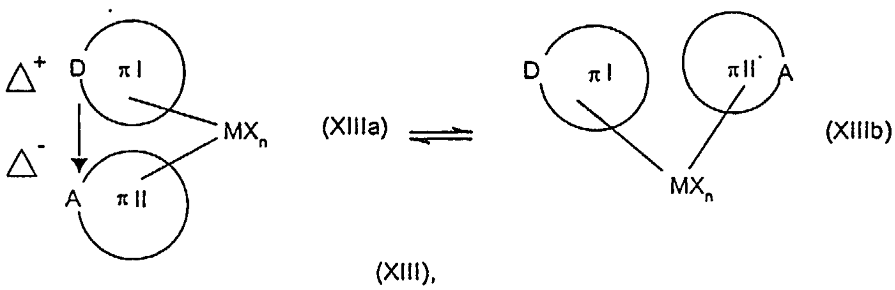

(XIIIa) (XIIIb)

(XIII),

dans lesquelles

$\pi$I et $\pi$II représentent des systèmes $\pi$ différemment chargés l'un par rapport à l'autre ou neutres du point de vue électrique qui peuvent être condensés une ou deux fois avec des noyaux pentagonaux ou hexagonaux non saturés ou saturés,

D représente un atome donneur qui joue le rôle de substituant de $\pi$I ou qui fait partie du système $\pi$ de $\pi$I et qui dispose, dans son état de liaison respectif, d'au moins une paire d'électrons libre,

A représente un atome accepteur qui joue le rôle de substituant de $\pi$II ou qui fait partie du système $\pi$ de $\pi$II et qui présente, dans son état de liaison respectif, une lacune de paire d'électrons,

dans lequel D et A sont reliés via une liaison coordonnée réversible de telle sorte que le groupe donneur prend une charge (partielle) positive et le groupe accepteur prend une charge (partielle) négative, et dans lequel au moins un des atomes D et A fait partie du système $\pi$ respectivement correspondant,

dans lequel D et A peuvent porter, quant à eux, des substituants,

dans lequel chaque système $\pi$, respectivement chaque système à noyau condensé peut contenir un ou plusieurs atomes D ou A ou bien un ou plusieurs atomes D et un ou plusieurs atomes A, et

dans lequel, dans $\pi$I et dans $\pi$II, dans la forme non condensée ou dans la forme condensée, indépendamment l'un de l'autre, de un à tous les atomes d'hydrogène du système $\pi$ peuvent porter un ou plusieurs substituants identiques ou différents choisis parmi le groupe comprenant un groupe alkyle en $C_1$-$C_{20}$ linéaire ou ramifié qui peut être de mono-halogéno à complètement halogéno substitué, qui peut porter de 1 à 3 substituants phényle et de 1 à 3 substituants vinyle, un groupe aryle en $C_6$-$C_{12}$, un groupe halogénaryle contenant de 6 à 12 atomes de carbone, des substituants organométalliques, un groupe silyle tel qu'un groupe triméthylsilyle, un groupe ferrocényle, et peuvent être substitués une ou deux fois par D et A, si bien que l'on obtient la liaison coordonnée réversible D -> A (i) entre D et A qui, tous deux, font partie du système $\pi$ respectif ou du système à noyau condensé, ou (ii) dont D ou A fait partie du système $\pi$ et l'autre atome respectif est un substituant du système $\pi$ non condensé ou du système à noyau condensé, ou bien (iii) aussi bien D que A représentent des substituants de ce type, dans lequel, dans le cas de (iii), au moins un atome D ou A supplémentaire ou les deux font partie du système $\pi$ ou du système à noyau condensé,

M et X ont la signification indiquée ci-dessus, et

n en fonction des charges de M, ainsi que de celles de $\pi$I et de $\pi$II, représente le nombre zéro, un, deux, trois ou quatre.

**2.** Procédé selon la revendication 1, caractérisé en ce qu'on met en oeuvre les composés de métallocènes, respectivement les composés complexes $\pi$ à titre de catalyseurs en une quantité de $10^1$ à $10^{12}$ moles de monomères par mole de composé de métallocène, respectivement de composé complexe $\pi$.

**3.** Procédé selon les revendications 1 et 2, caractérisé en ce qu'on travaille en présence ou en l'absence de solvants choisis parmi le groupe comprenant des hydrocarbures saturés et aromatiques ou comprenant des hydrocarbures halogénés saturés ou aromatiques.

**4.** Procédé selon les revendications 1 à 3, caractérisé en ce que, dans les composés de métallocènes, les carbanions CpI et CpII respectivement dans le système π, πI, représentent un squelette de cyclopentadiényle choisi parmi le groupe comprenant un groupe cyclopentadiène, un groupe cyclopentadiène substitué, un groupe indène, un groupe indène substitué, un groupe fluorène et un groupe fluorène substitué, dans lesquels, pour chaque cycle cyclopentadiénique, respectivement benzénique condensé, sont présents de 1 à 4 substituants choisis parmi le groupe comprenant un groupe alkyle en $C_1$-$C_{20}$, un groupe alcoxy en $C_1$-$C_{20}$, un atome d'halogène, un groupe aryle en $C_6$-$C_{12}$, un groupe halogénophényle, D et A, dans lequel D et A possèdent la portée de signification mentionnée à la revendication 1, et dans lequel des noyaux aromatiques condensés peuvent être partiellement ou complètement hydrogénés.

**5.** Procédé selon les revendications 1 à 4, caractérisé en ce que, dans les composés de métallocènes, sont présents, à titre d'atomes donneurs D, des éléments choisis parmi le groupe comprenant N, P, As, Sb, Bi, O, S, Se, Te, F, Cl, Br, I, de préférence N, P, O, S.

**6.** Procédé selon les revendications 1 à 5, caractérisé en ce que, dans les composés de métallocènes, sont présents, à titre d'atomes accepteurs A, des éléments choisis parmi le groupe comprenant B, Al, Ga, In, Tl, de préférence B, Al, Ga.

**7.** Procédé selon les revendications 1 à 6, caractérisé en ce que, dans les composés de métallocènes, respectivement dans les composés complexes π, sont présents des ponts donneurs-accepteurs choisis parmi le groupe comprenant
N→B, N→Al, P→B, P→Al, O→B, O→Al, Cl→B, Cl→Al, C=O→B, C=O→Al.

**8.** Procédé selon les revendications 1 à 7, caractérisé en ce que, dans les composés de métallocènes, M représente Sc, Y, La, Sm, Nd, Lu, Ti, Zr, Hf, Th, V, Nb, Ta, Cr, de préférence Ti, Zr, Hf, V, Nb ou Ta.

**9.** Procédé selon les revendications 1 à 8, caractérisé en ce que les composés de métallocènes, respectivement les composés complexes π sont mis en oeuvre de manière conjointe avec un aluminoxane, avec un borane ou avec un borate, le cas échéant avec des cocatalyseurs supplémentaires et/ou des composés alkylmétalliques à titre de système de catalyseurs.

**10.** Procédé selon les revendications 1 à 9, caractérisé en ce qu'on met en oeuvre des produits de transposition de composés de métallocènes, respectivement de composés complexes π selon la revendication 1 avec autoactivation, dans lesquels, après ouverture de la liaison D/A, l'atome accepteur A se lie à un ligand X en formant une structure zwitterionique de complexe de métallocène, respectivement une structure zwitterionique de complexe π, dans lequel on obtient, dans le cas du métal de transition M, une charge positive et, dans le cas de l'atome accepteur A, une charge négative, et dans lequel un ligand X supplémentaire représente un atome d'hydrogène ou un atome de carbone substitué ou non substitué dans la liaison duquel avec le métal de transition M, a lieu l'insertion oléfinique à des fins de polymérisation; de préférence deux ligands X étant reliés pour former un ligand chélaté.

**11.** Procédé selon les revendications 1 à 10, caractérisé en ce qu'on met en oeuvre des composés complexes π selon la revendication 1, dans lequel un des atomes D, respectivement A fait partie du noyau du système π correspondant, de préférence en ce que D fait partie du noyau du système π correspondant.

**12.** Procédé selon les revendications 1 à 11, caractérisé en ce qu'on met en oeuvre des produits réactionnels répondant aux formules (XIa) à (XId) d'agents ionisants avec des composés de métallocènes, respectivement avec des complexes π répondant à la formule (I), respectivement (XIII)

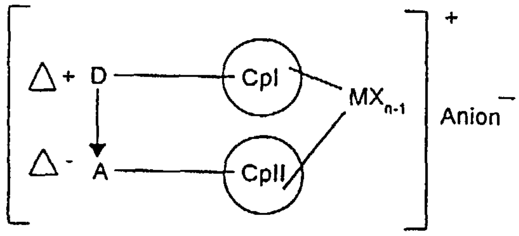

(XIa)

ou

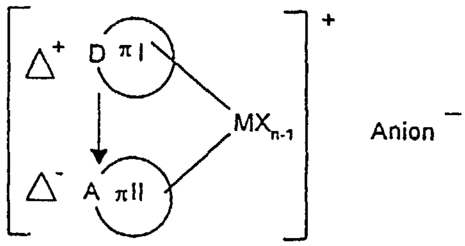

(XIb),

respectivement

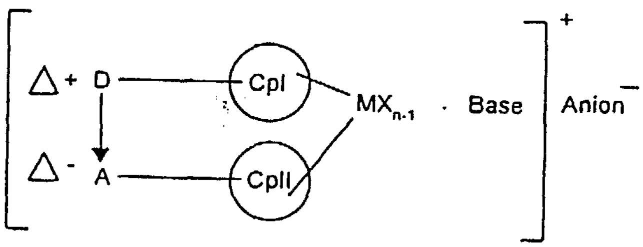

(XIc)

ou

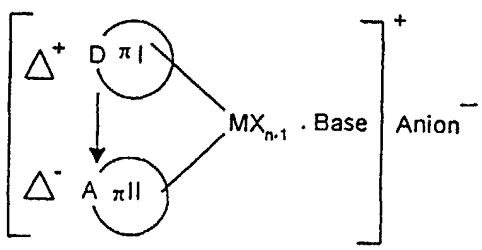

(XId),

dans lesquelles

"Anion" représente l'anion totalement encombré qui manifeste une mauvaise aptitude à la coordination et "Base" représente une base de Lewis.